# EUROPÄISCHE PATENTANMELDUNG

(11) **EP 3 561 581 A1**
(43) Veröffentlichungstag der Anmeldung: **30.10.2019**
(21) Anmeldenummer: 18168994.4
(22) Anmeldetag: 24.04.2018
(51) Int. Cl.: G02C 7/10, G02B 1/14, B29D 11/00

(54) **BRILLENGLAS MIT PHOTOCHROMER BESCHICHTUNG UND VERFAHREN ZUR HERSTELLUNG DESSELBEN**

(71) Anmelder: Carl Zeiss Vision International GmbH, 73430 Aalen (DE)
(72) Erfinder: Hugenberg, Norbert, 73434 Aalen (DE); Faul, Silvia, 73434 Aalen (DE); Peng, Bin, 73434 Aalen (DE); Diggins, David, Flagstaff Hill, 5159 (AU); Krieger, Michael, 73434 Aalen (DE); Haidl, Markus, 73431 Aalen (DE)
(74) Vertreter: Carl Zeiss AG - Patentabteilung

(57) **Zusammenfassung**

Die vorliegende Erfindung betrifft ein Brillenglas umfassend wenigstens ein Substrat und wenigstens eine photochrome Schicht, wobei das Brillenglas bei wenigstens einer Beschädigung der wenigstens eine photochrome Schicht umfassenden Oberfläche des Brillenglases mit einer Kraft von ≤ 65 mN nach Kontamination der wenigstens eine photochrome Schicht umfassenden Oberfläche des Brillenglases mit wenigstens einer organischen Säure über einen Zeitraum aus einem Bereich von 12 Stunden bis 84 Stunden keine Quellung der Beschichtung und/oder des Substrats aufweist. Die Erfindung betrifft des Weiteren ein Verfahren zur Herstellung dieses Brillenglases sowie die Verwendung wenigstens einer chemisch modifizierten Schicht und/oder wenigstens einer Barriereschicht zur Beschichtung eines Brillenglassubstrats.

## Beschreibung

Die vorliegende Erfindung betrifft ein Brillenglas umfassend wenigstens ein Substrat und wenigstens eine photochrome Schicht, ein Verfahren zur Herstellung eines solchen Brillenglases sowie die Verwendung wenigstens einer chemisch modifizierten Schicht und/oder wenigstens einer Barriereschicht in der Beschichtung eines Brillenglases.

EP 1 461 644 A1 offenbart eine ophthalmische Linse basierend auf einem polymeren Substrat, welches mit einer photochromen Schicht sowie einer strahlungsgehärteten Schicht auf Acrylatbasis belegt ist. Die strahlungsgehärtete Schicht auf Acrylatbasis soll laugenbeständig, härter und kratzfester als die photochrome Schicht und außerdem kompatibel mit einer gegebenenfalls darauf aufgebrachten abriebbeständigen Schicht auf Organosilanbasis sein. Die Schicht auf Acrylatbasis umfasst beispielsweise 10 Gew.-% bis 85 Gew.-% wenigstens eines Epoxidmonomers und 90 Gew.-% bis 15 Gew.-% wenigstens eines Acrylatmonomers. Neben der abriebbeständigen Schicht auf Organosilanbasis kann die Beschichtung der ophthalmischen Linse weiterhin eine Entspiegelungsschicht, eine antistatische Schicht oder eine wasserabweisende Schicht umfassen.

EP 2 006 031 A2 offenbart ein Verfahren zur Herstellung eines Laminats aus einem Substrat, beispielsweise einem Brillenglas, und einem feuchtigkeitshärtenden Polyurethanharz als Primer mittels Schleuderbeschichtung. Zur Herstellung des Polyurethanharzes werden Polyurethanoligomere oder Polyurethanpolymere mit einem mittleren Molekulargewicht Mn von 300 bis 5000, in welchen der Durchschnittsgehalt an endständigen Isocyanatgruppen bei 0,001 bis 50 Mol-% liegt, eingesetzt.

EP 1 561 571 A1 offenbart eine photopolymerisierbare und härtbare Zusammensetzung für die Herstellung einer photochromen Beschichtung auf einem Substrat. Die Zusammensetzung umfasst ein radikalisch polymerisierbares Polymer, 0,2 bis 20 Gew.-% einer photochromen Komponente und einen Phosphor enthaltenden Initiator für die Photopolymerisation. Die Beschichtung weist eine Dicke von 1 µm bis 100 µm auf der gekrümmten Oberfläche des Substrats auf. Der Unterschied zwischen der maximalen, der minimalen und der mittleren Dicke der Beschichtung ist außer im peripheren Randbereich nicht größer als 7%. Die sphärische Korrektionswirkung des Substrats vor und nach dessen Beschichtung weicht weniger als ± 0,5 Dioptrien voneinander ab.

Aufgabe der vorliegenden Erfindung war es, ein Brillenglas mit photochromen Eigenschaften zur Verfügung zu stellen, wobei die optischen Eigenschaften des Brillenglases nicht durch Beschädigungen des Brillenglases im Alltagsgebrauch der Brille mit einhergehender Kontamination des Brillenglases beeinträchtigt werden sollen. Des Weiteren war es Aufgabe der vorliegenden Erfindung ein Verfahren zur Herstellung eines derartigen Brillenglases bereit zu stellen.

Die Aufgabe wurde gelöst durch Bereitstellung eines Brillenglases umfassend wenigstens ein Substrat und wenigstens eine photochrome Beschichtung gemäß Anspruch 1 sowie ein Verfahren zur Herstellung dieses Brillenglases gemäß Anspruch 14. Bevorzugte Weiterbildungen des Brillenglases sind in den abhängigen Ansprüchen angegeben.

Das mit wenigstens einer photochromen Schicht zu beschichtende Substrat kann wenigstens ein polymeres Material und/oder wenigstens ein mineralisches Glas umfassen, wobei das polymere Material oder das mineralische Glas jeweils als Brillenglas-Halbfertigprodukt, d.h. als Linsenrohling mit nur einer optisch fertig bearbeiteten Fläche gemäß DIN EN ISO 13666:2013-10, Absatz 8.4.2, oder als fertiges Brillenglas, d.h. als Brillenglas mit zwei fertig bearbeiteten optischen Flächen vor oder nach der Randbearbeitung gemäß DIN EN ISO 13666:2013-10, Absatz 8.4.6, vorliegen kann. Die Brillenglas-Halbfertigprodukte können als Einstärken-Brillenglas-Halbfertigprodukte, Mehrstärken-Brillenglas-Halbfertigprodukte oder Gleitsicht-Brillenglas-Halbfertigprodukte gemäß DIN EN ISO 13666:2013-10, Absätze 8.4.3, 8.4.4 und 8.4.5, vorliegen. Bei den fertigen Brillengläsern kann es sich um Einstärken-Brillengläser, Mehrstärken-Brillengläser, Zweistärken-Brillengläser, Dreistärken-Brillengläser, Gleitsicht-Brillengläser oder degressive Brillengläser gemäß DIN EN ISO 13666:2013-10, Absätze 8.3.1, 8.3.2. 8.3.3, 8.3.4, 8.3.5 und 8.3.6 handeln. Die als Substrat einsetzbaren Brillenglas-Halbfertigprodukte bzw. fertigen Brillengläser können beispielsweise auf den in nachstehender Tabelle 1 genannten Grundmaterialien basieren.

**Tabelle 1: Beispiele für Grundmaterialien für Brillenglas-Halbfertigprodukte bzw. fertige Brillengläser**

| Handelsname | Grundmaterial | Mittlerer Brechungsindex n* | Abbe-Zahl v* |
|---|---|---|---|
| CR 39, CR 330, CR 607, CR 630, RAV 700, 7NG, 7AT, 710, 713, 720 | Polyallyldiglycolcarbonat ((P)ADC) | 1,500 | 56 |
| RA Volution | Polyharnstoff / Polyurethan | 1,500 | 54 |
| Trivex | Polyharnstoff/ Polyurethan | 1,530 | 45 |
| Panlite, Lexan | Polycarbonat (PC) | 1,590 | 29 |
| MR 6 | Polythiourethan | 1,598 | |
| MR 8 | Polythiourethan | 1,598 | 41 |
| MR 7 | Polythiourethan | 1,664 | 32 |
| MR 10 | Polythiourethan | 1,666 | 32 |
| MR 174 | Polyepisulfid | 1,738 | 32 |
| MGC 1.76 | Polyepisulfid | 1,76 | 30 |
| | Mineral 1.5 | 1,525 | 58 |
| | Mineral 1.6 | 1,604 | 44 |
| | Mineral 1.7 | 1,701 | 39,2 |
| | Mineral 1.8 | 1,802 | 34,4 |
| | Mineral 1.9 | 1,885 | 30 |

| | | | |
|---|---|---|---|
| Bezogen auf Natrium D-Linie | | | |

Die der optisch fertig bearbeiteten Fläche gegenüberliegende Fläche des Brillenglas-Halbfertigprodukts kann vor oder nach der Beschichtung der optisch fertig bearbeiteten Fläche des Brillenglas-Halbfertigprodukts bevorzugt durch mechanische Bearbeitung, wie beispielsweise Fräsen und/oder Schleifen und/oder Drehen und/oder Polieren, in die zweite optisch fertig bearbeitete Fläche überführt werden. Bevorzugt erfolgt diese mechanische Bearbeitung vor der Beschichtung Brillenglas-Halbfertigprodukts.

Bei dem zu beschichtenden Substrat handelt es sich bevorzugt um ein fertiges Brillenglas.

Das zu beschichtende Substrat kann keine optische Korrektionswirkung aufweisen. Alternativ kann das zu beschichtende Substrat mit einer optischen Korrektionswirkung und/oder einer Bildfehlerkorrektion für das blickende Auge ausgestattet sein. Unter optischer Korrektionswirkung wird die sphärische Korrektion, die astigmatische Korrektion und die Korrektion der Achslage sowie optional die Korrektion durch ein Prisma mit Basislage verstanden. Diese optische Korrektionswirkung ist herkömmlicherweise für die Ferne in Einstärken-Brillengläsern verwirklicht. Bei Mehrstärken-Brillengläsern, Zweistärken-Brillengläsern, Dreistärken-Brillengläsern, Gleitsicht-Brillengläsern oder degressiven Brillengläsern kann die optische Korrektionswirkung für die Ferne und/oder für die Nähe jeweils eine sphärische Korrektion, eine astigmatische Korrektion, eine Korrektion der Achslage sowie optional eine Korrektion durch ein Prisma mit Basislage beinhalten. Die Bildfehlerkorrektion für das blickende Auge wird, unabhängig davon, ob es sich um eine Bildfehlerkorrektion für die Ferne oder für die Nähe handelt, bevorzugt analog zu Werner Köppen "Konzeption und Entwicklung von Gleitsichtgläsern", Deutsche Optiker Zeitschrift DOZ, Oktober 1995, Seite 42 - 45, berechnet.

Die Herstellung des zu beschichtenden Substrats kann entweder mittels Urformen und anschließender mechanischer Bearbeitung, wie beispielsweise Fräsen und/oder Schleifen und/oder Drehen und/oder Polieren oder, bei auf wenigstens einem polymerem Material basierenden Substraten, mittels eines additiven Herstellungsverfahrens erfolgen. Bei der Herstellung des zu beschichtenden, auf wenigstens einem polymeren Material basierenden Substrats mittels eines additiven Herstellungsverfahrens kann das Substrat einen einheitlichen Brechungsindex oder eine ortsabhängige Brechungsindexverteilung aufweisen. Die ortsabhängige Brechungsindexverteilung wird bevorzugt vorab mittels optischer Rechenprogramme, wie beispielsweise ZEMAX (Firma Zemax LLC), berechnet und optimiert. Für die Berechnung müssen bevorzugt die Position des zu beschichtenden Substrats vor dem dafür vorgesehenen Auge, die Pupillendistanz, die Vorneigung des zu beschichtenden Substrats, der Fassungsscheibenwinkel des zu beschichtenden Substrats sowie die Substratgröße bekannt sein. Darüber hinaus wird, insbesondere bei der Berechnung von Mehrstärken-Brillengläsern, Zweistärken-Brillengläsern, Dreistärken-Brillengläsern, Gleitsicht-Brillengläsern und degressiven Brillengläsern ein Objektabstandsmodell zugrunde gelegt, welches die Position von Objektpunkten im Blickfeld des Brillenträgers relativ zu dessen Augendrehpunkten beschreibt. Ein Gleitsicht-Brillenglas, welches eine ortsabhängige Brechungsindexverteilung aufweist, ist beispielsweise in EP17152384.8 offenbart.

Umfasst das zu beschichtende Substrat sowohl wenigstens ein polymeres Material als auch wenigstens ein mineralisches Glas, ist das mineralische Glas bevorzugt als Dünnstglas und das polymere Material bevorzugt als Brillenglas-Halbfertigprodukt oder als fertiges Brillenglas oder als wenigstens eine Kunststofffolie ausgebildet. Dünnstgläser werden nachstehend in Abschnitt "II.2. Beschichtung umfassend wenigstens eine photochrome Schicht, wenigstens eine chemisch modifizierte Primer-Lackschicht und wenigstens eine Barriereschicht umfassend wenigstens ein Dünnstglas auf derselben Oberfläche des Substrats", nachstehend "II.2. Barriereschicht umfassend wenigstens ein Dünnstglas" genannt, näher beschrieben.
Umfasst bei dieser Ausführungsform das zu beschichtende Substrat wenigstens ein Dünnstglas und wenigstens eine Kunststofffolie als polymeres Material, ist die wenigstens eine Kunststofffolie bevorzugt zwischen wenigstens zwei Dünnstgläsern angebracht. Die wenigstens eine Kunststofffolie basiert bevorzugt auf Polyethylen, Polypropylen, Polyethylenterephthalat, Polycarbonat, Polymethylmethacrylat, Polyvinylchlorid, Polyvinylacetat, Polyvinylbutyrat und/oder Mischungen hiervon. Die wenigstens eine Kunststofffolie kann beispielsweise mit Cellulosetriacetat stabilisiert werden. Die wenigstens eine Kunststofffolie kann eingefärbt oder nicht eingefärbt sein. Soll das zu beschichtende, wenigstens eine Kunststofffolie und wenigstens ein Dünnstglas umfassende Substrat eingefärbt sein, ist bevorzugt die wenigstens eine Kunststofffolie eingefärbt. Die wenigstens eine Kunststofffolie weist bevorzugt eine mittlere Dicke aus einem Bereich von 9 µm bis 205 µm, besonders bevorzugt aus einem Bereich von 14 µm bis 103 µm auf.
Umfasst bei dieser Ausführungsform das zu beschichtende Substrat wenigstens ein Dünnstglas und wenigstens ein fertiges Brillenglas als polymeres Material, kann sich wenigstens ein Dünnstglas auf der Vorderfläche und/oder auf der Rückfläche des fertigen Brillenglases befinden. Bevorzugt befindet sich wenigstens ein Dünnstglas sowohl auf der Vorderfläche als auch auf der Rückfläche des fertigen Brillenglases.
Umfasst bei dieser Ausführungsform das zu beschichtende Substrat wenigstens ein Dünnstglas und wenigstens ein Brillenglas-Halbfertigprodukt als polymeres Material wird bevorzugt zunächst die optisch nicht fertig bearbeitete Fläche bearbeitet und dann die Vorderfläche und/oder die Rückfläche des so erhaltenen fertigen Brillenglases mit wenigstens einem Dünnstglas verbunden. Alternativ wird bei der Verwendung eines Brillenglas-Halbfertigprodukts als polymeres Material das wenigstens eine Dünnstglas mit der bereits fertig bearbeiteten optischen Fläche verbunden, die optisch nicht fertig bearbeitete Fläche bearbeitet und diese bearbeitete Fläche optional anschließend mit wenigstens einem weiteren Dünnstglas verbunden. Die Verbindung mit wenigstens einem weiteren Dünnstglas ist hierbei bevorzugt. Bevorzugt handelt es sich bei der fertig bearbeiteten optischen Fläche des Brillenglas-Halbfertigprodukts um dessen Vorderfläche und bei der optisch nicht fertig bearbeiteten Fläche um dessen Rückfläche. Alternativ zu der Überführung der optisch nicht fertig bearbeiteten Fläche in eine zweite optisch fertig bearbeitete Fläche und deren Verbindung mit wenigstens einem Dünnstglas kann diese zweite Fläche nach Überführung in eine zweite optisch fertig bearbeitete Fläche mit wenigstens einer Beschichtung versehen werden. Diese Beschichtung wird bevorzugt aus der Gruppe bestehend aus wenigstens einer Hartlackschicht, wenigstens einer Entspiegelungsschicht, wenigstens einer Antibeschlagsschicht, wenigstens einer elektrisch leitfähigen oder elektrisch halbleitenden Schicht und wenigstens einer Clean-Coat-Schicht ausgewählt. Besonders bevorzugt sind wenigstens eine Hartlackschicht, wenigstens eine Entspiegelungsschicht und wenigstens eine Clean-Coat-Schicht als Beschichtung, wobei die wenigstens eine Hartlackschicht die dem Substrat am nächsten liegende Schicht und die wenigstens eine Clean-Coat-Schicht die am weitesten vom Substrat entfernt liegende Schicht ist.
Das wenigstens eine, mit der Vorderfläche des fertigen Brillenglases verbundene Dünnstglas kann identisch oder verschieden, beispielsweise in Bezug auf die Glaskomposition, die mittlere Dicke und/oder die Form, zu dem wenigstens einen, mit der Rückfläche des fertigen Brillenglases verbundenen Dünnstglas sein. Gleiches gilt auch bei der Verwendung wenigstens eines Brillenglas-Halbfertigprodukts oder wenigstens einer Kunststofffolie als polymeres Material. Bei Verwendung eines Brillenglas-Halbfertigprodukts wird hierbei die optisch nicht fertig bearbeitete Fläche vor der Verbindung mit wenigstens einem Dünnstglas in eine optisch fertig bearbeitete Fläche überführt.
Die Verbindung des wenigstens einen Dünnstglases mit der optisch fertig bearbeiteten Fläche, bevorzugt der Vorderfläche, des Brillenglas-Halbfertigprodukts bzw. mit einer der fertig bearbeiteten optischen Flächen, bevorzugt der Vorderfläche, des fertigen Brillenglases erfolgt bevorzugt stoffschlüssig und formschlüssig. Bevorzugt wird die Rückfläche des wenigstens einen Dünnstglases mit der optisch fertig bearbeiteten Vorderfläche des Brillenglas-Halbfertigprodukts bzw. des fertigen Brillenglases verbunden. Die Rückfläche des wenigstens einen Dünnstglases und/oder die optisch fertig bearbeitete Vorderfläche des Brillenglas-Halbfertigprodukts bzw. des fertigen Brillenglases kann mit wenigstens einer Beschichtung versehen sein. Diese wenigstens eine Beschichtung kann wenigstens eine farbgebende Schicht, wenigstens eine photochrome Schicht und/oder wenigstens eine polarisierende Schicht umfassen. Die wenigstens eine farbgebende Schicht umfasst bevorzugt eine färbbare Schicht gemäß US 4,355,135 A, insbesondere gemäß Anspruch 1 der US 4,355,135 A, gemäß US 4,294,950 A, insbesondere gemäß einem der Ansprüche 1 oder 6 der US 4,294,950 A, oder gemäß US 4,211,823 A, insbesondere gemäß einem der Ansprüche 1 oder 2 der US 4,211,823 A. Besonders bevorzugt umfasst die farbgebende Schicht eine färbbare Schicht gemäß US 4,355,135 A, insbesondere bevorzugt gemäß Anspruch 1 der US 4,355,135 A. Die wenigstens eine photochrome Schicht umfasst bevorzugt eine Schicht gemäß US 2006/0269741 A1, insbesondere gemäß US 2006/0269741 A1, Anspruch 6, oder eine Schicht gemäß US 2004/0220292 A1, insbesondere gemäß US 2004/0220292 A1, Anspruch 1. Die wenigstens eine photochrome Schicht weist bevorzugt eine mittlere Dicke aus einem Bereich von 5 µm bis 200 µm, weiter bevorzugt aus einem Bereich von 9 µm bis 166 µm, besonders bevorzugt aus einem Bereich von 17 µm bis 121 µm und ganz besonders bevorzugt aus einem Bereich von 21 µm bis 81 µm auf. Die wenigstens eine polarisierende Schicht umfasst bevorzugt entweder eine Polarisationsfolie oder eine Schicht mit polarisierenden Eigenschaften. Als Polarisationsfolie kann eine Folie aus beispielsweise Polyvinylalkohol oder Polyethylenterephthalat eingesetzt werden, welche dichroitische Farbmittel umfasst. Die Polarisationsfolie kann einen einschichtigen oder mehrschichtigen Folienaufbau aufweisen. Die Polarisationsfolie kann passgenau zur Rückfläche des wenigstens einen Dünnstglases vorgeformt vorliegen. Bevorzugt wird die Polarisationsfolie unter Anlegen von Vakuum unter Zuhilfenahme einer Metallform vorgeformt. Eine Schicht mit polarisierenden Eigenschaften ist beispielsweise in EP 1 965 235 A1, EP 0 217 502 A1, EP 1 674 898 A1, US 2006/0066947 A1, WO 2005/050265 A1, WO 2009/029198 A1, WO 2009/156784 A1 oder WO 2015/160612 A1 offenbart. In vorstehend genannten Anmeldungen ist die Schicht mit polarisierenden Eigenschaften jeweils Bestandteil einer dort beschriebenen Schichtenfolge. Im Rahmen dieser Erfindung wird vorzugsweise nur die in den genannten Anmeldungen beschriebene Schicht mit polarisierenden Eigenschaften als polarisierende Schicht eingesetzt.
Bevorzugt ist zwischen der Rückfläche des wenigstens einen Dünnstglases und der optisch fertig bearbeiteten Vorderfläche des Brillenglas-Halbfertigprodukts bzw. des fertigen Brillenglases nur eine einzige Schicht, ausgewählt aus wenigstens einer farbgebenden Schicht, wenigstens einer photochromen Schicht und wenigstens einer polarisierenden Schicht, vorhanden. Sind mehrere Schichten zwischen der Rückfläche des wenigstens einen Dünnstglases und der optisch fertig bearbeiteten Vorderfläche des Brillenglas-Halbfertigprodukts bzw. des fertigen Brillenglases vorhanden, liegen diese in nachstehenden bevorzugten Reihenfolgen von augenseitig nach objektseitig vor:
Dünnstglas / photochrome Schicht / polarisierende Schicht / farbgebende Schicht / Brillenglas-Halbfertigprodukt bzw. fertiges Brillenglas oder
Dünnstglas / photochrome Schicht / farbgebende Schicht / polarisierende Schicht / Brillenglas-Halbfertigprodukt bzw. fertiges Brillenglas oder
Dünnstglas / polarisierende Schicht / farbgebende Schicht / Brillenglas-Halbfertigprodukt bzw. fertiges Brillenglas.
Wird wenigstens eine Kunststofffolie als polymeres Material verwendet, ist die vorstehend beschriebene wenigstens eine farbgebende Schicht, wenigstens eine photochrome Schicht und/oder wenigstens eine polarisierende Schicht bevorzugt auf der Rückfläche des Dünnstglases aufgebracht. Umfasst die Rückfläche des Dünnstglases mehrere dieser Schichten, ist deren Reihenfolge zwischen Dünnstglas und der wenigstens einen Kunststofffolie entsprechend der vorstehend beschriebenen Reihenfolge zwischen Dünnstglas und Brillenglas-Halbfertigprodukt bzw. fertigem Brillenglas.

Besonders bevorzugt ist zwischen der Rückfläche des wenigstens einen Dünnstglases und der optisch fertig bearbeiteten Vorderfläche des Brillenglas-Halbfertigprodukts bzw. des fertigen Brillenglases keine Schicht vorhanden.
Die optionale, bevorzugte Verbindung der zweiten fertig bearbeiteten optischen Fläche des Brillenglas-Halbfabrikats bzw. des fertigen Brillenglases mit wenigstens einem weiteren Dünnstglas erfolgt bevorzugt ebenfalls stoffschlüssig und formschlüssig. Bevorzugt wird hierbei die optisch fertig bearbeitete Rückfläche des Brillenglas-Halbfabrikats bzw. des fertigen Brillenglases mit der Vorderfläche des wenigstens einen Dünnstglases verbunden. Die optisch fertig bearbeitete Rückfläche des Brillenglas-Halbfertigprodukts bzw. des fertigen Brillenglases und/oder die Vorderfläche des wenigstens einen Dünnstglases kann mit wenigstens einer Beschichtung versehen sein. Diese wenigstens eine Beschichtung umfasst bevorzugt eine farbgebende Schicht. Die farbgebende Schicht wurde bereits vorstehend definiert. Bevorzugt umfasst die optisch fertig bearbeitete Rückfläche des Brillenglas-Halbfertigprodukts bzw. des fertigen Brillenglases und/oder die Vorderfläche des wenigstens einen Dünnstglases keine Beschichtung. Alternativ zu der Verbindung der optisch fertig bearbeiteten Rückfläche des Brillenglas-Halbfertigprodukts bzw. der Rückfläche des fertigen Brillenglases mit wenigstens einem Dünnstglas kann die jeweilige Rückfläche mit wenigstens einer Beschichtung versehen werden. Diese Beschichtung wird bevorzugt aus der Gruppe bestehend aus wenigstens einer Hartlackschicht, wenigstens einer Entspiegelungsschicht, wenigstens einer Antibeschlagsschicht, wenigstens einer elektrisch leitfähigen oder elektrisch halbleitenden Schicht und wenigstens einer Clean-Coat-Schicht ausgewählt. Besonders bevorzugt umfasst die Beschichtung wenigstens eine Hartlackschicht, wenigstens eine Entspiegelungsschicht und wenigstens eine Clean-Coat-Schicht, wobei die wenigstens eine Hartlackschicht die dem zu beschichtenden Substrat am nächsten liegende und die wenigstens eine Clean-Coat-Schicht die dem zu beschichtenden Substrat am weitesten entfernt liegende Schicht darstellt.
Die Beschichtung der Vorderfläche und/oder der Rückfläche des wenigstens einen Dünnstglases kann jeweils mittels eines PVD-Verfahrens und/oder eines Schleuderbeschichtungsverfahrens erfolgen. Die anschließende Aushärtung der im Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.
Die Verbindung der jeweils optisch fertig bearbeiteten Fläche des Brillenglas-Halbfertigprodukts bzw. der wenigstens einen fertig bearbeiteten optischen Fläche des fertigen Brillenglases bzw. der wenigstens einen Kunststofffolie jeweils mit dem wenigstens einen Dünnstglas erfolgt bevorzugt mittels eines Klebemittels. Das Klebemittel kann hierbei beispielsweise als Primer oder Ausgleichsmaterial für die unterschiedliche Wärmeausdehnung der einzelnen Komponenten dienen. Weiterhin kann über die Auswahl des Klebemittels eine Angleichung eines gegebenenfalls vorhandenen Brechungsindexunterschieds ΔnD der einzelnen Komponenten zueinander erzielt werden. Vorzugsweise erfolgt hierbei nicht nur die Angleichung des Brechungsindex nD, sondern auch die Angleichung der Abbe-Zahl, so dass die Änderung des Brechungsindex der einzelnen Komponenten über das sichtbare Spektrum hinweg gleich ist. Einsetzbare Klebemittel sind beispielsweise in der DE 10 2012 210 185 A1, der WO 2009/056196 A1 oder der WO 2015/121341 A1 beschrieben. Bevorzugt werden die einzelnen Komponenten mittels eines Klebemittels basierend auf einer aminkatalysierten Thiolhärtung von Epoxidharzen analog WO 2015/121341 A1, insbesondere analog Anspruch 1 der WO 2015/121341 A1, bei einer Temperatur aus einem Bereich von 20°C bis 80°C, bevorzugt aus einem Bereich von 40°C bis 70°C und besonders bevorzugt aus einem Bereich von 45°C bis 65°C, miteinander verbunden. Zwischen der, der fertig bearbeiteten optischen Fläche des Brillenglas-Halbfabrikats bzw. des fertigen Brillenglases zugewandten Oberfläche des wenigstens einen Dünnstglases und der fertig bearbeiteten optischen Fläche kann wenigstens eine Schicht vorhanden sein. Diese wenigstens eine Schicht weist bevorzugt die gleiche Oberflächentopographie wie die jeweils darunter liegende Oberfläche, auf die diese wenigstens eine Schicht aufgebracht wurde, auf. Geringfügige Abweichungen in der Oberflächentopographie der beiden zusammenzufügenden Oberflächen können beispielsweise mittels eines Klebemittels verfüllt werden. Für eine formschlüssige Verbindung der jeweiligen Oberflächen ist es bevorzugt, dass die Krümmungsradien der jeweils miteinander zu verbindenden Komponenten bevorzugt weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen.
Bevorzugt weisen das wenigstens eine Dünnstglas sowie das Brillenglas-Halbfertigprodukt bzw. das fertige Brillenglas vor dem Zusammenfügen mittels eines Klebemittels einen identischen Durchmesser und einen identischen Krümmungsradius auf. Bevorzugt weist die wenigstens eine Kunststofffolie einen Durchmesser auf, welcher ausreichend groß ist, dass die wenigstens eine Kunststofffolie die Vorderfläche des augenseitigen Dünnstglases und die Rückfläche des objektseitigen Dünnstglases komplett bedeckt. Etwaig überstehende Kunststofffolie wird bevorzugt abgeschnitten. Für den Fall, dass die wenigstens eine Kunststofffolie bereits den gleichen Krümmungsradius wie das hiermit zu verbindende Dünnstglas aufweist, weist die wenigstens eine Kunststofffolie bevorzugt den identischen Durchmesser wie das Dünnstglas auf.

Das zu beschichtende Substrat kann sowohl auf der Vorderfläche, d.h. der objektseitigen Fläche, welche gemäß DIN EN ISO 13666:2013-10, Absatz 5.8 bestimmungsgemäß in der Brille vom Auge abgewandt liegt, als auch auf der Rückfläche, d.h. der augenseitigen Fläche, welche gemäß DIN EN ISO 13666:2013-10, Absatz 5.9 bestimmungsgemäß in der Brille dem Auge zugewandt liegt, wenigstens eine photochrome Schicht umfassen. Bevorzugt umfasst das zu beschichtende Substrat nur auf der Vorderfläche wenigstens eine photochrome Schicht. Diese wenigstens eine photochrome Schicht ist auf wenigstens einer Oberfläche des zu beschichtenden Substrats angeordnet und ist nicht zu verwechseln mit der wenigstens einen photochromen Schicht, welche sich zwischen der optisch fertig bearbeiteten Fläche eines Brillenglas-Halbfertigprodukt bzw. eines fertigen Brillenglases und wenigstens einem Dünnstglas angeordnet ist.

Die wenigstens eine photochrome Schicht umfasst bevorzugt eine Schicht gemäß US 2006/0269741 A1, insbesondere gemäß US 2006/0269741 A1, Anspruch 6, oder eine Schicht gemäß US 2004/0220292 A1, insbesondere gemäß US 2004/0220292 A1, Anspruch 1, oder eine Schicht gemäß EP 1 561 571 A1, insbesondere gemäß EP 1 561 571 A1, Anspruch 1, oder eine photochrome Schicht gemäß WO 03/058300 A1, Seite 10, Zeile 23 bis Seite 21, Zeile 18. Besonders bevorzugt umfasst die wenigstens eine photochrome Schicht eine Schicht gemäß US 2006/0269741 A1, insbesondere gemäß US 2006/0269741 A1, Anspruch 6, oder eine Schicht gemäß US 2004/0220292 A1, insbesondere gemäß US 2004/0220292 A1, Anspruch 1. Die wenigstens eine photochrome Schicht weist bevorzugt eine mittlere Dicke aus einem Bereich von 5 µm bis 200 µm, weiter bevorzugt aus einem Bereich von 9 µm bis 166 µm, besonders bevorzugt aus einem Bereich von 15 µm bis 121 µm und ganz besonders bevorzugt aus einem Bereich von 18 µm bis 87 µm auf.

Zwischen dem zu beschichtenden Substrat und der wenigstens einen photochromen Schicht kann, vorzugsweise substratzugewandt direkt angrenzend an die wenigstens eine photochrome Schicht, wenigstens eine Primerschicht vorliegen. Als wenigstens eine Primerschicht kann die in EP 1 602 479 A1, insbesondere in EP 1 602 479 A1, Anspruch 1, offenbarte Polyurethanharzschicht oder die in WO 03/058300 A1, insbesondere in WO 03/058300 A1, Seite 22, Zeile 3, bis Seite 23, Zeile 13, offenbarte Primerschicht, eingesetzt werden. Als wenigstens eine Primerschicht wird bevorzugt die in EP 1 602 479 A1, insbesondere in EP 1 602 479 A1, Anspruch 1, offenbarte Polyurethanharzschicht eingesetzt.

Für alle der nachstehend aufgeführten Ausführungsformen wird als wenigstens eine photochrome Schicht bevorzugt eine der vorstehend genannten photochromen Schichten sowie optional eine der vorstehend genannten Primerschichten eingesetzt.

Durch Beschädigungen im Alltagsgebrauch der Brille, welche sich beispielsweise in Mikrokratzern auf der Beschichtung und/oder in der Beschichtung eines Brillenglases und/oder auf einer Oberfläche des Substrats und/oder im Substrat des Brillenglases zeigen können, kann es durch Kontakt beispielsweise mit Feuchtigkeit, Verunreinigungen, in Schweiß oder Hautfetten enthaltenen Fettsäuren oder pH-sauren Komponenten, zu einer Quellung bzw. zu einem Aufwerfen bzw. zu einer Aufwölbung der Beschichtung und/oder des Substrats kommen. pH-saure Komponenten können beispielsweise in Lebensmitteln enthalten sein. Mikrokratzer, welche in der Regel ungefähr 300 nm bis ungefähr 5000 nm tief und/oder ungefähr 1 µm bis ungefähr 150 µm breit in eine Oberfläche des Brillenglases, d.h. in die Beschichtung und/oder das Substrat des Brillenglases eindringen, können durch im Alltagsgebrauch der Brille unvermeidbare Kontamination innerhalb der Beschichtung in Richtung Substrat und/oder innerhalb wenigstens einer Schicht der Beschichtung und/oder im Substrat vergrößert werden. In Brillengläsern mit wenigstens einer photochromen Schicht kann es so insbesondere durch Kontakt der wenigstens einen photochromen Schicht mit insbesondere pH-sauren Komponenten zu einer irreversiblen Quellung insbesondere der wenigstens einen photochromen Schicht kommen. Eine Quellung der wenigstens einen photochromen Schicht verursacht in der Regel auch eine Erhebung bzw. ein Aufwerfen bzw. eine Aufwölbung derjenigen wenigstens einen Schicht, welche auf derselben Oberfläche wie die wenigstens eine photochrome Schicht und in Bezug auf die wenigstens eine photochrome Schicht substratabgewandt in der Schichtenfolge des Brillenglases angeordnet ist. Nachstehend wird auch für vorstehend genannten Fall nur von "Quellung der wenigstens einen photochromen Schicht" oder allgemein von "Quellung der Beschichtung" gesprochen. Wird im Rahmen dieser Erfindung von "Quellung des Substrats" gesprochen, bewirkt und umfasst diese Quellung in der Regel auch eine Erhebung bzw. ein Aufwerfen bzw. eine Aufwölbung der an die Oberfläche des Substrats angrenzenden wenigstens einen Schicht.
Ein Brillenglas, in welchem die wenigstens eine photochrome Schicht wenigstens an einer Stelle wenigstens eine Quellung aufweist, wirkt an genau dieser Stelle bei Durchsicht wie eine Mikrolinse. Da Mikrokratzer auf und/oder in der Beschichtung eines Brillenglases bei Gebrauch der Brille unvermeidbar sind, kommt es in der Regel bei Kontakt des wenigstens eine photochromen Schicht umfassenden Brillenglases mit wenigstens einer pH-sauren Komponente zu einer Quellung der wenigstens einen photochromen Schicht an mehr als einer einzelnen Stelle. Bei Durchsicht durch das Brillenglas wirkt jede dieser Stellen wie eine Mikrolinse, was von einem Brillenträger als störend empfunden werden kann. Zur Unterdrückung und/oder Verhinderung der Quellung der wenigstens einen photochromen Schicht eines Brillenglases wird erfindungsgemäß entweder wenigstens eine Barriereschicht und/oder eine chemisch modifizierte Schicht jeweils auf derselben Oberfläche, welche auch die wenigstens eine photochrome Schicht umfasst, aufgebracht. Die wenigstens eine Barriereschicht und/oder die wenigstens eine chemisch modifizierte Schicht befindet sich in Bezug auf die wenigstens eine photochrome Schicht auf der weiter vom Substrat abgewandten Seite. Umfasst nur die Beschichtung der Vorderfläche des Substrats wenigstens eine photochrome Schicht, befindet sich die wenigstens eine Barriereschicht und/oder die wenigstens eine chemisch modifizierte Schicht weiter objektseitig. Umfasst, zusätzlich oder alternativ, die Beschichtung der Rückfläche des Substrats wenigstens eine photochrome Schicht, befindet sich auf der Rückfläche die wenigstens eine Barriereschicht und/oder die wenigstens eine chemisch modifizierte Schicht weiter augenseitig. Die wenigstens eine Barriereschicht und/oder die wenigstens eine chemisch modifizierte Schicht kann auf der jeweils substratabgewandten Seite direkt an die wenigstens eine photochrome Schicht angrenzen. Zwischen der wenigstens einen photochromen Schicht und der wenigstens einen Barriereschicht bzw. zwischen der wenigstens einen photochromen Schicht und der wenigstens einen chemisch modifizierten Schicht kann aber auch wenigstens eine weitere Schicht vorliegen. Des Weiteren muss nicht oder nicht nur die an die wenigstens eine photochrome Schicht direkt angrenzende Schicht chemisch modifiziert sein, sondern es kann alternativ oder zusätzlich wenigstens eine weiter vom Substrat abgewandte Schicht der Beschichtung chemisch modifiziert sein. Chemisch modifiziert bedeutet in diesem Zusammenhang, dass die wenigstens eine chemisch modifizierte Schicht eine pH-puffernde Wirkung entfaltet. Die wenigstens eine chemisch modifizierte Schicht und/oder die wenigstens eine Barriereschicht verhindert bzw. verhindern bevorzugt, dass Feuchtigkeit, Verunreinigungen, in Schweiß oder Hautfetten enthaltene Fettsäuren oder pH-saure Komponenten mit der wenigstens einen photochromen Schicht in Kontakt kommen. Bevorzugt stellt die wenigstens eine chemisch modifizierte Schicht eine chemische Barriere dar, die verhindert, dass insbesondere pH-saure Komponenten mit der wenigstens einen photochromen Schicht in Kontakt kommen. Bevorzugt stellt die wenigstens eine Barriereschicht ein Hindernis dar, welches verhindert, dass insbesondere pH-saure Komponenten mit der wenigstens einen photochromen Schicht in Kontakt kommen. Bei einer Ausführungsform erfüllt die wenigstens Barriereschicht zusätzlich zu ihrer eigentlichen Funktion die Funktion einer Opferschicht. Opferschicht bedeutet in diesem Zusammenhang nicht, dass diese Schicht abgebaut wird, sondern dass diese Schicht lediglich verhindert, dass die auf derselben Oberfläche des Substrats befindliche wenigstens eine photochrome Schicht mit Feuchtigkeit, Verunreinigungen, in Schweiß oder Hautfetten enthaltenen Fettsäuren oder pH-sauren Komponenten in Kontakt kommt. Beispielsweise kann durch eine Hartlackschicht die Kratzbeständigkeit, die Chemikalienbeständigkeit und/oder die Härte des Brillenglases bestimmt werden und gleichzeitig kann dieselbe Hartlackschicht die Funktion einer Opferschicht übernehmen. Bei einer weiteren Ausführungsform wird die wenigstens eine Barriereschicht in der Schichtenfolge aufgrund ihrer eigentlichen Funktion nicht benötigt, sondern erfüllt in dieser Schichtenfolge bevorzugt lediglich die Funktion einer Opferschicht. Umfasst beispielsweise eine Schichtenfolge neben der wenigstens einen photochromen Schicht zwei Hartlackschichten auf derselben Oberfläche des Substrats, kann eine der Hartlackschichten die eigentliche Funktion einer Hartlackschicht und die andere Hartlackschicht die Funktion einer Opferschicht innehaben. In letzterem Fall wird die Hartlackschicht in ihrer Funktion als Opferschicht und nicht in ihrer Funktion als Hartlackschicht benötigt. Für den Fall, dass es sich bei der Schicht in ihrer eigentlichen Funktion und der weiteren Schicht in ihrer Funktion als Opferschicht um einen identischen Schichttyp, beispielsweise um eine Hartlackschicht, handelt, können beide Schichten eine identische oder voneinander verschiedene Zusammensetzung und/oder eine identische oder voneinander verschiedene Schichtdicke aufweisen. Bevorzugt weisen bei identischem Schichttyp die jeweilige Schicht in ihrer eigentlichen Funktion und die jeweilige weitere Schicht in ihrer Funktion als Opferschicht sowohl eine unterschiedliche Schichtdicke als auch eine unterschiedliche Zusammensetzung auf. Besonders bevorzugt weist die jeweilige Schicht in ihrer Funktion als Opferschicht eine höhere mittlere Schichtdicke als die jeweilige Schicht in ihrer eigentlichen Funktion auf, d.h. eine als Opferschicht eingesetzte Hartlackschicht zum Beispiel hat eine höhere mittlere Dicke als eine weitere Hartlackschicht, welche auf derselben Oberfläche des zu beschichtenden Substrats angeordnet ist. Weiterhin bevorzugt ist die jeweilige Schicht in ihrer Funktion als Opferschicht dem Substrat näher angeordnet als die weitere jeweilige Schicht in ihrer eigentlichen Funktion.

Das Brillenglas umfassend wenigstens eine photochrome Schicht, wenigstens eine Barriereschicht und/oder wenigstens eine chemisch modifizierte Schicht weist bei wenigstens einer Beschädigung der wenigstens eine photochrome Schicht umfassenden Oberfläche des Brillenglases mit einer Kraft von bevorzugt ≤ 65 mN, weiter bevorzugt mit einer Kraft aus einem Bereich von 0 mN bis 63 mN, weiter bevorzugt mit einer Kraft aus einem Bereich von 9 mN bis 61 mN, besonders bevorzugt mit einer Kraft aus einem Bereich von 13 mN bis 59 mN und ganz besonders bevorzugt mit einer Kraft aus einem Bereich von 17 mN bis 56 mN nach Kontamination der wenigstens eine photochrome Schicht umfassenden Oberfläche des Brillenglases mit wenigstens einer organischen Säure über einen Zeitraum aus einem Bereich von bevorzugt 12 Stunden bis 84 Stunden, weiter bevorzugt aus einem Bereich von 24 Stunden bis 72 Stunden, besonders bevorzugt aus einem Bereich von 48 Stunden bis 71 Stunden und ganz besonders bevorzugt aus einem Bereich von 60 Stunden bis 70 Stunden keine Quellung der Beschichtung und/oder des Substrats auf. Die wenigstens eine photochrome Schicht umfassende Oberfläche des Brillenglases ist hierbei diejenige Oberfläche der Beschichtung, welche wenigstens eine photochrome Schicht in der Schichtenfolge umfasst. Unter Beschädigung wird verstanden, dass die Beschichtung der die wenigstens eine photochrome Schicht umfassenden Oberfläche des Brillenglases, vorzugsweise durch einen kratzenden Beschädigungsmechanismus, teilweise entfernt wird. Die Beschichtung wird von einer ersten Teiloberfläche entfernt und bleibt auf einer zweiten Teiloberfläche bestehen. Die erste und die zweite Teiloberfläche befinden sich hierbei auf derselben Oberfläche des Brillenglases, welche die wenigstens eine photochrome Schicht umfasst. Die Ausdehnung der ersten Teiloberfläche ist dabei in eine erste Richtung durch die auf der zweiten Teiloberfläche verbliebene Beschichtung begrenzt. Bei der Teiloberfläche kann es sich entweder um eine äußerste Oberfläche des Brillenglases oder nach Entfernen der äußersten Oberfläche bzw. nach Entfernen der äußersten Oberfläche und wenigstens einer weiter innen liegenden Schicht auch um eine noch nicht entfernte Schicht der Beschichtung des Brillenglases handeln. Unter Beschädigung wird weiterhin die vollständige Entfernung der Beschichtung bis zum oder bis in das Substrat hinein verstanden, wobei auch in diesem Fall die Beschichtung bevorzugt nur von einer ersten Teiloberfläche entfernt und auf einer zweiten Teiloberfläche bestehen bleibt. Mit anderen Worten bleibt bevorzugt auch bei einer vollständigen Entfernung der Beschichtung bis zum oder bis in das Substrat in normaler Richtung zur Substratoberfläche ein Teil der Beschichtung bestehen. Die Beschädigung der Beschichtung und/oder des Substrats erfüllt die Funktion, einen vollständigen oder erleichterten Durchgang der wenigstens einen organischen Säure zu einer der Schichten der Beschichtung oder zum Substrat zu ermöglichen. Auf diese Weise kann die Wirkungsweise der wenigstens einen chemisch modifizierten Schicht und/oder der wenigstens einen Barriereschicht objektiv und reproduzierbar beschrieben werden.
Unter keine Quellung der Beschichtung und/oder des Substrats wird verstanden, dass nach der vorstehend beschriebenen Kontamination visuell bei Durchsicht durch das Brillenglas kein Mikrolinseneffekt auftritt. Unter keine Quellung wird weiterhin und bevorzugt verstanden, dass nach der vorstehend beschriebenen Kontamination mit Hilfe eines auf der Weißlichtinterferometrie basierenden optischen Profilometers entlang der Beschädigung auf und/oder innerhalb der Beschichtung des Brillenglases keine Strukturen von bevorzugt <500 nm in z-Richtung, weiter bevorzugt aus einem Bereich von 0 nm bis 376 nm in z-Richtung, weiter bevorzugt aus einem Bereich von 1 nm bis 213 nm in z-Richtung, weiter bevorzugt aus einem Bereich von 1 nm bis 166 nm in z-Richtung, besonders bevorzugt aus einem Bereich von 2 nm bis 99 nm in z-Richtung und ganz besonders bevorzugt aus einem Bereich von 2 nm bis 68 nm in z-Richtung auf der wenigstens eine photochrome Schicht umfassenden Oberfläche des Brillenglases zu erkennen sind. Sind mit Hilfe eines auf der Weißlichtinterferometrie basierenden optischen Profilometers Strukturen von ≥ 500 nm in z-Richtung auf der wenigstens eine photochrome Schicht umfassenden Oberfläche des Brillenglases zu erkennen, wird im Rahmen dieser Erfindung von Quellung bzw. Aufwölbung bzw. einem Aufwerfen der Beschichtung und/oder des Substrats gesprochen. Als optisches Profilometer wird bevorzugt das optische Profilometer NewView 7100 der Firma AMETEK Germany GmbH eingesetzt. Unter z-Richtung wird die Normale zur Brillenglasoberfläche verstanden. Unter Kontamination des Brillenglases wird verstanden, dass die wenigstens eine photochrome Schicht umfassende Oberfläche des Brillenglases, insbesondere die wenigstens eine Beschädigung der wenigstens eine photochrome Schicht umfassenden Oberfläche des Brillenglases, komplett in wenigstens eine organische Säure eingelegt wird. Die jeweilige Oberfläche des Brillenglases wird unter definierten Bedingungen, vorzugsweise in einem verschlossen Behälter bei Raumtemperatur, in wenigstens eine organische Säure eingelegt und über den oben angegebenen Zeitraum aufbewahrt. Unter Raumtemperatur wird eine Temperatur von 22°C ± 2°C verstanden. Vor Untersuchung der Quellung wird die Kontamination von der die wenigstens eine photochrome Schicht umfassenden Oberfläche des Brillenglases entfernt und das Brillenglas getrocknet. Die Kontamination kann beispielsweise mit einem niederen Alkohol, wie Ethanol oder 2-Propanol, und/oder vollentsalztem Wasser abgewaschen werden. Bevorzugt werden eventuell entstandene Strukturen nur nach der vorstehend beschriebenen Kontamination ermittelt und gemäß vorstehend beschriebenen Angaben in Quellung oder keine Quellung eingeteilt. Vor Kontamination wird das zu untersuchende Brillenglas bevorzugt nur visuell im Hinblick auf eventuell vorhandene Mikrolinseneffekte bei Durchsicht beurteilt. Brillengläser, welche bereits vor Kontamination Mikrolinseneffekte aufweisen, weisen eine irreversible Quellung auf und wurden keiner weiteren Kontamination unterzogen. Alternativ kann die wenigstens eine photochrome Schicht umfassende Oberfläche eines Brillenglases, welches visuell bei Durchsicht keinen Mikrolinseneffekt aufweist, vor und nach der der Kontamination mit wenigstens einer organischen Säure mit Hilfe eines auf der Weißlichtinterferometrie basierenden optischen Profilometers untersucht und die Differenz der Strukturen in z-Richtung ermittelt werden. Eine Differenz der Strukturen in z-Richtung von ≤ 100 nm wird als keine Quellung gewertet. Eine Differenz der Strukturen in z-Richtung von > 100 nm wird als Quellung gewertet.
Als wenigstens eine organische Säure wird bevorzugt wenigstens eine flüssige organische aliphatische gesättigte oder ungesättigte, optional substituierte, Monocarbonsäure, besonders bevorzugt wenigstens eine flüssige organische aliphatische gesättigte oder ungesättigte Monocarbonsäure mit 2 bis 22 Kohlenstoffatomen, bevorzugt mit 3 bis 18 Kohlenstoffatomen, verwendet. Beispielsweise kann die wenigstens eine organische Säure aus der Gruppe bestehend aus Essigsäure, Propionsäure, Acrylsäure, Michsäure, Buttersäure, Isobuttersäure, Valeriansäure, Önanthsäure, Capronsäure, Caprylsäure, Pelargonsäure, Myristoleinsäure, Palmitoleinsäure, Linolsäure, alpha-Linolensäure, gamma-Linolensäure, Ölsäure, Ricinolsäure, Stearidonsäure, Arachidonsäure, Eicosapentaensäure, Docosapentaensäure und Docosahexaensäure ausgewählt werden. Bevorzugt wird die wenigstens eine organische Säure aus der Gruppe bestehend aus Essigsäure, Milchsäure, Buttersäure, Capronsäure, Caprylsäure, Pelargonsäure, Linolsäure, alpha-Linolensäure, gamma-Linolensäure und Ölsäure ausgewählt. Besonders bevorzugt als wenigstens eine organische Säure Milchsäure, Caprylsäure und/oder Ölsäure eingesetzt.
Die Beschädigung des Brillenglases wird auf der wenigstens eine photochrome Schicht umfassenden Oberfläche des Substrats mit einem Ritzwerkzeug, bevorzugt einem Diamantritzwerkzeug, weiter bevorzugt mit einem Diamantritzwerkzeug mit einer konischer Spitze, weiter bevorzugt mit einem Diamantritzwerkzeug mit einer konischen Spitze mit einem Radius von 2 µm, besonders bevorzugt mit einem Diamantritzwerkzeug mit einer konischen Spitze mit einem Radius von 2 µm ± 0,2 µm und einem Konus von 90° ± 1,5° hervorgerufen, welches längs einer ersten Richtung Material abtragend, d.h. Beschichtung und/oder Substrat abtragend, geführt wird. Diese Beschädigung des Brillenglases ist bevorzugt mit bloßem Auge erkennbar. Bevorzugt wird die Beschädigung des Brillenglases auf der wenigstens eine photochrome Schicht umfassenden Oberfläche des Substrats mit einer Kraft aus einem Bereich von bevorzugt 2 mN bis 100 mN bevorzugt mit Hilfe eines Ultra-Nanohärtemessgeräts hervorgerufen. Als Ultra-Nanohärtemessgerät wird bevorzugt das Ultra-Nanohärtemessgerät UNHT3 der Fa. Anton-Paar GmbH eingesetzt. Die Beschädigung wird bevorzugt durch wenigstens eine linienförmige oder strichförmige Beschädigung auf der wenigstens eine photochrome Schicht umfassenden Oberfläche des Brillenglases mit einer Kraft aus einem Bereich von bevorzugt 2 mN bis 100 mN hervorgerufen. Diese wenigstens eine Beschädigung ist bevorzugt eine durchgezogene, bevorzugt mit konstanter Kraft gezogene, Linie, welche bevorzugt eine Länge aus einem Bereich von 0,05 mm bis 0,4 mm, besonders bevorzugt aus einem Bereich von 0,09 mm bis 0,36 mm und ganz besonders bevorzugt aus einem Bereich von 0,1 mm bis 0,3 mm aufweist. Diese Linie ist bevorzugt wenigstens zehnmal, bevorzugt wenigstens hundertmal, besonders bevorzugt zwischen zehnmal und hundertmal, so lang wie breit. Das Brillenglas kann auf der wenigstens eine photochrome Schicht umfassenden Oberfläche mehr als eine einzige Beschädigung aufweisen, wobei mehrere Beschädigungen jeweils mit der gleichen Kraft oder jeweils mit einer voneinander verschiedenen Kraft hervorgerufen worden sein können. Mehrere Beschädigungen sind, unabhängig davon, ob sie mit gleicher oder voneinander verschiedener Kraft hervorgerufen wurden, bevorzugt örtlich voneinander getrennt. Die mehreren Beschädigungen können in einer Reihe, in Form einer Matrix oder willkürlich verteilt auf der wenigstens einen wenigstens eine photochrome Schicht umfassenden Oberfläche des Brillenglases angeordnet sein. Bevorzugt sind mehrere Beschädigungen mit unterschiedlicher Kraft örtlich voneinander getrennt in Form einer Matrix auf der wenigstens eine photochrome Schicht umfassenden Oberfläche des Brillenglases angeordnet. Zur Bestimmung derjenigen Kraft, durch welche eine Beschädigung der wenigstens eine photochrome Schicht umfassenden Oberfläche des Brillenglases hervorgerufen wird, die dann wenigstens eine Quellung verursacht, werden bevorzugt mehrere, örtlich voneinander getrennte, mit voneinander verschiedener Kraft hervorgerufene Beschädigungen genutzt. Die mehreren, örtlich voneinander getrennten Beschädigungen können durch eine Kraft aus dem bevorzugten Bereich von 2 mN bis 100 mN, beispielsweise durch eine Kraft von 4 mN, 10 mN, 14 mN, 20 mN, 30 mN, 40 mN, 50 mN, 60 mN, 70 mN, 80 mN, 90 mN und/oder 100 mN hervorgerufen werden. Die Beurteilung der Beschädigung im Hinblick darauf, bis zu mit welcher ausgeübten Kraft keine Beschädigung bzw. ab mit welcher ausgeübten Kraft wenigstens eine Beschädigung auf der wenigstens eine photochrome Beschichtung umfassenden Oberfläche des Brillenglases eine Quellung der Beschichtung und/oder des Substrats hervorgerufen hat, erfolgt, wie bereits vorstehend ausgeführt, visuell oder bevorzugt mit Hilfe eines optischen Profilometers.
Die mit einer bestimmten Kraft hervorgerufene Beschädigung der wenigstens eine photochrome Schicht umfassenden Oberfläche des Brillenglases entspricht einer bestimmten Eindringtiefe der Beschädigung in die Beschichtung und/oder in das Substrat des Brillenglases. Die Eindringtiefe ist hierbei unter anderem abhängig von der jeweils auf der Oberfläche des Brillenglases vorliegenden Schicht, der mittleren Dicke dieser Schicht und/oder der Härte dieser Schicht. Die Beschädigung kann beispielswiese von < 1 µm bis 15 µm in die Beschichtung und/oder in das Substrat eindringen, wobei vorstehend genannte Eindringtiefe die Differenz zwischen unbeschädigter Oberfläche und unbeschädigter Schicht oder unbeschädigtem Substrat ist.

Die Quellung derjenigen Beschichtung, deren Schichtenfolge wenigstens eine photochrome Schicht umfasst, und/oder der Substratoberfläche, welche mit einer Beschichtung umfassend wenigstens eine photochrome Schicht, wird durch wenigstens eine chemisch modifizierte Schicht und/oder durch wenigstens eine Barriereschicht bevorzugt verringert und ganz bevorzugt unterbunden. Die Untersuchung und Beurteilung der Quellung der Beschichtung und/oder des Substrats erfolgt wie vorstehend beschrieben, unabhängig davon, ob die Beschichtung derselben Oberfläche wenigstens eine photochrome Schicht und wenigstens eine chemisch modifizierte Schicht oder wenigstens eine photochrome Schicht und eine Barriereschicht oder wenigstens eine photochrome Schicht und wenigstens eine chemisch modifizierte Schicht und wenigstens eine Barriereschicht umfasst.

Die zur Herstellung der wenigstens einen chemisch modifizierten Schicht bevorzugt einzusetzende Beschichtungszusammensetzung umfasst bevorzugt wenigstens eine Base. Die wenigstens eine Base umfasst bevorzugt wenigstens eine heterocyclische Stickstoffverbindung, wenigstens ein primäres Amin, wenigstens ein sekundäres Amin, wenigstens ein tertiäres Amin und/oder wenigstens ein Metallhydroxid. Die zur Herstellung der wenigstens einen chemisch modifizierten Schicht bevorzugt einzusetzende Beschichtungszusammensetzung umfasst die wenigstens eine Base bevorzugt in einem Anteil aus einem Bereich von 0,01 Gew.-% bis 11,8 Gew.-%, weiter bevorzugt aus einem Bereich von 0,09 Gew.-% bis 9,4 Gew.-%, weiter bevorzugt aus einem Bereich von 0,1 Gew.-% bis 7,6 Gew.-%, besonders bevorzugt aus einem Bereich von 0,3 Gew.-% bis 6,2 Gew.-% und ganz besonders bevorzugt aus einem Bereich von 0,4 Gew.-% bis 5,3 Gew.-%, jeweils bezogen auf das Gesamtgewicht der Beschichtungszusammensetzung.

### I. Beschichtung umfassend wenigstens eine photochrome Schicht und wenigstens eine chemisch modifizierte Schicht auf derselben Oberfläche des Substrats

Nachfolgend wird die chemische Modifizierung wenigstens einer Schicht, welche auf derselben Oberfläche wie die wenigstens eine photochrome Schicht und in Bezug auf die wenigstens eine photochrome Schicht weiter vom Substrat abgewandt in einer Schichtenfolge vorliegt näher erläutert. Umfasst hierbei die Vorderfläche des Substrats wenigstens eine photochrome Schicht, liegt die wenigstens eine chemisch modifizierte Schicht in Bezug auf die photochrome Schicht weiter objektseitig in der Schichtenfolge. Umfasst die Rückfläche des Substrats wenigstens eine photochrome Schicht, liegt die wenigstens eine chemisch modifizierte Schicht in Bezug auf die photochrome Schicht weiter augenseitig in der Schichtenfolge. Sowohl die Vorderfläche des Substrats als auch die Rückfläche des Substrats können wenigstens eine photochrome Schicht und wenigstens eine chemisch modifizierte Schicht umfassen. Bevorzugt umfasst nur die Vorderfläche des Substrats wenigstens eine photochrome Schicht und wenigstens eine chemisch modifizierte Schicht.
Bei einer Ausführungsform der Erfindung umfasst wenigstens eine Oberfläche des zu beschichtenden Substrats wenigstens eine photochrome Schicht, wenigstens eine chemisch modifizierte Primer-Lackschicht und wenigstens eine Hartlackschicht auf derselben Oberfläche. Die wenigstens eine Hartlackschicht ist in vorstehend genannter Schichtenfolge bevorzugt diejenige Schicht, welche am weitesten entfernt vom Substrat angeordnet ist. Auf die Hartlackschicht kann optional wenigstens eine Entspiegelungsschicht, wenigstens eine elektrisch leitfähige oder halbleitende Schicht, wenigstens eine Antibeschlagschicht und/oder wenigstens eine Clean-Coat-Schicht aufgebracht werden. Die wenigstens eine elektrisch leitfähige oder halbleitende Schicht kann Bestandteil der wenigstens einen Entspiegelungsschicht sein. Sofern nur eine der Oberflächen des Substrats eine photochrome Schicht und die gegenüberliegende Oberfläche keine photochrome Schicht umfasst, kann diese gegenüberliegende Oberfläche wenigstens eine Hartlackschicht, wenigstens eine Entspiegelungsschicht, wenigstens eine elektrisch leitfähige oder halbleitende Schicht, die optional Teil der wenigstens einen Entspiegelungsschicht ist, wenigstens eine farbgebende Schicht, wenigstens eine polarisierende Schicht, wenigstens eine Antibeschlagschicht und/oder wenigstens Clean-Coat-Schicht umfassen. Bevorzugt umfasst die gegenüberliegende Oberfläche wenigstens eine Hartlackschicht, besonders bevorzugt wenigstens eine Hartlackschicht und wenigstens eine Entspiegelungsschicht und ganz besonders bevorzugt wenigstens eine Hartlackschicht, wenigstens eine Entspiegelungsschicht und wenigstens eine Clean-Coat-Schicht. Hierbei ist die wenigstens eine Entspiegelungsschicht bzw. bei Anwesenheit wenigstens einer Clean-Coat-Schicht diese die am weitesten vom Substrat entfernt liegende Schicht. Alternativ kann die gegenüberliegende Oberfläche wenigstens ein Dünnstglas, bevorzugt wenigstens ein Dünnstglas und wenigstens eine Entspiegelungsschicht umfassen, wobei die wenigstens eine Entspiegelungsschicht in Bezug auf das wenigstens eine Dünnstglas substratabgewandt angeordnet ist. Weiterhin alternativ kann die gegenüberliegende Oberfläche wenigstens ein Dünnstglas, wenigstens eine Entspiegelungsschicht und wenigstens eine Clean-Coat-Schicht umfassen, wobei die wenigstens eine Entspiegelungsschicht und die wenigstens eine Clean-Coat-Schicht in Bezug auf das wenigstens eine Dünnstglas substratabgewandt angeordnet sind und die wenigstens eine Clean-Coat-Schicht die am weitesten substratabgewandte Schicht bildet. Dünnstgläser sind in nachstehendem Absatz "II.2. Beschichtung umfassend wenigstens eine photochrome Schicht, wenigstens eine chemisch modifizierte Primer-Lackschicht und wenigstens eine Barriereschicht umfassend wenigstens ein Dünnstglas auf derselben Oberfläche des Substrats", nachstehend "II.2. Barriereschicht umfassend wenigstens ein Dünnstglas" genannt, näher beschrieben. Optional kann die gegenüberliegende Oberfläche zwischen der Oberfläche und dem wenigstens einen Dünnstglas wenigstens eine farbgebende Schicht umfassen. Bevorzugt umfasst bei dieser Ausführungsform die Vorderfläche des Substrats wenigstens eine photochrome Schicht, wenigstens eine chemisch modifizierte Primer-Lackschicht und wenigstens eine Hartlackschicht. Die Beschichtung der Vorderfläche des Substrats umfasst dann ausgehend von der Vorderfläche des Substrats bevorzugt wenigstens eine photochrome Schicht, wenigstens eine chemisch modifizierte Primer-Lackschicht und wenigstens eine Hartlackschicht. Die wenigstens eine Hartlackschicht ist in vorstehend genannter Schichtenfolge die äußerte, am weitetesten objektseitig liegende Schicht, auf welche optional wenigstens eine weitere Schicht, wie beispielsweise wenigstens eine Entspiegelungsschicht, wenigstens eine elektrisch leitfähige oder halbleitende Schicht, wenigstens eine Antibeschlagschicht und/oder wenigstens eine Clean-Coat-Schicht, aufgebracht wird. Weiterhin kann die Vorderfläche des Substrats wenigstens eine farbgebende Schicht und/oder wenigstens eine polarisierende Schicht umfassen. Alternativ kann das Substrat selbst eingefärbt sein und/oder eine polarisierende Folie umfassen. Die optional vorliegende wenigstens eine farbgebende Schicht bzw. die optional vorliegende wenigstens eine polarisierende Schicht liegt in Bezug auf die wenigstens eine photochrome Schicht näher an der Vorderfläche des Substrats. Umfasst die Vorderfläche des Substrats neben wenigstens einer photochromen Schicht, wenigstens einer chemisch modifizierten Primer-Lackschicht und wenigstens einer Hartlackschicht sowohl wenigstens eine farbgebende Schicht als auch wenigstens eine polarisierende Schicht, kann entweder die wenigstens eine farbgebende Schicht oder die wenigstens eine polarisierende Schicht die der Vorderfläche des Substrats am nächsten liegende Schicht sein. Bevorzugt ist die wenigstens eine farbgebende Schicht die der Vorderfläche des Substrats am nächsten liegende Schicht. Alternativ zur Aufbringung einer farbgebenden Schicht kann das Substrat eingefärbt werden.
Bei dieser Ausführungsform kann es sich bei der wenigstens einen photochromen Schicht um eine der oben genannten Schichten handeln. Des Weiteren kann dieselbe Oberfläche des Substrats wenigstens eine der oben, im Zusammenhang mit der wenigstens einen photochromen Schicht, genannten Primerschichten bevorzugt direkt benachbart zur wenigstens einen photochromen Schicht umfassen. Die wenigstens eine Primerschicht ist bevorzugt in Bezug auf die wenigstens eine photochrome Schicht die der Oberfläche des Substrats jeweils näherliegende Schicht.
Die wenigstens eine chemisch modifizierte Primer-Lackschicht wirkt haftvermittelnd auf verschiedenen Substraten bzw. auf verschiedenen auf dem Substrat vorliegenden Beschichtungen. Die Haftfestigkeit der wenigstens einen chemisch modifizierten Primer-Lackschicht wird bevorzugt anhand eines mit wenigstens einer photochromen Schicht, wenigstens einer chemisch modifizierten Primer-Lackschicht und wenigstens einer Hartlackschicht auf derselben Oberfläche beschichteten Substrats mittels einer Gitterschnittprüfung ermittelt, indem bis auf diese Oberfläche des Substrat durchgehende Schnitte im rechten Winkel zueinander ausgeführt werden, so dass ein Gitter entsteht. Auf diese Gitter wird ein Klebeband, vorzugsweise das Klebeband Scotch 600, Firma 3M Company, aufgebracht und abgezogen.

Die abgezogene Fläche wird prozentual mikroskopisch oder visuell mit bloßem Auge ermittelt. Der Haftungsgrad wird bevorzugt visuell mit bloßem Auge beurteilt. Besonders bevorzugt erfolgt die Beurteilung des Haftungsgrads gemäß Katalog "Qualitätskontrolle für Lacke und Rohstoffe", Seite 156, Firma Byk-Gardner GmbH.
Bei der wenigstens einen chemisch modifizierten Primer-Lackschicht handelt es sich bevorzugt um eine schlagzäh modifizierte und haftvermittelnde thermoplastische oder elastomere Beschichtung. Die Schlagzähigkeit wird bevorzugt anhand eines beschichteten Substrats ermittelt, wobei die Beschichtung des Substrats auf derselben Oberfläche wenigstens eine photochrome Schicht, wenigstens eine chemisch modifizierte Primer-Lackschicht, wenigstens eine Hartlackschicht und wenigstens eine Entspiegelungsschicht umfasst. Die Schlagzähigkeit wird bevorzugt gemäß FDA, Code of Federal Regulations, Title 21, Volume 8, Sec. 801.410 (21CFR801.410) ermittelt.
Zur Herstellung der wenigstens einen chemisch modifizierten Primer-Lackschicht wird bevorzugt eine Beschichtungszusammensetzung umfassend
i) wenigstens eine wässrige aliphatische, cycloaliphatische, aromatische oder heteroaromatische Polyurethandispersion, wenigstens eine wässrige aliphatische, cycloaliphatische, aromatische oder heteroaromatische Polyharnstoffdispersion, wenigstens eine wässrige aliphatische, cycloaliphatische, aromatische oder heteroaromatische Polyurethan-Polyharnstoffdispersion und/oder wenigstens eine wässrige aliphatische, cycloaliphatische, aromatische oder heteroaromatische Polyesterdispersion, besonders bevorzugt wenigstens eine wässrige aliphatische Polyurethandispersion oder wenigstens eine wässrige aliphatische Polyesterdispersion und ganz besonders bevorzugt wenigstens eine wässrige aliphatische Polyurethandispersion,
ii) wenigstens ein Lösungsmittel,
iii) wenigstens eine Base sowie
iv) optional wenigstens ein Additiv
eingesetzt.
Der Anteil der wenigstens einen wässrigen aliphatischen, cycloaliphatischen, aromatischen oder heteroaromatischen Polyurethandispersion, der wenigstens einen wässrigen aliphatischen, cycloaliphatischen, aromatischen oder heteroaromatischen Polyharnstoffdispersion, der wenigstens einen wässrigen aliphatischen, cycloaliphatischen, aromatischen oder heteroaromatischen Polyurethan-Polyharnstoffdispersion und/oder der wenigstens einen wässrigen aliphatischen, cycloaliphatischen, aromatischen oder heteroaromatischen Polyesterdispersion in der zur Herstellung der wenigstens einen chemisch modifizierten Primer-Lackschicht einsetzbaren Beschichtungszusammensetzung weist bevorzugt einen Gesamtanteil aus einem Bereich von 2 Gew.-% bis 31 Gew.-%, weiter bevorzugt aus einem Bereich von 4 Gew.-% bis 26 Gew.-%, weiter bevorzugt aus einem Bereich von 5 Gew.-% bis 21 Gew.-%, besonders bevorzugt aus einem Bereich von 6 Gew.-% bis 20 Gew.-% und ganz besonders bevorzugt aus einem Bereich von 7 Gew.-% bis 19 Gew.-%, jeweils bezogen auf das Gesamtgewicht der Beschichtungszusammensetzung, auf. Der Gesamtanteil umfasst hierbei sowohl den Anteil nur einer der vorstehend aufgeführten Dispersionen als auch eine Mischung aus vorstehend aufgeführten Dispersionen.

Bevorzugt umfasst die zur Herstellung der wenigstens einen chemisch modifizierten Primer-Lackschicht einsetzbare Beschichtungszusammensetzung eine wässrige Polyurethandispersion, wobei das Polyurethan als Spacer bevorzugt eine Polyestereinheit aufweist. Bevorzugt einzusetzende wässrige Polyurethandispersionen sind in WO 94/17116 A1, insbesondere in WO 94/17116 A1, Seite 7, Zeilen 11 bis 33, offenbart. Die wässrige Polyurethandispersion kann mit einer anionisch stabilisierten Acrylemulsion stabilisiert sein, wie dies beispielsweise in WO 94/17116 A1, insbesondere WO 94/17116 A1, Seite 7, Zeilen 33 bis 35, offenbart ist.
Der Anteil des wenigstens einen Lösungsmittels in der zur Herstellung der wenigstens einen chemisch modifizierten Primer-Lackschicht einsetzbaren Beschichtungszusammensetzung liegt bevorzugt in einem Bereich von 69 Gew.-% bis 98 Gew.-%, weiter bevorzugt in einem Bereich von 73 Gew.-% bis 96 Gew.-%, besonders bevorzugt in einem Bereich von 76 Gew.-% bis 94 Gew.-% und ganz besonders bevorzugt in einem Bereich von 79 Gew.-% bis 93 Gew.-%, jeweils bezogen auf das Gesamtgewicht der Beschichtungszusammensetzung. Vorstehend genannte Anteile gelten sowohl für die Verwendung einer Mischung voneinander verschiedener Lösungsmittel als auch für die Verwendung eines einzelnen Lösungsmittels.
Die zur Herstellung der wenigstens einen chemisch modifizierten Primer-Lackschicht einsetzbare Beschichtungszusammensetzung umfasst bevorzugt wenigstens ein organisches Lösungsmittel mit einem niedrigen Siedepunkt von < 100°C bei Normaldruck und wenigstens ein organisches Lösungsmittel mit einem mittleren Siedepunkt aus einem Bereich von 100°C bis 150°C bei Normaldruck. Als organisches Lösungsmittel mit einem niedrigen Siedepunkt können beispielsweise Methanol, Ethanol, 1-Propanol, 2-Propanol, tert-Butanol, Aceton, Diethylether, tert-Butylmethylether, Tetrahydrofuran, Chloroform, 1,2-Dichlorethan, Methylenchlorid, Cyclohexan, Essigsäureethylester, n-Hexan, n-Heptan und/oder Methylethylketon eingesetzt werden. Bevorzugt wird als organisches Lösungsmittel mit einem niedrigen Siedepunkt Methanol, Ethanol, 1-Propanol und/oder 2-Propanol eingesetzt.
Als organisches Lösungsmittel mit einem mittleren Siedepunkt können beispielsweise 1-Methoxy-2-propanol, 1-Butanol, Dibutylether, 1,4-Dioxan, 3-Methyl-1-butanol, 4-Hydroxy-4-methyl-2-pentanon, Methylisobutylketon und/oder Toluol eingesetzt werden. Bevorzugt wird als Lösungsmittel mit einem mittleren Siedepunkt 1-Methoxy-2-propanol und/oder 4-Hydroxy-4-methyl-2-pentanon eingesetzt. Bevorzugt liegt das Gewichtsverhältnis des wenigstens einen organischen Lösungsmittels mit einem niedrigen Siedepunkt zu wenigstens einem organischen Lösungsmittel mit einem mittleren Siedepunkt bei 1:1, weiter bevorzugt bei 1:1,4, besonders bevorzugt bei 1:1,5 und ganz besonders bevorzugt bei 1:1,7.
Die zur Herstellung der wenigstens einen chemisch modifizierten Primer-Lackschicht einsetzbare Beschichtungszusammensetzung kann als Lösungsmittel neben wenigstens einem organischen Lösungsmittel mit einem niedrigen Siedepunkt und wenigstens einem organischen Lösungsmittel mit einem mittleren Siedepunkt zusätzlich Wasser umfassen. Hierbei liegt das Gewichtsverhältnis des wenigstens einen organischen Lösungsmittels mit einem niedrigen Siedepunkt zu wenigstens einem organischen Lösungsmittel mit einem mittleren Siedepunkt zu Wasser bevorzugt bei 2:7:1, weiter bevorzugt bei 2,5:6,5:1, weiter bevorzugt bei 3:6:1, besonders bevorzugt bei 3:5:1 und ganz besonders bevorzugt bei 3:6:1.
Die wenigstens eine chemisch modifizierte Primer-Lackschicht weist bevorzugt eine mittlere Dicke aus einem Bereich von 300 nm bis 1200 nm, weiter bevorzugt aus einem Bereich von 340 nm bis 1130 nm, weiter bevorzugt aus einem Bereich von 390 nm bis 1080 nm, besonders bevorzugt aus einem Bereich von 440 nm bis 1010 nm und ganz besonders bevorzugt aus einem Bereich 470 nm bis 960 nm auf. Unter mittlerer Dicke wird der arithmetische Mittelwert der an wenigstens drei Stellen vermessenen Dicke der jeweiligen chemisch modifizierten Primer-Lackschicht verstanden. Die mittlere Dicke der wenigstens einen chemisch modifizierten Primer-Lackschicht wird bevorzugt nach Applikation und Trocknung anhand eines wenigstens eine photochromen Schicht und wenigstens eine chemisch modifizierte Primer-Lackschicht umfassenden Brillenglases bestimmt, wobei sich vorstehend genannte Schichten auf derselben Oberfläche des Substrats befinden und die wenigstens eine chemisch modifizierte Primer-Lackschicht die am weitesten vom Substrat entfernte Schicht darstellt. Bevorzugt wird die mittlere Dicke der wenigstens einen chemisch modifizierten Primer-Lackschicht mittels einer Messung der spektralen Reflektivität und/oder der spektralen Transmissivität bestimmt. Bevorzugt wird zur Bestimmung der mittleren Dicke der wenigstens einen chemisch modifizierten Primer-Lackschicht ein optisches Spektrometer der Firma Filmetrics Inc. eingesetzt, z.B. das optische Spektrometer F20, F10-HC oder
F10-AR. Besonders bevorzugt wird zur Bestimmung der mittleren Dicke der wenigstens einen chemisch modifizierten Primer-Lackschicht das optische Spektrometer F10-HC (Firma Filmetrics Inc.) eingesetzt. Durch Beleuchtung des wenigstens eine photochrome Schicht und wenigstens eine chemisch modifizierte Primer-Lackschicht umfassenden Brillenglases mit Weißlicht entstehen Interferenzspektren in Abhängigkeit von der geometrischen Schichtdicke und der Brechzahl der jeweiligen Schicht. Durch Einstrahlung von Weißlicht entstehen an optisch transparenten Schichten Interferenzen, da für bestimmte Wellenlängen der Gangunterschied exakt das Vielfache der optischen Schichtdicke beträgt. Die Berechnung der Schichtdicke erfolgt bevorzugt gemäß der Fast-Fourier-Transformation (FFT)-Methode. Bei der FFT-Methode wird die geometrische Schichtdicke aus der Periodizität des Interferenzspektrums berechnet. Alternativ kann die mittlere Dicke der wenigstens einen chemisch modifizierten Primer-Lackschicht anhand wenigstens einer rasterelektronenmikroskopischen Querschiffaufnahme oder wenigstens einer transmissionselektronenmikroskopischen Querschliffaufnahme eines wenigstens eine photochrome Schicht und wenigstens eine chemisch modifizierte Primer-Lackschicht umfassenden Brillenglases bestimmt werden. Hierfür wird die Dicke der jeweiligen chemisch modifizierten Primer-Lackschicht an wenigstens drei Stellen ermittelt und das arithmetische Mittel gebildet.
Die zur Herstellung der wenigstens einen chemisch modifizierten Primer-Lackschicht einsetzbare Beschichtungszusammensetzung wird auf wenigstens eine photochrome Schicht oder auf wenigstens eine weitere, auf der photochromen Schicht vorliegende und von dieser verschiedene, Schicht aufgebracht. Die Trocknung dieser Beschichtungszusammensetzung erfolgt bevorzugt durch Verdunstung des in der Beschichtungszusammensetzung vorhandenen wenigstens einen Lösungsmittels. Bevorzugt erfolgt die Trocknung dieser Beschichtungszusammensetzung bei einer Temperatur aus einem Bereich von 20°C bis 80°C, weiter bevorzugt aus einem Bereich von 23°C bis 78°C, besonders bevorzugt aus einem Bereich von 35°C bis 76°C und ganz besonders bevorzugt bei 45°C bis 75°C.
Die Beschichtungszusammensetzung zur Herstellung der wenigstens einen chemisch modifizierten Primer-Lackschicht umfasst wenigstens eine Base, welche der wenigstens einen chemisch modifizierten Primer-Lackschicht bevorzugt eine pH-puffernde Wirkung verleiht und somit verlangsamt, bevorzugt verhindert, dass pH-saure Komponenten mit einer substratnäheren Schicht, insbesondere wenigstens einer substratnäheren photochromen Schicht, in Kontakt kommen. Die Beschichtungszusammensetzung zur Herstellung der wenigstens einen chemisch modifizierten Primer-Lackschicht umfasst die wenigstens eine Base in einem Anteil aus bevorzugt einem Bereich von 0,1 Gew.-% bis 3,2 Gew.-%, weiter bevorzugt aus einem Bereich von 0,2 Gew.-% bis 2,8 Gew-%, weiter bevorzugt aus einem Bereich von 0,3 Gew.-% bis 2,4 Gew.-%, besonders bevorzugt aus einem Bereich von 0,4 Gew.-% bis 1,9 Gew.-% und ganz besonders bevorzugt aus einem Bereich von 0,5 Gew.-% bis 1,6 Gew.-%, jeweils bezogen auf das Gesamtgewicht der Beschichtungszusammensetzung. Vorstehend genannte Anteile gelten sowohl bei der Verwendung einer einzigen Art von Base als auch bei der Verwendung einer Mischung voneinander verschiedener Basen.
Die Beschichtungszusammensetzung zur Herstellung der wenigstens einen chemisch modifizierten Primer-Lackschicht kann beispielsweise Imidazol, 1-Methylimidazol, 2-Methylimidazol, 4-Methylimidazol, 2,5-Dimethylimidazol, 4-Hydroxymethylimidazol, Pyrazol, 1,2,3-Triazol, 1,2,4-Triazol, Tetrazol, Pentazol, Pyrrol, Pyrrolidin, Pyridin, 4-Aminopyridin 4-Methylpyridin, 4-Methoxypyridin, 2,4,6-Trimethylpyridin, Piperidin, Piperazin, Triethylamin, Di-isopropylamin, Di-isobutylamin, Natronlauge und/oder Kalilauge als Base umfassen. Bevorzugt umfasst die wenigstens eine chemisch modifizierte Primer-Lackschicht wenigstens eine Base ausgewählt aus der Gruppe bestehend aus 2-Methlyimidazol, Imidazol, 1-Methylimidazol, 4-Methylimidazol, 2,5-Dimethylimidazol,Triethylamin oder Natronlauge, besonders bevorzugt wenigstens eine Base ausgewählt aus der Gruppe bestehend aus 2-Methylimidazol, 1-Methylimidazol, 4-Methylimidazol und Natronlauge. Ganz besonders bevorzugt umfasst die Beschichtungszusammensetzung zur Herstellung der wenigstens einen chemisch modifizierten Primer-Lackschicht wenigstens eine Base ausgewählt aus der Gruppe bestehend aus 2-Methylimidazol und 1-Methylimidazol in einem Anteil aus einem Bereich von 0,1 Gew.-% bis 2 Gew.-%, bevorzugt aus einem Bereich von 0,3 Gew.-% bis 1,5 Gew.-%, jeweils bezogen auf das Gesamtgewicht der Beschichtungszusammensetzung zur Herstellung der wenigstens einen chemisch modifizierten Primer-Lackschicht. Vorstehend genannte Anteile gelten sowohl für den Anteil einer Mischung umfassend 2-Methylimidazol und 1-Methylimidazol als auch für den Anteil von 2-Methylimidazol oder 1-Methylimidazol.
Die Beschichtungszusammensetzung zur Herstellung der wenigstens einen chemisch modifizierten Primer-Lackschicht kann optional wenigstens ein Additiv umfassen. Das wenigstens eine Additiv kann hierbei ein Dispergiermittel, ein Antiabsetzmittel, ein Netzmittel, einschließlich einem Antikrateradditiv oder einem Verlaufsadditiv, ein Biozid und/oder ein UV-Absorber sein. Die Beschichtungszusammensetzung zur Herstellung der wenigstens einen chemisch modifizierten Primer-Lackschicht umfasst das optional vorhandene, wenigstens eine Additiv bevorzugt in einem Anteil aus einem Bereich von 0,01 Gew.-% bis 1,7 Gew.-%, weiter bevorzugt in einem Anteil aus einem Bereich von 0,07 Gew.-% bis 1,4 Gew.-%, besonders bevorzugt in einem Anteil aus einem Bereich von 0,09 Gew.-% bis 1,1 Gew.-% und ganz besonders bevorzugt in einem Anteil aus einem Bereich von 0,1 Gew.-% bis 0,7 Gew.-%, jeweils bezogen auf das Gesamtgewicht der Beschichtungszusammensetzung. Vorstehend genannte Anteile gelten sowohl für den Einsatz einer Art eines Additivs als auch für den Einsatz einer Mischung voneinander verschiedener Additive.
Die Anteile der einzelnen vorstehend beschriebenen Komponenten werden so eingesetzt, dass sie sich zu 100 Gew.-% in der für die Herstellung der wenigstens einen chemisch modifizierten Primer-Lackschicht einzusetzenden Beschichtungszusammensetzung addieren.
Die zur Herstellung der wenigstens einen chemisch modifizierten Primer-Lackschicht einsetzbare Beschichtungszusammensetzung wird bevorzugt mittels Tauchbeschichtung oder Schleuderbeschichtung auf wenigstens eine, mit wenigstens einer photochromen Schicht belegte Oberfläche des Substrats aufgebracht.
Bei dieser Ausführungsform umfasst die wenigstens eine photochrome Schicht umfassende Oberfläche des Substrats bevorzugt genau eine chemisch modifizierte Primer-Lackschicht. Diese genau eine chemisch modifizierte Primer-Lackschicht ist auf derselben Oberfläche des Substrats und in Bezug auf die wenigstens eine photochrome Schicht substratabgewandt angeordnet. Zwischen der wenigstens einen photochromen Schicht und der genau einen chemisch modifizierten Primer-Lackschicht kann wenigstens eine weitere Schicht zugegen sein. Bevorzugt liegt zwischen der wenigstens einen photochromen Schicht und der genau einen chemisch modifizierten Primer-Lackschicht keine weitere Schicht vor.
Bei dieser Ausführungsform umfasst die wenigstens eine photochrome Schicht umfassende Oberfläche des Substrats bevorzugt wenigstens eine Hartlackschicht. Diese wenigstens eine Hartlackschicht ist auf derselben Oberfläche des Substrats und in Bezug auf die wenigstens eine photochrome Schicht, bevorzugt auch in Bezug auf die wenigstens eine chemisch modifizierte Primer-Lackschicht, substratabgewandt angeordnet. Zwischen der wenigstens einen chemisch modifizierten Primer-Lackschicht und der wenigstens einen Hartlackschicht kann wenigstens eine weitere Schicht zugegen sein. Bevorzugt liegt zwischen der wenigstens einen chemisch modifizierten Primer-Lackschicht und der wenigstens einen Hartlackschicht keine weitere Schicht vor.
Für die Herstellung der wenigstens einen Hartlackschicht wird bevorzugt eine Zusammensetzung wie in EP 2 578 649 A1, insbesondere in EP 2 578 649 A1, Anspruch 1, beschrieben, eingesetzt. Besonders bevorzugt umfasst die Zusammensetzung für die Herstellung der wenigstens einen Hartlackschicht
a) wenigstens ein Silanderivat der Formel R¹R²₃₋ₙSi(OR³)ₙ, wobei R¹ eine unsubstituierte oder substituierte Alkylgruppe. Cycloalkylgruppe. Acylgruppe, Alkylenacylgruppe, Arylgruppe oder Alkylenarylgruppe ist, R² ein organischer Rest ist, der eine Epoxidgruppe umfasst, R³ eine unsubstituierte oder substituierte Alkylgruppe. Cycloalkylgruppe, Arylgruppe oder Alkylenarylgruppe ist und n = 2 oder 3 ist und/oder ein Hydrolyseprodukt und/oder ein Kondensationsprodukt des Silanderivats der Formel R¹R²₃₋ₙSi(OR³)ₙ,
b) wenigstens ein kolloidales anorganisches Oxid, Hydroxid, Oxidhydrat, Fluorid und/oder Oxyfluorid,
c) wenigstens eine Epoxidverbindung, die wenigstens zwei Epoxidgruppen aufweist und
d) wenigstens ein Katalysatorsystem, welches wenigstens eine Lewis-Säure und wenigstens ein thermolatentes Lewis-Säure-Basen-Addukt umfasst.
Die vorstehend beschriebene Zusammensetzung für die Herstellung der wenigstens einen Hartlackschicht umfasst das wenigstens eine Silanderivat der Formel R¹R²₃₋ₙSi(OR³)ₙ und/oder dessen Hydrolyseprodukt und/oder Kondensationsprodukt bevorzugt in einem Anteil aus einem Bereich von 9 Gew.-% bis 81 Gew.-%, weiter bevorzugt aus einem Bereich von 13 Gew.-% bis 76 Gew.-%, besonders bevorzugt aus einem Bereich von 19 Gew.-% bis 71 Gew.-% und ganz besonders bevorzugt aus einem Bereich von 23 Gew.-% bis 66 Gew.-%, jeweils bezogen auf das Gesamtgewicht der Zusammensetzung. Vorstehend genannte Anteile beziehen sich sowohl auf die Verwendung einer Art eines Silanderivats der Formel R¹R²₃₋ₙSi(OR³)ₙ und/oder dessen Hydrolyseprodukt und/oder dessen Kondensationsprodukt als auch auf die Verwendung einer Mischung voneinander verschiedener Silanderivate der Formel R¹R²₃₋ₙSi(OR³)ₙ und/oder deren jeweiliges Hydrolyseprodukt und/oder deren jeweiliges Kondensationsprodukt. Als Silanderivat kann beispielsweise 3-Glycidoxymethyltrimethoxysilan, 3-Glycidoxypropyltrihydroxysilan, 3-Glycidoxypropyldimethylhydroxysilan, 3-Glycidoxypropyldimethylethoxysilan, 3-Glycidoxypropylmethyldiethoxysilan, 3-Glycidoxypropyltrimethoxysilan, 3-Glycidoxypropyltriethoxysilan, 3-Glycidoxypropyldimethoxymethylsilan, 3-Gycidoxypropyldiethoxymethylsilan und/oder 2-(3,4-Epoxycyclohexyl)ethyltrimethoxysilan eingesetzt werden. Bevorzugt wird als Silanderivat 3-Glycidoxypropyltrimethoxysilan und/oder 3-Glycidoxypropyltriethoxysilan eingesetzt.
Die vorstehend beschriebene Zusammensetzung für die Herstellung der wenigstens einen Hartlackschicht umfasst das wenigstens eine kolloidale anorganische Oxid, Hydroxid, Oxidhydrat, Fluorid und/oder Oxyfluorid bevorzugt in einem Anteil aus einem Bereich von 3 Gew.-% bis 60 Gew.-%, weiter bevorzugt aus einem Bereich von 6 Gew.-% bis 58 Gew.-%, besonders bevorzugt aus einem Bereich von 9 Gew.-% bis 57 Gew.-% und ganz besonders bevorzugt aus einem Bereich von 13 Gew.-% bis 55 Gew.-%, jeweils bezogen auf das Gesamtgewicht der Zusammensetzung. Vorstehend genannte Anteile gelten sowohl bei der Verwendung einer einzigen Art eines kolloidalen anorganischen Oxids, Hydroxids, Oxidhydrats, Fluorids und/oder Oxyfluorids als auch bei der Verwendung einer Mischung voneinander verschiedener kolloidale anorganischer Oxide, Hydroxide, Oxidhydrate, Fluoride und/oder Oxyfluoride. Bei dem anorganischen Oxid, Hydroxid, Oxidhydrat kann es sich beispielsweise um ein Metalloxid, Metallhydroxid und/oder Metalloxidhydrat aus oder mit Titan, bevorzugt TiO₂, aus oder mit Silizium, bevorzugt SiO₂, aus oder mit Zirkonium, bevorzugt ZrO₂, aus oder mit Zinn, bevorzugt SnO₂, aus oder mit Antimon, bevorzugt Sb₂O₃. aus oder mit Aluminium, bevorzugt Al₂O₃ oder AlO(OH) und/oder Mischoxide und/oder um Mischungen hiervon handeln. Bevorzugt wird als anorganisches Oxid, Hydroxid, Oxidhydrat ein Metalloxid, Metallhydroxid, Metalloxidhydrat aus oder mit Titan, aus oder mit Silizium, aus oder mit Zirkonium und/oder Mischungen hiervon eingesetzt. Besonders bevorzugt wird als anorganisches Oxid, Hydroxid, Oxidhydrat ein Metalloxid, Metallhydroxid, Metalloxidhydrat aus oder mit Silizium, ganz besonders bevorzugt SiO₂ eingesetzt. Weiterhin bevorzugt weist das anorganische Oxid, Hydroxid, Oxidhydrat eine Kern-Hülle-Struktur auf. In diesem Fall umfasst der Kern bevorzugt ein Metalloxid, Metallhydroxid und/oder Metalloxidhydrat aus oder mit Titan, bevorzugt TiO₂, oder aus oder mit Zirkonium, bevorzugt ZrO₂, und die Hülle bevorzugt ein Metalloxid, Metallhydroxid und/oder Metalloxidhydrat aus oder mit Silizium. Bei dem anorganischen Fluorid kann es sich beispielsweise um Magnesiumfluorid handeln. Das wenigstens eine kolloidale anorganische Oxid, Hydroxid, Oxidhydrat, Fluorid und/oder Oxyfluorid weist jeweils bevorzugt eine mittlere Partikelgröße aus einem Bereich von 3 nm bis 70 nm, weiter bevorzugt aus einem Bereich von 6 nm bis 64 nm, besonders bevorzugt aus einem Bereich von 8 nm bis 56 nm und ganz besonders bevorzugt aus einem Bereich von 9 nm bis 52 nm, auf. Die vorstehend beschriebene Zusammensetzung fiir die Herstellung der wenigstens einen Hartlackschicht umfasst die wenigstens eine Epoxidverbindung bevorzugt in einem Anteil aus einem Bereich von 0,01 Gew.-% bis 14 Gew.-%, weiter bevorzugt aus einem Bereich von 0,07 Gew.-% bis 11 Gew.-%, besonders bevorzugt aus einem Bereich von 0,1 Gew.-% bis 6 Gew.-% und ganz besonders bevorzugt aus einem Bereich von 0,2 Gew.-% bis 3 Gew.-%, jeweils bezogen auf das Gesamtgewicht der Zusammensetzung. Vorstehend genannte Anteile gelten sowohl bei der Verwendung einer einzigen Art an Epoxidverbindung als auch für eine Mischung voneinander verschiedener Epoxidverbindungen. Die wenigstens eine Epoxidverbindung kann beispielsweise Digylcidylether, Ethylenglycoldiglycidylether, Propylenglycoldiglycolglycidylether, 1,4-Butandioldiglycidylether, 1,6-Hexandioldiglycidylether, Trimethylolpropantriglycidylether, Triglycidylglycerin und/oder Trimethylolethantriglycidylether umfassen. Bevorzugt umfasst die wenigstens eine Epoxidverbindung Trimethylolpropantriglycidylether. Butandioldiglycidylether und/oder 1,6-Hexandioldiglycidylether.
Die vorstehend beschriebene Zusammensetzung für die Herstellung der wenigstens einen Hartlackschicht umfasst das wenigstens eine Katalysatorsystem bevorzugt in einem Anteil aus einem Bereich von 0,04 Gew.-% bis 4 Gew.-%, weiter bevorzugt aus einem Bereich von 0,1 Gew.-% bis 3 Gew.-%, besonders bevorzugt aus einem Bereich von 0,2 Gew.-% bis 2 Gew.-% und ganz besonders bevorzugt aus einem Bereich von 0,3 Gew.-% bis 1 Gew.-%, jeweils bezogen auf das Gesamtgewicht der Zusammensetzung. Im wenigstens einen Katalysatorsystem liegt das Gewichtsverhältnis der wenigstens einen Lewis-Säure zu dem wenigstens einen thermolatenten Lewis-Base-Addukt bevorzugt bei 20:1 bis 2:1, weiter bevorzugt bei 18:1 bis 1:2, besonders bevorzugt 13:1 bis 1:1 und ganz besonders bevorzugt bei 6:1 bis 1:1. Als wenigstens eine Lewis-Säure können beispielsweise Ammoniumperchlorat. Magnesiumperchlorat, Sulfonsäuren und/oder Sulfonsäuresalze, wie Trifluormethansulfonsäuren und/oder deren Salze. eingesetzt werden. Bevorzugt wird als wenigstens eine Lewis-Säure Ammoniumperchlorat und/oder Magnesiumperchlorat eingesetzt. Als wenigstens ein thermolatentes Lewis-Säure-Base-Addukt kann beispielsweise wenigstens eine Metallkomplexverbindung, wie Aluminiumacetylacetonat, Eisenacetylacetonat und/oder Zinkacetylacetonat eingesetzt werden. Bevorzugt wird als wenigstens ein thermolatentes Lewis-Säure-Base-Addukt Aluminiumacetylacetonat und/oder Eisenacetylacetonat eingesetzt.

Die vorstehend beschriebene Zusammensetzung für die Herstellung der wenigstens einen Hartlackschicht kann des Weiteren wenigstens ein organisches Lösungsmittel und/oder Wasser umfassen. Die Anteile der einzelnen vorstehend beschriebenen Komponenten werden so eingesetzt, dass sie sich zu 100 Gew.-% in der für die Herstellung der wenigstens einen Hartlackschicht einzusetzenden Zusammensetzung addieren. Die wenigstens eine Hartlackschicht weist bevorzugt eine mittlere Dicke aus einem Bereich von 0,6 µm bis 7,1 µm, weiter bevorzugt aus einem Bereich von 0,8 µm bis 6,6 µm, besonders bevorzugt aus einem Bereich von 1,1 µm bis 5,8 µm und ganz besonders bevorzugt aus einem Bereich von 1,6 µm bis 4,9 µm auf. Die mittlere Dicke der wenigstens einen Hartlackschicht wird analog der mittleren Dicke der chemisch modifizierten Primer-Lackschicht bevorzugt mittels einer Messung der spektralen Reflektivität und/oder der spektralen Transmissivität bestimmt.

Alternativ zu vorstehend beschriebener Zusammensetzung für die Herstellung der wenigstens einen Hartlackschicht kann eine Zusammensetzung gemäß US 3,986,997 A, insbesondere gemäß US 3,986,997 A, Beispiel 7, Verwendung finden. Weiterhin alternativ kann für die Herstellung der wenigstens einen Hartlackschicht eine Zusammensetzung gemäß WO 98/46692 A1, insbesondere gemäß WO 98/46692 A1, Beispiel 21, oder gemäß US 6,538,092 B1, insbesondere gemäß US 6,538,092 B1, Beispiel 1, eingesetzt werden.

Bei dieser Ausführungsform wirkt die wenigstens eine Hartlackschicht bevorzugt nicht als Barriereschicht. Bevorzugt dient bei dieser Ausführungsform die wenigstens eine Hartlackschicht zur Erhöhung der Kratzbeständigkeit sowie zur Erhöhung der Chemikalienbeständigkeit des Brillenglases.

Bei dieser Ausführungsform umfasst das Brillenglas bevorzugt die nachstehenden Schichtenfolgen von Objekt zu Auge:
a) optional wenigstens eine Clean-Coat-Schicht / wenigstens eine Entspiegelungsschicht / wenigstens eine Hartlackschicht / wenigstens eine chemisch modifizierte Primer-Lackschicht, bevorzugt genau eine chemisch modifizierte Primer-Lackschicht / wenigstens eine photochrome Schicht / Vorderfläche Substrat // Rückfläche Substrat / wenigstens eine Hartlackschicht / wenigstens eine Entspiegelungsschicht / optional wenigstens eine Clean-Coat-Schicht oder
b) optional wenigstens eine Clean-Coat-Schicht / wenigstens eine Hartlackschicht / wenigstens eine chemisch modifizierte Primer-Lackschicht, bevorzugt genau eine chemisch modifizierte Primer-Lackschicht / wenigstens eine photochrome Schicht / Vorderfläche Substrat // Rückfläche Substrat / wenigstens eine Hartlackschicht / optional wenigstens eine Clean-Coat-Schicht.
Die vorstehend unter a) beschriebene Schichtenfolge ist besonders bevorzugt.

### II. Beschichtung umfassend wenigstens eine photochrome Schicht, wenigstens eine chemisch modifizierte Schicht und wenigstens eine Barriereschicht auf derselben Oberfläche des Substrats

Nachfolgend wird das gleichzeitige Vorliegen wenigstens einer chemisch modifizierten Schicht und wenigstens einer Barriereschicht, welche als wenigstens zwei separate Schichten jeweils auf derselben Oberfläche wie die wenigstens eine photochrome Schicht und in Bezug auf die wenigstens eine photochrome Schicht weiter vom Substrat abgewandt in einer Schichtenfolge vorliegen, anhand verschiedener Ausführungsformen näher erläutert. Umfasst hierbei die Vorderfläche des Substrats wenigstens eine photochrome Schicht, liegen die wenigstens eine chemisch modifizierte Schicht und die wenigstens eine Barriereschicht in Bezug auf die photochrome Schicht weiter objektseitig in der Schichtenfolge. Umfasst die Rückfläche des Substrats wenigstens eine photochrome Schicht, liegt die wenigstens eine chemisch modifizierte Schicht und die wenigstens eine Barriereschicht in Bezug auf die photochrome Schicht weiter augenseitig in der Schichtenfolge. Sowohl die Vorderfläche des Substrats als auch die Rückfläche des Substrats können wenigstens eine photochrome Schicht, wenigstens eine chemisch modifizierte Schicht und wenigstens eine Barriereschicht umfassen. Bevorzugt umfasst nur die Vorderfläche des Substrats wenigstens eine photochrome Schicht, wenigstens eine chemisch modifizierte Schicht und wenigstens eine Barriereschicht.

### II.1. Beschichtung umfassend wenigstens eine photochrome Schicht, wenigstens eine chemisch modifizierte Primer-Lackschicht und wenigstens eine Barriereschicht umfassend wenigstens eine Hartlackschicht auf derselben Oberfläche des Substrats

Bei einer bevorzugten Ausführungsform umfasst das Brillenglas wenigstens eine photochrome Schicht, wenigstens eine chemisch modifizierte Schicht und wenigstens eine Barriereschicht auf derselben Oberfläche des Substrats. Bei dieser bevorzugten Ausführungsform umfasst wenigstens eine Oberfläche des Substrats, bevorzugt die Vorderfläche des Substrats, wenigstens eine photochrome Schicht, wenigstens eine chemisch modifizierte Schicht und wenigstens eine Barriereschicht, wobei sowohl die wenigstens eine chemisch modifizierte Schicht als auch die wenigstens eine Barriereschicht in Bezug auf die wenigstens eine photochrome Schicht substratabgewandt in der Schichtenfolge vorliegen. Die wenigstens eine Barriereschicht ist hierbei bevorzugt die am weitesten substratabgewandte Schicht. Die wenigstens eine chemisch modifizierte Schicht umfasst bei dieser bevorzugten Ausführungsform vorzugsweise wenigstens eine chemisch modifizierte Primer-Lackschicht, welche bereits vorstehend im Abschnitt "I. Beschichtung umfassend wenigstens eine photochrome Schicht und wenigstens eine chemisch modifizierte Schicht auf derselben Oberfläche des Substrats", nachfolgend "I. chemisch modifizierte Schicht" genannt, beschrieben wurde. Die wenigstens eine Barriereschicht umfasst bei dieser bevorzugten Ausführungsform vorzugsweise wenigstens eine der Hartlackschichten, welche bereits vorstehend im Abschnitt "I. chemisch modifizierte Schicht" beschrieben wurden. Alternativ kann die wenigstens eine Barrierschicht auch wenigstens eine Primer-Lackschicht und wenigstens eine der Hartlackschichten, welche bereits vorstehend im Abschnitt "I. chemisch modifizierte Schicht" beschrieben wurden, umfassen. Im letzteren Fall ist die wenigstens eine Hartlackschicht in Bezug auf die wenigstens eine Primer-Lackschicht außenliegend, d.h. weiter substratabgewandt angeordnet. Zur Herstellung der wenigstens einen Primer-Lackschicht wird eine Beschichtungszusammensetzung umfassend
i) wenigstens eine wässrige aliphatische, cycloaliphatische, aromatische oder heteroaromatische Polyurethandispersion, wenigstens eine wässrige aliphatische, cycloaliphatische, aromatische oder heteroaromatische Polyharnstoffdispersion, wenigstens eine wässrige aliphatische, cycloaliphatische, aromatische oder heteroaromatische Polyurethan-Polyharnstoffdispersion und/oder wenigstens eine wässrige aliphatische, cycloaliphatische, aromatische oder heteroaromatische Polyesterdispersion, besonders bevorzugt wenigstens eine wässrige aliphatische Polyurethandispersion oder wenigstens eine wässrige aliphatische Polyesterdispersion und ganz besonders bevorzugt wenigstens eine wässrige aliphatische Polyurethandispersion,
ii) wenigstens ein Lösungsmittel sowie
iii) optional wenigstens ein Additiv
eingesetzt.

Der Anteil der wenigstens einen wässrigen aliphatischen, cycloaliphatischen, aromatischen oder heteroaromatischen Polyurethandispersion, der wenigstens einen wässrigen aliphatischen, cycloaliphatischen, aromatischen oder heteroaromatischen Polyharnstoffdispersion, der wenigstens einen wässrigen aliphatischen, cycloaliphatischen, aromatischen oder heteroaromatischen Polyurethan-Polyharnstoffdispersion und/oder der wenigstens einen wässrigen aliphatischen, cycloaliphatischen, aromatischen oder heteroaromatischen Polyesterdispersion in der zur Herstellung der wenigstens einen Primer-Lackschicht einsetzbaren Beschichtungszusammensetzung weist bevorzugt einen Gesamtanteil aus einem Bereich von 2 Gew.-% bis 38 Gew.-%, weiter bevorzugt aus einem Bereich von 4 Gew.-% bis 34 Gew.-%, weiter bevorzugt aus einem Bereich von 5 Gew.-% bis 28 Gew.-%, besonders bevorzugt aus einem Bereich von 6 Gew.-% bis 25 Gew.-% und ganz besonders bevorzugt aus einem Bereich von 7 Gew.-% bis 21 Gew.-%, jeweils bezogen auf das Gesamtgewicht der Beschichtungszusammensetzung, auf. Der Gesamtanteil umfasst hierbei sowohl den Anteil nur einer der vorstehend aufgeführten Dispersionen als auch eine Mischung aus vorstehend aufgeführten Dispersionen.
Bevorzugt umfasst die zur Herstellung der wenigstens einen Primer-Lackschicht einsetzbare Beschichtungszusammensetzung eine wässrige Polyurethandispersion, wobei das Polyurethan als Spacer bevorzugt eine Polyestereinheit aufweist. Bevorzugt einzusetzende wässrige Polyurethandispersionen sind in WO 94/17116 A1, insbesondere in WO 94/17116 A1, Seite 7, Zeilen 11 bis 33, offenbart. Die wässrige Polyurethandispersion kann mit einer anionisch stabilisierten Acrylemulsion stabilisiert sein, wie dies beispielsweise in WO 94/17116 A1, insbesondere WO 94/17116 A1, Seite 7, Zeilen 33 bis 35, offenbart ist.
Der Anteil des wenigstens einen Lösungsmittels in der zur Herstellung der wenigstens einen Primer-Lackschicht einsetzbaren Beschichtungszusammensetzung liegt bevorzugt in einem Bereich von 69 Gew.-% bis 98 Gew.-%, weiter bevorzugt in einem Bereich von 68 Gew.-% bis 99 Gew.-%, besonders bevorzugt in einem Bereich von 81 Gew.-% bis 97 Gew.-% und ganz besonders bevorzugt in einem Bereich von 89 Gew.-% bis 93 Gew.-%, jeweils bezogen auf das Gesamtgewicht der Beschichtungszusammensetzung. Vorstehend genannte Anteile gelten sowohl für die Verwendung einer Mischung voneinander verschiedener Lösungsmittel als auch für die Verwendung eines einzelnen Lösungsmittels.
Die zur Herstellung der wenigstens einen Primer-Lackschicht einsetzbare Beschichtungszusammensetzung umfasst bevorzugt wenigstens ein organisches Lösungsmittel mit einem niedrigen Siedepunkt von < 100°C bei Normaldruck und wenigstens ein organisches Lösungsmittel mit einem mittleren Siedepunkt aus einem Bereich von 100°C bis 150°C bei Normaldruck. Als organisches Lösungsmittel mit einem niedrigen Siedepunkt können beispielsweise Methanol, Ethanol, 1-Propanol, 2-Propanol, tert-Butanol, Aceton, Diethylether, tert-Butylmethylether, Tetrahydrofuran, Chloroform, 1,2-Dichlorethan, Methylenchlorid, Cyclohexan, Essigsäureethylester, n-Hexan, n-Heptan und/oder Methylethylketon eingesetzt werden. Bevorzugt wird als organisches Lösungsmittel mit einem niedrigen Siedepunkt Methanol, Ethanol, 1-Propanol und/oder 2-Propanol eingesetzt.
Als organisches Lösungsmittel mit einem mittleren Siedepunkt können beispielsweise 1-Methoxy-2-propanol, 1-Butanol, Dibutylether, 1,4-Dioxan, 3-Methyl-1-butanol, 4-Hydroxy-4-methyl-2-pentanon, Methylisobutylketon und/oder Toluol eingesetzt werden. Bevorzugt wird als Lösungsmittel mit einem mittleren Siedepunkt 1-Methoxy-2-propanol und/oder 4-Hydroxy-4-methyl-2-pentanon eingesetzt. Bevorzugt liegt das Gewichtsverhältnis des wenigstens einen organischen Lösungsmittels mit einem niedrigen Siedepunkt zu wenigstens einem organischen Lösungsmittel mit einem mittleren Siedepunkt bei 1:1, weiter bevorzugt bei 1:1,4, besonders bevorzugt bei 1:1,5 und ganz besonders bevorzugt bei 1:1,7.
Die zur Herstellung der wenigstens einen Primer-Lackschicht einsetzbare
Beschichtungszusammensetzung kann als Lösungsmittel neben wenigstens einem organischen Lösungsmittel mit einem niedrigen Siedepunkt und wenigstens einem organischen Lösungsmittel mit einem mittleren Siedepunkt zusätzlich Wasser umfassen. Hierbei liegt das Gewichtsverhältnis des wenigstens einen organischen Lösungsmittels mit einem niedrigen Siedepunkt zu wenigstens einem organischen Lösungsmittel mit einem mittleren Siedepunkt zu Wasser bevorzugt bei 2:7:1, weiter bevorzugt bei 2,5:6,5:1, weiter bevorzugt bei 3:6:1, besonders bevorzugt bei 3:5:1 und ganz besonders bevorzugt bei 3:6:1.
Die wenigstens eine Primer-Lackschicht weist bevorzugt eine mittlere Dicke aus einem Bereich von 300 nm bis 1200 nm, weiter bevorzugt aus einem Bereich von 340 nm bis 1150 nm, weiter bevorzugt aus einem Bereich von 390 nm bis 1120 nm, besonders bevorzugt aus einem Bereich von 440 nm bis 1110 nm und ganz besonders bevorzugt aus einem Bereich 470 nm bis 1100 nm auf. Unter mittlerer Dicke wird der arithmetische Mittelwert der an wenigstens drei Stellen vermessenen Dicke der jeweiligen Primer-Lackschicht verstanden. Die mittlere Dicke der wenigstens einen Primer-Lackschicht wird bevorzugt nach Applikation und Trocknung anhand eines wenigstens eine photochromen Schicht und wenigstens eine Primer-Lackschicht umfassenden Brillenglases bestimmt, wobei sich vorstehend genannte Schichten auf derselben Oberfläche des Substrats befinden und die wenigstens eine Primer-Lackschicht die am weitesten vom Substrat entfernte Schicht darstellt. Bevorzugt wird die mittlere Dicke der wenigstens einen Primer-Lackschicht mittels einer Messung der spektralen Reflektivität und/oder der spektralen Transmissivität bestimmt. Bevorzugt wird zur Bestimmung der mittleren Dicke der wenigstens einen Primer-Lackschicht ein optisches Spektrometer der Firma Filmetrics Inc. eingesetzt, z.B. das optische Spektrometer F20, F10-HC oder F10-AR. Besonders bevorzugt wird zur Bestimmung der mittleren Dicke der wenigstens einen Primer-Lackschicht das optische Spektrometer F10-HC (Firma Filmetrics Inc.) eingesetzt. Durch Beleuchtung des wenigstens eine photochrome Schicht und wenigstens eine Primer-Lackschicht umfassenden Brillenglases mit Weißlicht entstehen Interferenzspektren in Abhängigkeit von der geometrischen Schichtdicke und der Brechzahl der jeweiligen Schicht. Durch Einstrahlung von Weißlicht entstehen an optisch transparenten Schichten Interferenzen, da für bestimmte Wellenlängen der Gangunterschied exakt das Vielfache der optischen Schichtdicke beträgt. Die Berechnung der Schichtdicke erfolgt bevorzugt gemäß der Fast-Fourier-Transformation (FFT)-Methode. Bei der FFT-Methode wird die geometrische Schichtdicke aus der Periodizität des Interferenzspektrums berechnet. Alternativ kann die mittlere Dicke der wenigstens einen Primer-Lackschicht anhand wenigstens einer rasterelektronenmikroskopischen Querschiffaufnahme oder wenigstens einer transmissionselektronenmikroskopischen Querschliffaufnahme eines wenigstens eine photochrome Schicht und wenigstens eine Primer-Lackschicht umfassenden Brillenglases bestimmt werden. Hierfür wird die Dicke der jeweiligen Primer-Lackschicht an wenigstens drei Stellen ermittelt und das arithmetische Mittel gebildet.
Die zur Herstellung der wenigstens einen Primer-Lackschicht einsetzbare Beschichtungszusammensetzung wird auf wenigstens eine photochrome Schicht oder auf wenigstens eine weitere, auf der photochromen Schicht vorliegende und von dieser verschiedene, Schicht aufgebracht. Die Trocknung dieser Beschichtungszusammensetzung erfolgt bevorzugt durch Verdunstung des in der Beschichtungszusammensetzung vorhandenen wenigstens einen Lösungsmittels. Bevorzugt erfolgt die Trocknung dieser Beschichtungszusammensetzung bei einer Temperatur aus einem Bereich von 20°C bis 80°C, weiter bevorzugt aus einem Bereich von 23°C bis 78°C, besonders bevorzugt aus einem Bereich von 35°C bis 76°C und ganz besonders bevorzugt bei 45°C bis 75°C.
Die Beschichtungszusammensetzung zur Herstellung der wenigstens einen Primer-Lackschicht kann optional wenigstens ein Additiv umfassen. Das wenigstens eine Additiv kann hierbei ein Dispergiermittel, ein Antiabsetzmittel, ein Netzmittel, einschließlich einem Antikrateradditiv oder einem Verlaufsadditiv, ein Biozide, ein UV-Absorber und/oder eine Mischung hiervon sein. Die Beschichtungszusammensetzung zur Herstellung der wenigstens einen Primer-Lackschicht umfasst das optional vorhandene, wenigstens eine Additiv bevorzugt in einem Anteil aus einem Bereich von 0,01 Gew.-% bis 1,7 Gew.-%, weiter bevorzugt in einem Anteil aus einem Bereich von 0,07 Gew.-% bis 1,4 Gew.-%, besonders bevorzugt in einem Anteil aus einem Bereich von 0,09 Gew.-% bis 1,1 Gew.-% und ganz besonders bevorzugt in einem Anteil aus einem Bereich von 0,1 Gew.-% bis 0,7 Gew.-%, jeweils bezogen auf das Gesamtgewicht der Beschichtungszusammensetzung. Vorstehend genannte Anteile gelten sowohl für den Einsatz einer Art eines Additivs als auch für den Einsatz einer Mischung voneinander verschiedener Additive.
Die Anteile der einzelnen vorstehend beschriebenen Komponenten werden so eingesetzt, dass sie sich zu 100 Gew.-% in der für die Herstellung der wenigstens einen Primer-Lackschicht einzusetzenden Beschichtungszusammensetzung addieren.
Die zur Herstellung der wenigstens einen Primer-Lackschicht einsetzbare Beschichtungszusammensetzung wird bevorzugt mittels Tauchbeschichtung oder Schleuderbeschichtung auf wenigstens eine, mit wenigstens einer photochromen Schicht belegte Oberfläche des Substrats aufgebracht.

Bei dieser bevorzugten Ausführungsform umfasst bevorzugt wenigstens eine Oberfläche des Substrats, bevorzugt dessen Vorderfläche,
a) bevorzugt wenigstens eine photochrome Schicht, wenigstens eine Hartlackschicht 1, wenigstens eine chemisch modifizierte Primer-Lackschicht und wenigstens eine Hartlackschicht 2. Die wenigstens eine Hartlackschicht 2 dient hierbei bevorzugt der Erhöhung der Kratzbeständigkeit und der Erhöhung der Chemikalienbeständigkeit des Brillenglases. Zusätzlich kann die wenigstens eine Hartlackschicht 2 als Barriereschicht wirken, allerdings nur in denjenigen Bereichen der Hartlackschicht 2, welche intakt, d.h. ohne Beschädigungen, sind. Die wenigstens eine Hartlackschicht 2 kann im Laufe der Zeit kleinere Beschädigungen, wie beispielsweise Mikrokratzer, aufweisen, welche im Alltagsgebrauch der Brille im Laufe der Gesamttragedauer einer Brille von typischerweise zwei bis vier Jahren entstehen können. Im Bereich der kleineren Beschädigungen kann die wenigstens eine Hartlackschicht 2 nicht mehr als Barriereschicht wirken. Die wenigstens eine Hartlackschicht 1 dient hierbei bevorzugt als wenigstens eine Barriereschicht. Die wenigstens eine Hartlackschicht 1 dient weiterhin zusätzlich zur wenigstens einen Hartlackschicht 2 zur Erhöhung der Kratzbeständigkeit und zur Erhöhung der Chemikalienbeständigkeit, insbesondere in denjenigen Bereichen, in welchen die wenigstens eine Hartlackschicht 2 die kleineren Beschädigungen aufweist. Die mittlere Schichtdicke der wenigstens einen Hartlackschicht 1 und die mittlere Schichtdicke der wenigstens einen Hartlackschicht 2 können identisch oder verschieden voneinander sein. Bevorzugt ist die mittlere Schichtdicke der wenigstens einen Hartlackschicht 1 verschieden zu der mittleren Schichtdicke der wenigstens einen Hartlackschicht 2. Die mittlere Schichtdicke der wenigstens einen Hartlackschicht 1 liegt bevorzugt in einem Bereich von 1,7 µm bis 5,2 µm, weiter bevorzugt in einem Bereich von 2,1 µm bis 4,8 µm, besonders bevorzugt in einem Bereich von 2,3 µm bis 4,4 µm und ganz besonders bevorzugt in einem Bereich von 2,7 µm bis 4,1 µm. Die mittlere Schichtdicke der wenigstens einen Hartlackschicht 2 liegt bevorzugt in einem Bereich von 0,7 µm bis 4,2 µm, weiter bevorzugt in einem Bereich von 1,4 µm bis 3,9 µm, besonders bevorzugt in einem Bereich von 1,7 µm bis 3,3 µm und ganz besonders bevorzugt in einem Bereich von 2,0 µm bis 2,9 µm. Zur Herstellung der wenigstens einen Hartlackschicht 1 und zur Herstellung der wenigstens einen Hartlackschicht 2 kann die identische oder eine voneinander verschiedene Zusammensetzung eingesetzt werden. Bevorzugt wird zur Herstellung der wenigstens einen Hartlackschicht 1 und zur Herstellung der wenigstens einen Hartlackschicht 2 eine identische Zusammensetzung eingesetzt. Die mittlere Schichtdicke der wenigstens einen chemisch modifizierten Primer-Lackschicht liegt bevorzugt in einem Bereich von 0,4 µm bis 1,3 µm, weiter bevorzugt in einem Bereich von 0,5 µm bis 1,2 µm, besonders bevorzugt in einem Bereich von 0,6 µm bis 1,1 µm und ganz besonders bevorzugt in einem Bereich von 0,7 µm bis 1,0 µm. Die Hartlackschicht 2 ist in vorstehender Schichtenfolge a) die am weitesten von der Oberfläche des Substrats entfernt liegende Schicht, bevorzugt auf der Vorderfläche des Substrat in vorstehender Schichtenfolge a) die objektseitig äußerste Schicht. Insbesondere bevorzugt umfasst die Vorderfläche des Substrats eine Schichtfolge a) umfassend genau eine photochrome Schicht, genau eine Hartlackschicht 1, genau eine chemisch modifizierte Primer-Lackschicht und genau eine Hartlackschicht 2; oder
b) wenigstens eine photochrome Schicht, wenigstens eine chemisch modifizierte Primer-Lackschicht, wenigstens eine Hartlackschicht 1, wenigstens eine Primer-Lackschicht und wenigstens eine Hartlackschicht 2. Die wenigstens eine Hartlackschicht 2 dient hierbei bevorzugt der Erhöhung der Kratzbeständigkeit und der Erhöhung der Chemikalienbeständigkeit des Brillenglases. Wie vorstehend für die unter a) beschriebene Schichtenfolge ausgeführt, kann die wenigstens eine Hartlackschicht 2 in den unbeschädigten Bereichen zusätzlich als Barriereschicht wirken. Die wenigstens eine Hartlackschicht 1 dient hierbei bevorzugt als wenigstens eine Barriereschicht. Zusätzlich kann, wie vorstehend für die unter a) beschriebene Schichtenfolge ausgeführt, die wenigstens eine Hartlackschicht 1 zur Erhöhung der Kratzbeständigkeit und zur Erhöhung der Chemikalienbeständigkeit des Brillenglases beitragen. Die mittlere Schichtdicke der wenigstens einen Hartlackschicht 1 und die mittlere Schichtdicke der wenigstens einen Hartlackschicht 2 können identisch oder verschieden voneinander sein. Bevorzugt ist die mittlere Schichtdicke der wenigstens einen Hartlackschicht 1 identisch der mittleren Schichtdicke der wenigstens einen Hartlackschicht 2. Unter identischer mittlerer Schichtdicke ist auch eine Schichtdicke zu verstehen, welche ≤ 300 nm voneinander abweicht. Dieser Toleranzbereich gilt für alle als identisch bezeichneten mittleren Schichtdicken, insbesondere auch für die im Zusammenhang mit den Schichtenfolgen c) und d) genannten identischen mittleren Schichtdicken. Bevorzugt liegt die mittlere Schichtdicke der wenigstens einen Hartlackschicht 1 und die mittlere Schichtdicke der wenigstens einen Hartlackschicht 2 jeweils in einem Bereich von 1,6 µm bis 4,7 µm, weiter bevorzugt in einem Bereich von 1,7 µm bis 4,4 µm, besonders bevorzugt in einem Bereich von 1,8 µm bis 4,2 µm und ganz besonders bevorzugt in einem Bereich von 2,0 µm bis 4,1 µm. Die mittlere Schichtdicke der wenigstens einen chemisch modifizierten Primer-Lackschicht liegt bevorzugt in einem Bereich von 0,3 µm bis 1,4 µm, weiter bevorzugt in einem Bereich von 0,4 µm bis 1,3 µm, besonders bevorzugt in einem Bereich von 0,5 µm bis 1,2 µm und ganz besonders bevorzugt in einem Bereich von 0,6 µm bis 1,1 µm. Die mittlere Schichtdicke der wenigstens einen Primer-Lackschicht liegt bevorzugt in einem Bereich von 0,3 µm bis 1,6 µm, weiter bevorzugt in einem Bereich von 0,4 µm bis 1,2 µm, besonders bevorzugt in einem Bereich von 0,5 µm bis 1,0 µm und ganz besonders bevorzugt in einem Bereich von 0,6 µm bis 0,8 µm. Zur Herstellung der wenigstens einen Hartlackschicht 1 und zur Herstellung der wenigstens einen Hartlackschicht 2 kann die identische oder eine voneinander verschiedene Zusammensetzung eingesetzt werden. Bevorzugt wird zur Herstellung der wenigstens einen Hartlackschicht 1 und zur Herstellung der wenigstens einen Hartlackschicht 2 eine identische Zusammensetzung eingesetzt. Die Hartlackschicht 2 ist in vorstehender Schichtenfolge a) die am weitesten von der Oberfläche des Substrats entfernt liegende Schicht, bevorzugt auf der Vorderfläche des Substrat in vorstehender Schichtenfolge a) die objektseitig äußerste Schicht. Insbesondere bevorzugt umfasst die Vorderfläche des Substrats eine Schichtfolge a) umfassend genau eine photochrome Schicht, genau eine chemisch modifizierte Primer-Lackschicht, genau eine Hartlackschicht 1, genau eine Primer-Lackschicht und genau eine Hartlackschicht 2; oder
c) besonders bevorzugt wenigstens eine photochrome Schicht, wenigstens eine chemisch modifizierte Primer-Lackschicht 1, wenigstens eine Hartlackschicht 1, wenigstens eine chemisch modifizierte Primer-Lackschicht 2 und wenigstens eine Hartlackschicht 2. Die wenigstens eine Hartlackschicht 2 dient hierbei bevorzugt der Erhöhung der Kratzbeständigkeit und der Erhöhung der Chemikalienbeständigkeit des Brillenglases. Wie bereits vorstehend für die unter a) beschriebene Schichtenfolge offenbart, kann die wenigstens eine Hartlackschicht 2 zusätzlich als Barriereschicht wirken. Die wenigstens eine Hartlackschicht 1 dient hierbei bevorzugt als wenigstens eine Barriereschicht. Außerdem dient die wenigstens eine Hartlackschicht 1, wie vorstehend für die Schichtenfolge a) beschrieben, zur Erhöhung der Kratzbeständigkeit und zur Erhöhung der Chemikalienbeständigkeit. Auch hier kann zur Herstellung der wenigstens einen Hartlackschicht 1 und zur Herstellung der wenigstens einen Hartlackschicht 2 eine identische oder eine voneinander verschiedene Zusammensetzung eingesetzt werden. Bevorzugt ist die zur Herstellung der wenigstens einen Hartlackschicht 1 einsetzbare Zusammensetzung identisch der zur Herstellung der wenigstens einen Hartlackschicht 2 einsetzbaren Zusammensetzung. Die mittlere Schichtdicke der wenigstens einen Hartlackschicht 1 kann identisch zu oder verschieden von der mittleren Schichtdicke der wenigstens einen Hartlackschicht 2 sein. Bevorzugt ist die mittlere Schichtdicke der wenigstens einen Hartlackschicht 1 identisch der mittleren Schichtdicke der wenigstens einen Hartlackschicht 2. Bevorzugt liegt die mittlere Schichtdicke der wenigstens einen Hartlackschicht 1 und der wenigstens einen Hartlackschicht 2 jeweils in einem Bereich von 1,7 µm bis 4,6 µm, weiter bevorzugt in einem Bereich von 1,9 µm bis 4,2 µm, besonders bevorzugt in einem Bereich von 2,0 µm bis 4,0 µm und ganz besonders bevorzugt in einem Bereich von 2,1 µm bis 3,9 µm. Die Beschichtungszusammensetzung zur Herstellung der wenigstens einen chemisch modifizierten Primer-Lackschicht 1 und die Beschichtungszusammensetzung zur Herstellung der wenigstens einen chemisch modifizierten Primer-Lackschicht 2 kann identisch oder verschieden voneinander sein. Bevorzugt ist die Beschichtungszusammensetzung zur Herstellung der wenigstens einen chemisch modifizierten Primer-Lackschicht 1 identisch zu der Beschichtungszusammensetzung zur Herstellung der wenigstens einen chemisch modifizierten Primer-Lackschicht 2. Alternativ kann die Beschichtungszusammensetzung zur Herstellung der wenigstens einen chemisch modifizierten Primer-Lackschicht 1 und die Beschichtungszusammensetzung zur Herstellung der wenigstens einen chemisch modifizierten Primer-Lackschicht 2 bis auf die Art der wenigstens einen Base und/oder den Anteil der wenigstens einen Base identisch sein. Bevorzugt ist bei dieser Alternative die Beschichtungszusammensetzung zur Herstellung der wenigstens einen chemisch modifizierten Primer-Lackschicht 1 und die Beschichtungszusammensetzung zur Herstellung der wenigstens einen chemisch modifizierten Primer-Lackschicht 2 bis auf die Art der wenigstens einen Base identisch. Als wenigstens eine Base wird bei dieser Alternative bevorzugt Imidazol oder ein Imidazolderivat, besonders bevorzugt 1- Methylimidazol, 2-Methylimidazol, 4-Methylimidazol, 2,5-Dimethylimidazol und/oder 4-Hydroxymethylimidazol ausgewählt, wobei die Beschichtungszusammensetzung zur Herstellung der wenigstens einen chemisch modifizierten Primer-Lackschicht 1 und die Beschichtungszusammensetzung zur Herstellung der wenigstens einen chemisch modifizierten Primer-Lackschicht 2 jeweils eine voneinander verschiedene Base umfasst. Der Anteil der wenigstens einen Base in der Beschichtungszusammensetzung zur Herstellung der wenigstens einen chemisch modifizierten Primer-Lackschicht 1 und in der Beschichtungszusammensetzung zur Herstellung der wenigstens einen chemisch modifizierten Primer-Lackschicht 2 ist bevorzugt identisch und liegt bevorzugt jeweils in einem Bereich von 0,2 Gew.-% bis 2,7 Gew.-%, weiter bevorzugt in einem Bereich von 0,3 Gew.-% bis 2,1 Gew.-%, besonders bevorzugt in einem Bereich von 0,4 Gew.-% bis 1,7 Gew.-% und ganz besonders bevorzugt in einem Bereich von 0,5 Gew.-% bis 1,4 Gew.-%. Die mittlere Schichtdicke der chemisch modifizierten Primer-Lackschicht 1 und die mittlere Schichtdicke der chemisch modifizierten Primer-Lackschicht 2 kann identisch oder unterschiedlich sein. Bevorzugt ist die mittlere Schichtdicke der chemisch modifizierten Primer-Lackschicht 1 identisch zu der mittleren Schichtdicke der chemisch modifizierten Primer-Lackschicht 2. Die mittlere Schichtdicke der chemisch modifizierten Primer-Lackschicht 1 und die mittlere Schichtdicke der chemisch modifizierten Primer-Lackschicht 2 liegt jeweils bevorzugt in einem Bereich von 0,2 µm bis 1,7 µm, weiter bevorzugt in einem Bereich von 0,3 µm bis 1,2 µm, besonders bevorzugt in einem Bereich von 0,4 µm bis 1,1 µm und ganz besonders bevorzugt in einem Bereich von 0,5 µm bis 1,0 µm. Die Hartlackschicht 2 ist in vorstehender Schichtenfolge c) die am weitesten von der Oberfläche des Substrats entfernt liegende Schicht, bevorzugt auf der Vorderfläche des Substrats in vorstehender Schichtenfolge c) die objektseitig äußerste Schicht. Insbesondere bevorzugt umfasst die Vorderfläche des Substrats eine Schichtfolge c) umfassend genau eine photochrome Schicht, genau eine chemisch modifizierte Primer-Lackschicht 1, genau eine Hartlackschicht 1, genau eine chemisch modifizierte Primer-Lackschicht 2 und genau eine Hartlackschicht 2; oder
d) ganz besonders bevorzugt wenigstens eine photochrome Schicht, wenigstens eine Primer-Lackschicht, wenigstens eine Hartlackschicht 1, wenigstens eine chemisch modifizierte Primer-Lackschicht und wenigstens eine Hartlackschicht 2. Die wenigstens eine Hartlackschicht 2 dient hierbei bevorzugt der Erhöhung der Kratzbeständigkeit und der Erhöhung der Chemikalienbeständigkeit des Brillenglases. Die wenigstens eine Hartlackschicht 2 kann des Weiteren, wie vorstehend für die unter a) beschriebene Schichtenfolge ausgeführt, auch als Barriereschicht wirken. Die wenigstens eine Hartlackschicht 1 dient hierbei bevorzugt als wenigstens eine Barriereschicht. Außerdem kann die wenigstens eine Hartlackschicht 1, wie für die Schichtenfolge vorstehend unter a) beschrieben, auch zur Erhöhung der Kratzbeständigkeit und zur Erhöhung der Chemikalienbeständigkeit beitragen. Zur Herstellung der wenigstens einen Hartlackschicht 1 und zur Herstellung der wenigstens einen Hartlackschicht 2 kann die identische oder eine voneinander verschiedene Zusammensetzung eingesetzt werden. Bevorzugt ist die Zusammensetzung zur Herstellung der wenigstens einen Hartlackschicht 1 identisch der Zusammensetzung zur Herstellung der wenigstens einen Hartlackschicht 2. Die mittlere Schichtdicke der wenigstens einen Hartlackschicht 1 und die mittlere Schichtdicke der wenigstens einen Hartlackschicht 2 können identisch oder unterschiedlich sein. Bevorzugt ist die mittlere Schichtdicke der wenigstens einen Hartlackschicht 1 identisch der mittleren Schichtdicke der wenigstens einen Hartlackschicht 2. Die mittlere Schichtdicke der wenigstens einen Hartlackschicht 1 und die mittlere Schichtdicke der wenigstens einen Hartlackschicht 2 liegt jeweils bevorzugt in einem Bereich von 1,7 µm bis 4,7 µm, weiter bevorzugt in einem Bereich von 1,8 µm bis 4,3 µm, besonders bevorzugt in einem Bereich von 1,9 µm bis 4,1 µm und ganz besonders bevorzugt in einem Bereich von 2,0 µm bis 3,8 µm. Die mittlere Schichtdicke der wenigstens einen chemisch modifizierten Primer-Lackschicht liegt bevorzugt in einem Bereich von 0,1 µm bis 1,9 µm, weiter bevorzugt in einem Bereich von 0,2 µm bis 1,5 µm, besonders bevorzugt in einem Bereich von 0,3 µm bis 1,2 µm und ganz besonders bevorzugt in einem Bereich von 0,4 µm bis 1,1 µm. Die Hartlackschicht 2 ist in vorstehender Schichtenfolge d) die am weitesten von der Oberfläche des Substrats entfernt liegende Schicht, bevorzugt auf der Vorderfläche des Substrat in vorstehender Schichtenfolge d) und die objektseitig äußerste Schicht. Insbesondere bevorzugt umfasst die Vorderfläche des Substrats eine Schichtenfolge d) umfassend genau eine photochrome Schicht, genau eine Primer-Lackschicht, genau eine Hartlackschicht 1, genau eine chemisch modifizierte Primer-Lackschicht und genau eine Hartlackschicht 2.
Als Zusammensetzung zur Herstellung der wenigstens einen Hartlackschicht 1 oder der wenigstens einen Hartlackschicht 2 bzw. als Beschichtungszusammensetzung zur Herstellung der wenigstens einen chemisch modifizierten Primer-Lackschicht 1 und der wenigstens einen chemisch modifizierten Primer-Lackschicht 2 kann eine der in vorstehendem Abschnitt "I. chemisch modifizierte Schicht" beschriebene Zusammensetzungen zur Herstellung der Hartlackschicht bzw. eine der Beschichtungszusammensetzungen zur Herstellung der chemisch modifizierten Primer-Lackschicht verwendet werden. Als Beschichtungszusammensetzung für die Herstellung der wenigstens einen Primer-Lackschicht kann eine der vorstehend in diesem Abschnitt beschriebenen Zusammensetzungen eingesetzt werden.

Die Bestimmung der mittleren Schichtdicke der jeweiligen Schicht erfolgt bevorzugt nach deren Applikation und Trocknung mittels der vorstehend für die jeweilige Schicht beschriebenen Messmethode. Bei dieser bevorzugten Ausführungsform kann die mit wenigstens einer Barriereschicht bzw. die mit vorstehend aufgeführten bevorzugten Schichtenfolgen a), b), c) oder d) belegte Oberfläche des Substrats, bevorzugt dessen Vorderfläche, angrenzend an die wenigstens eine Barrierschicht bzw. angrenzend an die wenigstens eine Hartlackschicht 2 substratabgewandt weiterhin optional wenigstens eine Entspiegelungsschicht, wenigstens eine elektrisch leitfähige oder halbleitende Schicht, wenigstens eine Antibeschlagschicht und/oder wenigstens eine Clean-Coat-Schicht umfassen. Die wenigstens eine elektrisch leitfähige oder halbleitende Schicht kann hierbei als Bestandteil der wenigstens einen Entspiegelungsschicht vorliegen. Bevorzugt umfasst die Beschichtung substratabgewandt angrenzend an die am substratabgewandteste Barriereschicht bzw. angrenzend an die Hartlackschicht 2 wenigstens eine Entspiegelungsschicht, besonders bevorzugt wenigstens eine Entspiegelungsschicht und wenigstens eine Clean-Coat-Schicht, wobei in letzterem Fall die Clean-Coat-Schicht die am weitesten vom Substrat entfernte Schicht darstellt. In vorstehend genannten bevorzugten Schichtenfolgen a), b), c) und d) kann weiterhin zwischen den einzelnen explizit aufgeführten Schichten jeweils noch wenigstens eine weitere Schicht vorliegen. Bevorzugt ist in vorstehend genannten bevorzugten Schichtenfolgen a), b), c) und d) keine weitere Schicht zwischen den einzelnen explizit aufgeführten Schichten zugegen. Außerdem kann zwischen der Oberfläche des Substrats und der wenigstens einen photochromen Schicht noch wenigstens eine weitere Schicht vorhanden sein. Bevorzugt ist substratzugewandt und direkt angrenzend an die wenigstens eine photochrome Schicht wenigstens eine Primerschicht angeordnet, besonders bevorzugt die in EP 1 602 479 A1, insbesondere in EP 1 602 479 A1, Anspruch 1, offenbarte Polyurethanharzschicht. Sofern die Schichtenfolge wenigstens eine farbgebende Schicht und/oder wenigstens eine polarisierende Schicht umfasst gilt bevorzugt auch bei dieser bevorzugten Ausführungsform die vorstehend im Abschnitt "I. chemisch modifizierte Schicht" genannte Schichtenfolge zwischen der Oberfläche des Substrats, bevorzugt dessen Vorderfläche, und der wenigstens einen photochromen Schicht. Alternativ zur Aufbringung wenigstens einer farbgebenden Schicht auf wenigstens eine Oberfläche des Substrats, bevorzugt der Vorderfläche des Substrats, kann das Substrat auch bei dieser bevorzugten Ausführungsform eingefärbt sein.
Bei dieser bevorzugten Ausführungsform umfasst diejenige Oberfläche des Substrats, welche nicht mit wenigstens einer photochromen Schicht belegt ist, bevorzugt wenigstens eine Hartlackschicht, wenigstens eine Entspiegelungsschicht, wenigstens eine elektrisch leitfähige oder halbleitende Schicht, welche optional ein Teil der Entspiegelungsschicht ist, wenigstens eine Antibeschlagschicht und/oder wenigstens eine Clean-Coat-Schicht. Weiter bevorzugt umfasst diejenige Oberfläche des Substrats, welche nicht mit wenigstens einer photochromen Schicht belegt ist, wenigstens eine Hartlackschicht, besonders bevorzugt wenigstens eine Hartlackschicht und wenigstens eine Entspiegelungsschicht und ganz besonders bevorzugt wenigstens eine Hartlackschicht, wenigstens eine Entspiegelungsschicht und ganz besonders bevorzugt wenigstens eine Hartlackschicht, wenigstens eine Entspiegelungsschicht und wenigstens eine Clean-Coat-Schicht. Die wenigstens eine Entspiegelungsschicht bzw. bei Anwesenheit wenigstens einer Clean-Coat-Schicht ist die wenigstens eine Entspiegelungsschicht bzw. die wenigstens eine Clean-Coat-Schicht die am weitesten substratabgewandte Schicht. Alternativ kann diejenige Oberfläche des Substrats, welche nicht mit wenigstens einer photochromen Schicht belegt ist, wenigstens ein Dünnstglas und wenigstens eine Entspiegelungsschicht umfassen, wobei die wenigstens eine Entspiegelungsschicht in Bezug auf das wenigstens eine Dünnstglas bevorzugt substratabgewandt angeordnet ist. Weiterhin alternativ kann diejenige Oberfläche des Substrats, welche nicht mit wenigstens einer photochromen Schicht belegt ist, wenigstens ein Dünnstglas, wenigstens eine Entspiegelungsschicht und wenigstens eine Clean-Coat-Schicht umfassen, wobei die wenigstens eine Entspiegelungsschicht und die wenigstens eine Clean-Coat-Schicht in Bezug auf das wenigstens eine Dünnstglas bevorzugt substratabgewandt angeordnet sind und die Clean-Coat-Schicht bevorzugt die am weitesten vom Substrat entfernt liegende Schicht darstellt. Dünnstgläser werden im Zusammenhang mit der nachstehenden weiteren Ausführungsform in Abschnitt "II.2. Barriereschicht umfassend wenigstens ein Dünnstglas" genannt, näher beschrieben. Optional kann wenigstens eine Schicht, bevorzugt eine farbgebende Schicht, zwischen der Substratoberfläche und dem Dünnstglas vorliegen. Die Zusammensetzung zur Herstellung der wenigstens Hartlackschicht auf der Oberfläche des Substrats, welche keine photochrome Schicht umfasst, kann identisch oder verschieden zu der Zusammensetzung zur Herstellung der wenigstens einen Hartlackschicht sein, welche sich auf derselben Oberfläche des Substrats wie die wenigstens eine photochrome Schicht befindet. Umfasst die wenigstens eine photochrome Schicht umfassende Oberfläche des Substrats mehr als eine Hartlackschicht, wie oben in den bevorzugten Schichtenfolgen a), b), c) und d) dieser bevorzugten Ausführungsform beschrieben, kann die Zusammensetzung zur Herstellung der wenigstens einen Hartlackschicht auf derjenigen Oberfläche des Substrats, welche keine photochrome Schicht umfasst, identisch oder verschieden zu allen Zusammensetzungen zur Herstellung der Hartlackschichten oder identisch oder verschieden zu wenigstes einer der Zusammensetzungen der Hartlackschichten sein. Bevorzugt sind alle Zusammensetzungen, welche zur Herstellung aller Hartlackschichten des Brillenglases eingesetzt werden identisch. Dies erleichtert den Beschichtungsprozess zum einen dahingehend, dass nicht für jede aufzubringende Hartlackschicht unterschiedliche Zusammensetzungen angefertigt oder vorrätig gehalten werden müssen. Zum anderen kann die Hartlackschicht bei Verwendung identischer Zusammensetzungen auch mittels einer Tauchbeschichtung aufgebracht werden. Unabhängig davon, auf welcher der Oberflächen des Substrats sich die Hartlackschicht befindet, ist die Zusammensetzung zur Herstellung der wenigstens einen Hartlackschicht in Abschnitt "I. chemisch modifizierte Schicht" beschrieben.

### II.2. Beschichtung umfassend wenigstens eine photochrome Schicht, wenigstens eine chemisch modifizierte Primer-Lackschicht und wenigstens eine Barriereschicht umfassend wenigstens ein Dünnstglas auf derselben Oberfläche des Substrats

Bei einer weiteren Ausführungsform umfasst das Brillenglas wenigstens eine photochrome Schicht, wenigstens eine chemisch modifizierte Schicht und wenigstens eine Barriereschicht auf derselben Oberfläche des Substrats, wobei bei dieser Ausführungsform wenigstens ein Dünnstglas als Barriereschicht zum Einsatz kommt. Bei dieser weiteren Ausführungsform umfasst wenigstens eine Oberfläche des Substrats, bevorzugt dessen Vorderfläche, wenigstens eine photochrome Schicht, wenigstens eine chemisch modifizierte Schicht und wenigstens ein Dünnstglas, wobei sowohl die wenigstens eine chemisch modifizierte Schicht als auch das wenigstens eine Dünnstglas in Bezug auf die wenigstens eine photochrome Schicht substratabgewandt in der Schichtenfolge angeordnet sind. Das wenigstens eine Dünnstglas ist hierbei bevorzugt am weitesten substratabgewandt angeordnet. Die wenigstens eine chemisch modifizierte Schicht umfasst bei dieser weiteren Ausführungsform vorzugsweise wenigstens eine chemisch modifizierte Primer-Lackschicht, welche bereits vorstehend im Abschnitt "I. chemisch modifizierte Schicht" beschrieben wurde.

Das wenigstens eine Dünnstglas kann auf diversen Glaskompositionen, wie beispielsweise Borosilikatglas, Aluminium-Borosilikatglas oder alkalifreiem Borosilikatglas, basieren. Bevorzugt basiert das wenigstens eine Dünnstglas auf einem Borosilikatglas oder einem Aluminium-Borosilikatglas.

Das wenigstens eine Dünnstglas weist bevorzugt eine mittlere Dicke aus einem Bereich von 10 µm bis 1000 µm, weiter bevorzugt aus einem Bereich von 13 µm bis 760 µm, weiter bevorzugt aus einem Bereich von 16 µm bis 510 µm, besonders bevorzugt aus einem Bereich von 18 µm bis 390 µm und ganz besonders bevorzugt aus einem Bereich von 19 µm bis 230 µm auf. Insbesondere bevorzugt weist das wenigstens eine Dünnstglas eine mittlere Dicke aus einem Bereich von 21 µm bis 121 µm auf. Unter der mittleren Dicke des wenigstens einen Dünnstglases wird das arithmetische Mittel verstanden, sofern nicht anders angeben. Unterhalb einer mittleren Dicke von 10 µm ist das wenigstens eine Dünnstglas mechanisch zu instabil, um mit wenigstens der die wenigstens eine photochrome Schicht umfassenden Oberfläche des Substrats und gegebenenfalls mit der gegenüberliegenden Oberfläche des Substrats verbunden werden zu können, ohne dass das wenigstens eine Dünnstglas zerbricht. Oberhalb einer mittleren Dicke von 1000 µm kann das wenigstens eine Dünnstglas zu Brillengläsern führen, welche eine zu große Randdicke oder eine zu große Mittendicke aufweisen würden. Die mittlere Dicke des wenigstens einen Dünnstglases wird bevorzugt mit dem Messgerät Filmetrics F10-HC (Firma Filmetrics Inc.) vermessen. Die mittlere Dicke des wenigstens einen Dünnstglases wird bevorzugt anhand des wenigstens einen Dünnstglases vor dem Verbinden mit dem Substrat bestimmt. Alternativ kann die mittlere Dicke des wenigstens einen Dünnstglases mittels einer rasterelektronenmikroskopischen Aufnahme anhand eines Querschliffs bestimmt werden. Dies kann entweder anhand eines Querschliffs des wenigstens einen Dünnstglases oder anhand eines Querschliffs des Brillenglases umfassend auf wenigstens einer Oberfläche des Substrats wenigstens eine photochrome Schicht und wenigstens ein Dünnstglas oder anhand eines Querschliffs des Brillenglases umfassend auf wenigstens einer Oberfläche des Substrats wenigstens eine photochrome Schicht und wenigstens ein Dünnstglas und optional auf der gegenüberliegenden Oberfläche des Substrats wenigstens ein Dünnstglas. Hierzu wird jeweils die Dicke des jeweiligen wenigstens einen Dünnstglases an wenigstens drei Stellen bestimmt und statistisch gemittelt. Die relative Standardabweichung der Dickenverteilung des jeweiligen wenigstens einen Dünnstglases liegt bevorzugt bei 0.1% bis 100%, bevorzugt bei 0,2% bis 81%, besonders bevorzugt bei 0,3% bis 66% und ganz besonders bevorzugt bei 0,4% bis 24%. Die relative Standardabweichung in [%] ist dabei der Quotient aus berechneter Standardabweichung und mittlerer Dicke.

Das wenigstens eine Dünnstglas weist bevorzugt eine Oberflächenrauigkeit Ra von < 1 nm auf. Weiter bevorzugt liegt die Oberflächenrauigkeit Ra des wenigstens einen Dünnstglases in einem Bereich von 0,1 nm bis 0,8 nm, besonders bevorzugt in einem Bereich von 0,3 nm bis 0,7 nm und ganz besonders bevorzugt in einem Bereich von 0,4 nm bis 0,6 nm. Vorstehend genannte Werte für die Oberflächenrauigkeit Ra beziehen sich jeweils auf die Vorderfläche und die Rückfläche des wenigstens einen nicht umgeformten, planen Dünnstglases. Nach einer Umformung gelten vorstehend genannte Werte jeweils nur für diejenige Oberfläche des wenigstens einen Dünnstglases, welche nicht mit dem zur Umformung verwendeten Formkörper in Kontakt gebracht wurde. In Abhängigkeit vom zur Umformung eingesetzten Formkörper können vorstehend genannte Werte auch für die Oberfläche des wenigstens einen Dünnstglases gelten, welche mit dem zur Umformung eingesetzten Formkörper in Kontakt war. Die Oberflächenrauigkeit Ra des wenigstens einen Dünnstglases wird bevorzugt mittels Weißlichtinterferometrie, bevorzugt mit dem Gerät NewView 7100 (Firma Zygo Corporation), bestimmt. Weist das wenigstens eine Dünnstglas weitere oberflächliche Unebenheiten auf, so kann die flächenmäßige Analyse der jeweiligen Oberfläche weiterhin durch phasenmessende Deflektometrie, bevorzugt mit dem Gerät SpecGage (Firma 3D-Shape GmbH), bestimmt werden.

Die Transformationstemperatur T_{G} des wenigstens einen Dünnstglases liegt bevorzugt in einem Bereich von 400°C bis 800°C, weiter bevorzugt in einem Bereich von 430°C bis 770°C, besonders bevorzugt in einem Bereich von 490°C bis 740°C und ganz besonders bevorzugt in einem Bereich von 530°C bis 730°C. Die Transformationstemperatur T_{G} des wenigstens einen Dünnstglases kann jeweils mittels dynamisch-mechanischer Analyse, bevorzugt mit dem Messgerät DMA 8000 Dynamic Mechanical Analyzer (Firma Perkin Elmer Inc.), oder mittels dynamischer Differenzkalorimetrie, bevorzugt mit dem Messgerät DSC204CEL mit Controller TASC414/3A oder CC2001 (jeweils Firma Erich NETZSCH GmbH & Co. Holding KG), bestimmt werden. Bevorzugt wird die Transformationstemperatur T_{G} des wenigstens einen Dünnstglases mittels dynamischer Differenzkalorimetrie bestimmt.

Der Ausdehnungskoeffizient des wenigstens einen Dünnstglases liegt bevorzugt in einem Bereich von 1.8·10⁻⁶K⁻¹ bis 9,1·10⁻⁶K⁻¹, weiter bevorzugt in einem Bereich von 2,1·10⁻⁶K⁻¹ bis 8,8·10⁻⁶K⁻¹, besonders bevorzugt in einem Bereich von 2,6·10⁻⁶K⁻¹ bis 8,2·10⁻⁶K⁻¹ und ganz besonders bevorzugt in einem Bereich von 3,0·10⁻⁶K⁻¹ bis 7,4·10⁻⁶K⁻¹, jeweils bezogen auf den Temperaturbereich von 20°C bis 300°C. Der Ausdehnungskoeffizient des wenigstens einen Dünnstglases wird bevorzugt mittels Dilatometrie, bevorzugt mit dem Messgerät DIL 402 E/7 (Firma Erich NETZSCH GmbH & Co. Holding KG), erfasst. Das wenigstens eine Dünnstglas kann wenigstens ein Farbmittel oder kein Farbmittel umfassen. Bevorzugt umfasst das wenigstens eine Dünnstglas kein Farbmittel.

Weiterhin bevorzugt liegt die Transmission des wenigstens einen Dünnstglases ohne Farbmittel im Wellenlängenbereich von 400 nm bis 800 nm bei ≥ 90%. besonders bevorzugt bei ≥ 92%. Die Transmission des wenigstens einen Dünnstglases ohne Farbmittel wird bevorzugt mittels eines UV/VIS Spektralphotometers, bevorzugt mit dem Messgerät LAMBDA 950 UV/Vis/NIR Spectrophotometer (Firma Perkin Elmer Inc.), bestimmt.

Das wenigstens eine Dünnstglas weist bevorzugt einen Brechungsindex aus einem Bereich von n = 1,490 bis n = 1,950, weiter bevorzugt aus einem Bereich von n = 1,501 bis n = 1,799, besonders bevorzugt aus einem Bereich von n = 1.510 bis n = 1,755 und ganz besonders bevorzugt aus einem Bereich von n = 1.521 bis n= 1,747 auf, wobei der Brechungsindex für die Wellenlänge der Natrium-D-Linie angeben ist. Der Brechungsindex des wenigstens einen Dünnstglases ist bevorzugt an die jeweils direkt angrenzende Beschichtung angepasst. An den jeweiligen Grenzflächen Dünnstglas/ Beschichtung oder Dünnstglas/ Klebemittel oder Dünnstglas/ Substrat ist der Brechungsindexunterschied jeweils bevorzugt kleiner als 0,03, besonders bevorzugt kleiner als 0.01. Bevorzugt weisen das wenigstens eine Dünnstglas, das Substrat, das oder die optional verwendete(n) Klebemittel sowie sämtliche Beschichtungen, ausgenommen der mehrschichtigen Beschichtungen, wie beispielsweise einer mehrschichtigen Entspiegelungsschicht oder einer mehrschichtigen Verspiegelungsschicht, den gleichen Brechungsindex auf. Hierbei wird unter gleichem Brechungsindex ein Brechungsindexunterschied aus einem Bereich von 0,005 bis 0,015 toleriert. Der Brechungsindex wird vorzugsweise refraktometrisch an den jeweiligen Bestandteilen des Brillenglases separat bestimmt. Als Messgerät kann beispielsweise das Gerät Anton Paar Abbemat MW (Firma Anton Paar GmbH) eingesetzt werden.

Das wenigstens eine Dünnstglas weist bevorzugt eine Abbezahl aus einem Bereich von 20 bis 85, weiter bevorzugt aus einem Bereich von 23 bis 74, besonders bevorzugt aus einem Bereich von 29 bis 66 und ganz besonders bevorzugt aus einem Bereich von 33 bis 61 auf. Bevorzugt weisen das wenigstens eine Dünnstglas, das Substrat, das oder die optional verwendete(n) Klebemittel sowie sämtliche vorhandenen Beschichtungen, ausgenommen der mehrschichtigen Beschichtungen, wie beispielsweise einer mehrschichtigen Entspiegelungsschicht oder einer mehrschichtigen Verspiegelungsschicht, die gleiche Abbezahl auf. Unter gleicher Abbezahl wird ein Unterschied der Abbezahl aus einem Bereich von 0,1 bis 5, bevorzugt aus einem Bereich von 0,1 bis 2,1 toleriert. Je höher der Brechungsindex sämtlicher Bestandteile des Brillenglases ist, desto größere Unterschiede der Abbezahl werden toleriert. Bevorzugt weist das wenigstens eine Dünnstglas sowie das Substrat jeweils bei einem gegebenen Brechungsindex n eine möglichst hohe Abbezahl auf.

Das wenigstens eine Dünnstglas kann eine Transformationstemperatur T_{G} aus einem Bereich von 421°C bis 781°C, bevorzugt aus einem Bereich von 501°C bis 766°C, sowie für den Temperaturbereich von 20°C bis 300°C jeweils einen Ausdehnungskoeffizienten aus einem Bereich von 2,9·10⁻⁶K⁻¹ bis 8,3·10⁻⁶K⁻¹, bevorzugt aus einem Bereich von 3,1·10⁻⁶K⁻¹ bis 7,3·10⁻⁶K⁻¹, aufweisen.

Das wenigstens eine Dünnstglas kann eine mittlere Dicke aus einem Bereich von 17 µm bis 190 µm, bevorzugt aus einem Bereich von 24 µm bis 166 µm, sowie eine Transformationstemperatur T_{G} aus einem Bereich von 510°C bis 730°C. bevorzugt aus einem Bereich von 555°C bis 721°C, aufweisen. Dünnstgläser sind beispielsweise kommerziell erhältlich unter den Bezeichnungen D 263® T eco. D 263® LA eco, D 263® M, AF 32® eco, SCHOTT AS 87 eco, B 270® i, jeweils Firma Schott AG, Corning Willow Glass oder Corning Gorilla Glass, jeweils Firma Corning Inc.

Das wenigstens eine Dünnstglas kann mit unterschiedlichen Formgebungen, beispielsweise plan oder in einer bestimmten Form vorliegen. Im Zusammenhang mit der Form des wenigstens einen Dünnstglases wird unter "plan" verstanden, dass das wenigstens eine Dünnstglas keine makroskopisch sichtbare Biegung oder Krümmung aufweist. Weist das wenigstens eine Dünnstglas eine nicht plane Oberfläche auf, kann eine gewünschte Oberflächentopographie, beispielsweise sphärisch oder torisch, durch Verformen eines planen Dünnstglases auf einer entsprechenden Negativform erreicht werden. Beispielsweise kann das wenigstens eine Dünnstglas in Form einer sphärischen Linse mit einem bestimmten Krümmungsradius ausgestaltet sein. Zur Umformung eines planen Dünnstglases kann dieses zunächst, bevorzugt in Form eines Kreises, beispielsweise mittels eines Lasers, ausgeschnitten werden. Im Randbereich kann dieser ausgeschnittene Dünnstglaskreis anschließend abgeflammt werden, um eventuell entstandene Mikrorisse zu versiegeln. Um möglichst wenig Dünnstglasverschnitt zu erzeugen, wird der Ausschnitt des Dünnstglases bevorzugt so ausgewählt, dass nach dem Zusammenfügen des wenigstens einen Dünnstglases mit wenigstens der wenigstens eine photochrome Schicht umfassenden Oberfläche des Substrats bzw. optional nach dem Zusammenfügen des wenigstens einen Dünnstglases mit gegenüberliegenden Oberfläche des Substrats jeweils möglichst wenig Dünnstglasüberschuss entfernt werden muss. Das ausgeschnittene Dünnstglas kann beispielsweise auf eine zur Umformung geeignete Formschale gelegt, gegebenenfalls mittels einer Halterung befestigt, und vorzugsweise zusammen mit der Formschale, gegebenenfalls zusammen mit der Halterung, bis zur Transformationstemperatur T_{G} der Glaskomposition oder bis zu einer Temperatur, welche vorzugsweise maximal 20°C über der Transformationstemperatur T_{G} der Glaskomposition liegt, erwärmt werden. Die Formschale kann beispielsweise konvex oder konkav ausgeformt sein. Beispielsweise wird das ausgeschnittene Dünnstglas mit Hilfe eines zur Formschale passenden Gegenstücks in diese hinein gedrückt oder der Dünnstglasausschnitt wird unter Anlegen von Vakuum und/oder einfach mittels Schwerkraft in die Formschale geformt. Bevorzugt ist eine Umformung des wenigstens einen Dünnstglases unter Anlegen von Vakuum in eine Formschale. Das umgeformte Dünnstglas wird vorzugsweise komplett in oder über der Formschale abkühlen gelassen, bevor es von der Formschale getrennt wird. Die Umformung eines vorzugsweise planen Ausschnitts eines Dünnstglases erfolgt vorzugsweise in einer Schutzgasatmosphäre. Die Formschale kann hierbei als Negativform der bei der Umformung zu erzielenden Vorderfläche oder Rückfläche des wenigstens einen Dünnstglases ausgestaltet sein. Beispielsweise kann die Formschale sphärisch, asphärisch rotationssymmetrisch, torisch, atorisch, als symmetrische Freiformfläche oder unsymmetrische Freiformfläche ausgeformt sein. Alternativ kann das Dünnstglas in nicht zugeschnittener Form, vorzugsweise planer Form, mit Hilfe eines Thermoformprozesses umgeformt werden.

Der Krümmungsradius des wenigstens einen Dünnstglases liegt bevorzugt in einem Bereich von 10 mm bis unendlich, bevorzugt in einem Bereich von 20 mm bis 1600 mm, weiter bevorzugt in einem Bereich von 35 mm bis 1535 mm, weiter bevorzugt in einem Bereich von 56 mm bis 600 mm, besonders bevorzugt in einem Bereich von 66 mm bis 481 mm und ganz besonders bevorzugt in einem Bereich von 75 mm bis 376 mm. Ein Krümmungsradius des wenigstens einen Dünnstglases von unendlich entspricht hierbei einer planen Oberfläche. Bei nicht sphärischen Oberflächen des wenigstens einen Dünnstglases beziehen sich die vorstehend angegebenen Krümmungsradien jeweils auf eine angenäherte sphärische Form.

Die zur Umformung einsetzbare Formschale umfasst vorzugsweise ein Material, welches sich spanend bearbeiten lässt, keine Strukturen im umgeformten Dünnstglas hervorruft und darüber hinaus mit dem Dünnstglas keine untrennbare Verbindung eingeht. Die Formschale kann beispielsweise aus Graphit, einer Metall(legierung) oder einer Keramik, wie beispielsweise in WO 2006/050891 A2 beschrieben, bestehen. Die Formschale kann weiterhin oberflächenmodifiziert sein, so dass eine Anhaftung des Dünnstglases weiter minimiert wird.

Die Verbindung der wenigstens eine photochrome Schicht umfassenden Oberfläche des Substrats bzw. der gegenüberliegenden Oberfläche des Substrats jeweils mit dem wenigstens einen Dünnstglas erfolgt bevorzugt mittels eines Klebemittels. Das Klebemittel kann hierbei beispielsweise als Primer oder Ausgleichsmaterial für die die unterschiedliche Wärmeausdehnung der einzelnen Komponenten dienen. Weiterhin kann über die Auswahl des Klebemittels eine Angleichung eines gegebenenfalls vorhandenen Brechungsindexunterschieds n_{D} der einzelnen Komponenten zueinander erzielt werden. Vorzugsweise erfolgt hierbei nicht nur die Angleichung des Brechungsindex n_{D}, sondern auch die Angleichung der Abbe-Zahl, so dass die Änderung des Brechungsindex der einzelnen Komponenten über das sichtbare Spektrum hinweg gleich ist. Einsetzbare Klebemittel beispielsweise in der DE 10 2012 210 185 A1, der WO 2009/056196 A1 oder der WO 2015/121341 A1 beschrieben. Bevorzugt werden die einzelnen Komponenten mittels eines Klebemittels basierend auf einer aminkatalysierten Thiolhärtung von Epoxidharzen analog WO 2015/121341 A1, insbesondere analog Anspruch 1 der WO 2015/121341 A1, bei einer Temperatur aus einem Bereich von 20°C bis 80°C, bevorzugt aus einem Bereich von 40°C bis 70°C und besonders bevorzugt aus einem Bereich von 45°C bis 65°C miteinander verbunden. Geringfügige Abweichungen in der Oberflächentopographie der beiden zusammenzufügenden Oberflächen können beispielsweise mittels eines Klebemittels verfüllt werden. Für eine formschlüssige Verbindung der jeweiligen Oberflächen ist es bevorzugt, dass die Krümmungsradien der jeweils miteinander zu verbindenden Komponenten bevorzugt weniger als 1 mm, weiter bevorzugt in einem Bereich von 0,03 mm bis ≤ 0,8 mm, besonders bevorzugt in einem Bereich von 0.04 mm bis ≤ 0.7 mm und ganz besonders bevorzugt in einem Bereich von 0,05 mm bis ≤ 0,6 mm voneinander abweichen. Bevorzugt weisen das wenigstens eine Dünnstglas, die wenigstens eine photochrome Schicht umfassende Oberfläche des Substrats sowie optional die gegenüberliegende Oberfläche des Substrats vor dem Zusammenfügen mittels eines Klebemittels mit wenigstens einem Dünnstglas jeweils einen identischen Krümmungsradius, optional auch einen identischen Durchmesser, auf.

Das wenigstens eine Dünnstglas, welches auf derselben Oberfläche des Substrats wie die wenigstens eine photochrome Schicht am weitesten vom Substrat entfernt angeordnet ist, kann auf der substratabgewandten Oberfläche mit wenigstens einer Entspiegelungsschicht und/oder mit wenigstens einer Clean-Coat-Schicht belegt sein. Bevorzugt umfasst dieses wenigstens eine Dünnstglas wenigstens eine Entspiegelungsschicht und wenigstens eine Clean-Coat-Schicht, wobei die Clean-Coat-Schicht bevorzugt die am weitesten vom Substrat entfernte Schicht darstellt.

Die der wenigstens eine photochrome Schicht umfassenden Oberfläche gegenüberliegende Oberfläche des Substrats kann ebenfalls wenigstens ein Dünnstglas umfassen. Bevorzugt umfasst auch dieses Dünnstglas substratabgewandt wenigstens eine Entspiegelungsschicht und/oder wenigstens eine Clean-Coat-Schicht, besonders bevorzugt wenigstens eine Entspiegelungsschicht und wenigstens eine Clean-Coat-Schicht, wobei die wenigstens eine Clean-Coat-Schicht bevorzugt die am weitesten vom Substrat entfernte Schicht ist. Optional kann die gegenüberliegende Oberfläche zwischen dieser Oberfläche und dem wenigstens einen Dünnstglas wenigstens eine Schicht, beispielsweise eine farbgebende Schicht, umfassen.

Die Beschichtung der Vorderfläche und/oder der Rückfläche des wenigstens einen Dünnstglases kann jeweils mittels eines PVD-Verfahrens und/oder eines Schleuderbeschichtungsverfahrens erfolgen. Die anschließende Aushärtung der im Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.

Umfasst sowohl diejenige Oberfläche des Substrats, welche die wenigstens eine photochrome Schicht umfasst, als auch die gegenüberliegende Oberfläche des Substrats wenigstens ein Dünnstglas, weisen diese Dünnstgläser bevorzugt die gleiche Glaskomposition auf. Die mittlere Dicke dieser Dünnstgläser kann gleich oder verschieden sein, bevorzugt ist die mittlere Dicke dieser Dünnstgläser gleich. Die Oberflächentopographie dieser Dünnstgläser kann identisch oder verschieden voneinander sein, bevorzugt ist die Oberflächentopographie dieser Dünnstgläser verschieden voneinander.

Die der wenigstens eine photochrome Schicht umfassenden Oberfläche gegenüberliegende Oberfläche des Substrats umfasst bevorzugt wenigstens eine farbgebende Schicht, wenigstens eine Hartlackschicht, wenigstens eine Entspiegelungsschicht und/oder wenigstens eine Clean-Coat-Schicht. Besonders bevorzugt umfasst die der wenigstens eine photochrome Schicht umfassenden Oberfläche gegenüberliegende Oberfläche des Substrats wenigstens eine Hartlackschicht, wenigstens eine Entspiegelungsschicht und wenigstens eine Clean-Coat-Schicht, wobei bevorzugt die wenigstens eine Hartlackschicht die der am Substrat am nächsten liegende Schicht und die wenigstens eine Clean-Coat-Schicht die vom Substrat am weitesten entfernt liegende Schicht ist.

### II.3. Beschichtung umfassend wenigstens eine photochrome Schicht, wenigstens eine chemisch modifizierte Primer-Lackschicht und wenigstens eine Barriereschicht umfassend wenigstens eine Acrylat-Epoxidschicht

Bei einer besonders bevorzugten Ausführungsform umfasst das Brillenglas wenigstens eine photochrome Schicht, wenigstens eine chemisch modifizierte Primer-Lackschicht und wenigstens eine Barriereschicht umfassend wenigstens eine Acrylat-Epoxidschicht auf derselben Oberfläche des Substrats. Bei dieser bevorzugten Ausführungsform umfasst wenigstens eine Oberfläche des zu beschichtenden Substrats, bevorzugt dessen Vorderfläche, wenigstens eine photochrome Schicht, wenigstens eine Acrylat-Epoxidschicht und wenigstens eine chemisch modifizierte Schicht. Sowohl die wenigstens eine Acrylat-Epoxidschicht als auch die wenigstens eine chemisch modifizierte Schicht liegen bevorzugt in Bezug auf die wenigstens eine photochrome Schicht substratabgewandt in der Schichtenfolge vor. Die wenigstens eine chemisch modifizierte Schicht ist hierbei bevorzugt die am weitesten substratabgewandte Schicht. Besonders bevorzugt umfasst wenigstens eine Oberfläche des zu beschichtenden Substrats, bevorzugt dessen Vorderfläche, wenigstens eine photochrome Schicht, wenigstens eine Acrylat-Epoxidschicht, wenigstens eine chemisch modifizierte Schicht und wenigstens eine Hartlackschicht. Die wenigstens eine Acrylat-Epoxidschicht, die wenigstens eine chemisch modifizierte Schicht und die wenigstens eine Hartlackschicht liegen hierbei in Bezug auf die wenigstens eine photochrome Schicht bevorzugt substratabgewandt in der Schichtenfolge vor. Die wenigstens eine Acrylat-Epoxidschicht ist hierbei bevorzugt die dem zu Substrat nächsten liegende Schicht und die wenigstens eine Hartlackschicht die dem zu Substrat am entferntest liegende Schicht. Die wenigstens eine chemisch modifizierte Schicht umfasst bei dieser besonders bevorzugten Ausführungsform vorzugsweise wenigstens eine chemisch modifizierte Primer-Lackschicht, welche bereits vorstehend im Abschnitt "I. Beschichtung umfassend wenigstens eine photochrome Schicht und wenigstens eine chemisch modifizierte Schicht auf derselben Oberfläche des Substrats", nachfolgend "I. chemisch modifizierte Schicht" genannt, beschrieben wurde. Als wenigstens eine Hartlackschicht wird bevorzugt eine der vorstehend im Abschnitt "I. chemisch modifizierte Schicht" beschriebenen Hartlackschichten eingesetzt. Optional kann die die wenigstens eine photochrome Schicht umfassende Oberfläche des Substrats weiterhin wenigstens eine elektrisch leitfähige oder halbleitende Schicht, wenigstens eine Entspiegelungsschicht, wenigstens eine Antibeschlagschicht und/oder wenigstens eine Clean-Coat-Schicht umfassen. Die wenigstens eine elektrisch leitfähige oder halbleitende Schicht kann Bestandteil der wenigstens einen Entspiegelungsschicht sein. In Anwesenheit wenigstens einer Entspiegelungsschicht, wenigstens einer Antibeschlagschicht und/oder wenigstens einer Clean-Coat-Schicht ist die wenigstens eine Antibeschlagschicht oder die wenigstens eine Clean-Coat-Schicht die am weitesten vom Substrat entfernt liegende Schicht. Sofern nur eine der Oberflächen des Substrats eine photochrome Schicht und die gegenüberliegende Oberfläche keine photochrome Schicht umfasst, kann diese gegenüberliegende Oberfläche wenigstens eine Hartlackschicht, wenigstens eine Entspiegelungsschicht, wenigstens eine elektrisch leitfähige oder halbleitende Schicht, die optional Teil der wenigstens einen Entspiegelungsschicht ist, wenigstens eine farbgebende Schicht, wenigstens eine polarisierende Schicht, wenigstens eine Antibeschlagschicht und/oder wenigstens Clean-Coat-Schicht umfassen. Bevorzugt umfasst die gegenüberliegende Oberfläche wenigstens eine Hartlackschicht, besonders bevorzugt wenigstens eine Hartlackschicht und wenigstens eine Entspiegelungsschicht und ganz besonders bevorzugt wenigstens eine Hartlackschicht, wenigstens eine Entspiegelungsschicht und wenigstens eine Clean-Coat-Schicht. Hierbei ist die wenigstens eine Entspiegelungsschicht bzw. bei Anwesenheit wenigstens einer Clean-Coat-Schicht diese die am weitesten vom Substrat entfernt liegende Schicht. Alternativ kann die gegenüberliegende Oberfläche wenigstens ein Dünnstglas, bevorzugt wenigstens ein Dünnstglas und wenigstens eine Entspiegelungsschicht umfassen, wobei die wenigstens eine Entspiegelungsschicht in Bezug auf das wenigstens eine Dünnstglas substratabgewandt angeordnet ist. Weiterhin alternativ kann die gegenüberliegende Oberfläche wenigstens ein Dünnstglas, wenigstens eine Entspiegelungsschicht und wenigstens eine Clean-Coat-Schicht umfassen, wobei die wenigstens eine Entspiegelungsschicht und die wenigstens eine Clean-Coat-Schicht in Bezug auf das wenigstens eine Dünnstglas substratabgewandt angeordnet sind und die wenigstens eine Clean-Coat-Schicht die am weitesten substratabgewandte Schicht bildet. Dünnstgläser sind in vorstehendem Absatz "II.2. Barriereschicht umfassend wenigstens ein Dünnstglas" näher beschrieben. Optional kann die gegenüberliegende Oberfläche zwischen dieser Oberfläche und dem wenigstens einen Dünnstglas wenigstens eine farbgebende Schicht umfassen.

Zur Herstellung der wenigstens einen Barriereschicht umfassend wenigstens eine Acrylat-Epoxidschicht wird bevorzugt eine Beschichtungszusammensetzung umfassend
a) wenigstens ein Acrylat und/oder wenigstens ein Methacrylat,
b) wenigstens eine Epoxidverbindung,
c) wenigstens ein kolloidales anorganisches Oxid, Hydroxid, Oxidhydrat, Fluorid und/oder Oxyfluorid, welches optional oberflächenmodifiziert ist,
d) wenigstens ein Lösungsmittel.
e) wenigstens ein Photoinitiator und
f) optional wenigstens ein Additiv
eingesetzt.

Der Gesamtanteil an wenigstens einem Acrylat und/oder wenigstens einem Methacrylat in der zur Herstellung der wenigstens einen Barriereschicht umfassend wenigstens eine Acrylat-Epoxidschicht einsetzbaren Beschichtungszusammensetzung liegt bevorzugt in einem Bereich von 4,0 Gew.-% bis 25,0 Gew.-%, weiter bevorzugt in einem Bereich von 5,1 Gew.-% bis 24,7 Gew.-%, weiter bevorzugt in einem Bereich von 5,9 Gew.-% bis 24,2 Gew.-%, besonders bevorzugt in einem Bereich von 6,1 Gew.-% bis 23,9 Gew.-% und ganz besonders bevorzugt in einem Bereich von 6,5 Gew.-% bis 23,1 Gew.-%, jeweils bezogen auf das Gesamtgewicht der Beschichtungszusammensetzung. Der Gesamtanteil bezieht sich hierbei auf die Verwendung wenigstens einer Art eines Acrylats oder auf die Verwendung wenigstens einer Art eines Methacrylats oder auf die Verwendung einer Mischung aus wenigstens einer Art eines Acrylats und wenigstens einer Art eines Methacrylats.

Bei dem wenigstens einen Acrylat bzw. dem wenigstens einen Methacrylat handelt es sich bevorzugt um ein Acrylat mit wenigstens zwei Acrylatgruppen bzw. ein Methacrylat mit wenigstens zwei Methacrylatgruppen. Als wenigstens ein Acrylat und/oder als wenigstens ein Methacrylat kann auch eine Mischung verschieden funktionaler Acrylate und/oder verschieden funktionaler Methacrylate vorliegen. Beispielsweise kann wenigstens ein difunktionales Acrylat mit wenigstens einem tetrafunktionalen Acrylat oder wenigstens zwei voneinander verschiedene trifunktionale Acrylate mit wenigstens einem tetrafunktionalen Methacrylat oder wenigstens ein trifunktionales Methacrylat mit wenigstens einem weiteren, von diesem verschiedenen, trifunktionalen Methacrylat jeweils in Mischung vorliegen. Beispielsweise kann als difunktionales Acrylat oder als difunktionales Methacrylat Ethylenglykoldiacrylat (CAS Nr. 2274-11-5), Diethylenglykoldiacrylat (CAS Nr. 2274-11-5), Triethylenglykoldiacrylat (CAS Nr. 1680-21-3). Tetraethylenglykoldiacrylat (CAS Nr. 17831-71-9). Ethylenglykoldimethacrylat (CAS Nr. 97-90-5), Diethylenglykoldimethacrylat (CAS Nr. 2358-84-1), Triethylenglykoldimethacrylat (CAS Nr. 109-16-0), Tetraethylenglycoldimethacrylat (CAS Nr. 109-17-1), Polyethylenglykol 200 dimethacrylat (CAS Nr. 25852-47-2), Dipropylenglykoldiacrylat (CAS Nr. 57472-68-1), Tripropylenglykoldiacrylat (CAS Nr. 42978-66-5), 1,3-Butandioldiacrylat (CAS Nr. 19485-03-1), 1,4-Butandioldiacrylat (CAS Nr. 1070-70-8), 1,6-Hexandioldiacrylat (CAS Nr. 13048-33-4), Neopentylglycoldiacrylat (CAS Nr. 2223-82-7), 1,3-Butandioldimethacrylat (CAS Nr. 1189-08-8), 1,4-Butandioldimethacrylat (CAS Nr. 2082-81-7), 1,6-Hexandioldimethacrylat (CAS Nr. 6606-59-3), 3-(Acryloyloxy)-2-hydroxypropylmethacrylat (CAS Nr. 1709-71-3), Poly(ethylenglykol)diacrylat (CAS Nr. 26570-48-9), Bisphenol-A-ethoxylatdiacrylat (CAS Nr. 64401-02-1), Tricyclo[5.2.1.0^{2,6}]decan-dimethanoldiacrylat (CAS Nr. 42594-17-2), und/oder Mischungen davon eingesetzt werden.

Bevorzugt wird als difunktionales Acrylat oder als difunktionales Methacrylat Polyethylenglykol 200 dimethacrylat, Ethylenglykoldimethacrylat, Diethylenglykoldimethacrylat, 1,4-Butandioldimethacrylat und/oder Mischungen davon, besonders bevorzugt Ethylenglykoldimethacrylat, Diethylenglykoldimethacrylat und/oder Mischungen davon eingesetzt.

Beispielsweise kann als trifunktionales Acrylat oder als trifunktionales Methacrylat Trimethylolpropantrimethacrylat (CAS Nr. 3290-92-4), Trimethylolpropantriacrylat (CAS Nr. 15625-89-5), Pentaerythritoltriacrylat (CAS Nr. 3524-68-3), Pentaerythritolpropoxylattriacrylat (CAS Nr. 145611-81-0), Trimethylolpropanpropoxylattriacrylat (CAS Nr. 53879-54-2), Trimethylolpropanethoxylattriacrylat (CAS Nr. 28961-43-5), Tris[2-(acryloyloxy)ethyl]isocyanurat (CAS Nr. 40220-08-4) und/oder Mischungen davon eingesetzt werden.

Bevorzugt wird als trifunktionales Acrylat oder als trifunktionales Methacrylat Trimethylolpropantrimethacrylat, Pentaerythritoltriacrylat und/oder Mischungen davon, besonders bevorzugt wird Trimethylolpropantrimethacrylat eingesetzt.

Beispielsweise kann als tetrafunktionales Acrylat oder als tetrafunktionales Methacrylat Di(trimethylolpropan)tetraacrylat (CAS Nr. 94108-97-1), Pentaerythritoltetraacrylat (CAS Nr. 4986-89-4), Pentaerythritoltetramethacrylat (CAS Nr. 3253-41-6) und/oder Mischungen davon eingesetzt werden. Bevorzugt wird als tetrafunktionales Acrylat oder als tetrafunktionales Methacrylat Di(trimethylolpropan)tetraacrylat, Pentaerythritoltetramethacrylat und/oder Mischungen davon, besonders bevorzugt Di(trimethylolpropan)tetraacrylat eingesetzt.

Beispielsweise kann als pentafunktionales Acrylat oder als pentafunktionales Methacrylat Dipentaerythritolpentaacrylat (CAS Nr. 60506-81-2) zum Einsatz kommen.

Wenigstens ein monofunktionales Acrylat und/oder wenigstens monofunktionales Methacrylat wird optional in Mischung mit wenigstens einem wenigstens difunktionalen Acrylat und/oder mit wenigstens einem wenigstens difunktionalen Methacrylat eingesetzt. In einer derartigen Mischung kann beispielsweise als monofunktionales Acrylat oder als monofunktionales Methacrylat Acrylsäure (CAS Nr. 79-10-7), Methacrylsäure (CAS Nr. 79-41-4), Methylacrylat (CAS Nr. 96-33-3), Methylmethacrylat (CAS Nr. 80-62-6). Ethylaclylat (CAS Nr. 140-88-5), Ethylmethacrylat (CAS Nr. 97-63-2). Ethyl-2-ethylacrylat (CAS Nr. 3070-65-3), (2,2-dimethy)-1,3-dioxolan-4-yl)methylmethacrylat (CAS Nr. 7098-80-8), 2-Phenoxyethylacrylat (CAS Nr. 48145-04-6), Isobornylacrylat (CAS Nr. 5888-33-5), 2-(2-Methoxyethoxy)ethylmethacrylat (CAS Nr. 45103-58-0), 4-Acryloylmorpholin (CAS Nr. 5117-12-4), Dodecylacrylat (CAS Nr. 2156-97-0), Isodecylacrylat (CAS Nr. 1330-61-6), Decylacrylat (CAS Nr. 2156-96-9), n-Octylacrylat (CAS Nr. 2499-59-4), Isooctylacrylat (CAS Nr. 29590-42-9). Octadecylacrylat (CAS Nr. 4813-57-4), Tetrahydrofurfurylacrylat (CAS Nr. 2399-48-6), 2-(2-Ethoxyethoxy)ethylacrylat (CAS Nr. 7328-17-8), 4-tert-Butylcyclohexylacrylat (CAS Nr. 84100-23-2), Methoxypoly(ethylenglycol)monoacrylat (CAS Nr. 32171-39-4), Phenoxypolyethylenglycolacrylat (CAS Nr. 56641-05-5), Mono-2-(acryloyloxy)ethylsuccinat (CAS Nr. 50940-49-3), Allylmethacrylat (CAS Nr. 96-05-9) oder Gemische davon eingesetzt werden.

In einer derartigen Mischung wird bevorzugt als monofunktionales Acrylat oder als monofunktionales Methacrylat Acrylsäure, Methacrylsäure, Methylacrylat, Methylmethacrylat, Ethylacrylat, Ethylmethacrylat, 2-Phenoxyethylacrylat, Dodecylacrylat oder Mischungen davon, besonders bevorzugt werden Methacrylsäure, Methylmethacrylat, Ethylmethacrylat oder Gemische davon eingesetzt. Bevorzugt liegt in einer derartigen Mischung das Gewichtsverhältnis von monofunktionalem Acrylat und/oder monofunktionalem Methacrylat zu einem wenigstens difunktionalen Acrylat und/oder difunktionalen Methacrylat bei 1:7, weiter bevorzugt bei 1:11, besonders bevorzugt bei 1:17 und ganz besonders bevorzugt bei 1:21.

Der Gesamtanteil an wenigstens einer Epoxidverbindung in der zur Herstellung der wenigstens einen Barriereschicht umfassend wenigstens eine Acrylat-Epoxidschicht einsetzbaren Beschichtungszusammensetzung liegt bevorzugt in einem Bereich von 20,0 Gew.-% bis 25,0 Gew.-%, weiter bevorzugt in einem Bereich von 21,3 Gew.-% bis 24,8 Gew.-%, weiter bevorzugt in einem Bereich von 21,9 Gew.-% bis 23,9 Gew.-%, besonders bevorzugt in einem Bereich von 22,2 Gew.-% bis 23,7 Gew.-% und ganz besonders bevorzugt in einem Bereich von 22,6 Gew.-% bis 23,4 Gew.-%, jeweils bezogen auf das Gesamtgewicht der Beschichtungszusammensetzung. Der Gesamtanteil bezieht sich hierbei auf die Verwendung wenigstens einer Art einer Epoxidverbindung oder auf die Verwendung einer Mischung voneinander verschiedener Epoxidverbindungen.

Bei der wenigstens einen Epoxidverbindung handelt es sich bevorzugt um eine Epoxidverbindung mit wenigstens zwei Epoxidgruppen. Es kann auch eine Mischung von Epoxidverbindungen mit unterschiedlicher Anzahl an Epoxidgruppen und/oder eine Mischung von Epoxidverbindungen mit gleicher Anzahl an Epoxidgruppen, aber unterschiedlicher Art an Epoxidverbindung. Beispielsweise kann wenigstens eine trifunktionale Epoxidverbindung mit wenigstens einer tetrafunktionalen Epoxidverbindung oder eine tetrafunktionale Epoxidverbindung mit wenigstens einer weiteren, von dieser verschiedenen, tetrafunktionalen Epoxidverbindung oder wenigstens eine difunktionale Epoxidverbindung mit wenigstens einer trifunktionalen Epoxidverbindung und mit wenigstens einer tetrafunktionalen Epoxidverbindung jeweils in Mischung vorliegen.

Als difunktionale Epoxidverbindung kann beispielsweise Diglycidylether (CAS Nr. 2238-07-5). Ethylenglycoldiglycidylether (CAS Nr. 2224-15-9), Diethylenglykoldiglycidylether (CAS Nr. 4206-61-5), Propylenglykoldiglycidylether (CAS Nr. 16096-30-3), Dipropylenglycoldiglycidylether (CAS Nr. 41638-13-5), 1,4-Butandioldiglycidylether (CAS Nr. 2425-79-8), 1.4-Cyclohexandimethanoldiglycidylether (CAS Nr. 14228-73-0), Neopentylglycoldiglycidylether (CAS Nr. 17557-23-2), Polypropylenglycol(400)diglycidylether (CAS Nr. 26142-30-3), 1,6-Hexandioldiglycidylether (CAS Nr. 16096-31-4), Bisphenol A-diglycidylether (CAS Nr. 1675-54-3), Bisphenol-A-propoxylat-diglycidylether (CAS Nr. 106100-55-4), Polyethylenglykoldiglycidylether (CAS Nr. 72207-80-8), Glyceroldiglycidylether (CAS Nr. 27043-36-3), Resorcinoldiglycidylether (CAS Nr. 101-90-6) und/oder Mischungen davon in der Beschichtungszusammensetzung zur Herstellung der wenigstens einen Barriereschicht umfassend wenigstens eine Acrylat-Epoxidschicht zum Einsatz kommen.

Bevorzugt wird als difunktionale Epoxidverbindung Diglycidylether, Ethylenglycoldiglycidylether, Diethylenglykoldiglycidylether, 1,4-Butandioldiglycidylether, Polyethylenglykoldiglycidylether, Polypropylenglycol(400)diglycidylether und/oder Mischungen hiervon, besonders bevorzugt Ethylenglycoldiglycidylether, Diethylenglykoldiglycidylether, 1,4-Butandioldiglycidylether, Polyethylenglykoldiglycidylether und/oder Mischungen hiervon in der Beschichtungszusammensetzung eingesetzt.

Als trifunktionale Epoxidverbindung kann beispielsweise Trimethylolethantriglycidylether (CAS Nr. 68460-21-9), Trimethylolpropantriglycidylether (CAS Nr. 30499-70-8), Triphenylolmethantriglycidylether (CAS Nr. 66072-38-6), Tris(2,3-epoxypropyl)isocyanurat (CAS Nr. 2451-62-9), Tris(4-hydroxyphenyl)methantriglycidylether (CAS Nr. 66072-38-6), 1,1,1-Tris(4-hydroxyphenyl)ethantri-glycidylether (CAS Nr. 87093-13-8), Glyceroltriglycidylether (CAS Nr. 13236-02-7), Glycerolpropoxylattriglycidylether (CAS Nr. 37237-76-6), N,N-Diglycidyl-4-glycidyloxyanilin (CAS Nr. 5026-74-4) und/oder Mischungen davon in der Beschichtungszusammensetzung zur Herstellung der wenigstens einen Barriereschicht umfassend wenigstens eine Acrylat-Epoxidschicht zum Einsatz kommen.

Bevorzugt wird als trifunktionale Epoxidverbindung Trimethylolpropantriglycidylether, Tris(2,3-epoxypropyl)isocyanurat, Glyceroltriglycidylether, Glycerolpropoxylattriglycidylether und/oder Mischungen hiervon, besonders bevorzugt Tris(2,3-epoxypropyl)isocyanurat, Glyceroltriglycidylether und/oder Mischungen hiervon in der Beschichtungszusammensetzung eingesetzt.

Als tetrafunktionale Epoxidverbindung kann beispielsweise Pentaerythritoltetraglycidylether, (CAS Nr. 3126-63-4), Dipentaerythritoltetraglycidylether, Tetraglycidylbenzylethan, Sorbitoltetraglycidylether, Tetraglycidyldiaminophenylmethan, Tetraglycidylbisaminomethylcyclohexan und/oder Mischungen davon in der Beschichtungszusammensetzung zur Herstellung der wenigstens einen Barriereschicht umfassend wenigstens eine Acrylat-Epoxidschicht zum Einsatz kommen.

Bevorzugt wird als tetrafunktionale Epoxidverbindung Pentaerythritoltetraglycidylether, (CAS Nr. 3126-63-4). Dipentaerythritoltetraglycidylether, Sorbitoltetraglycidylether und/oder Mischungen davon, besonders bevorzugt Pentaerythritoltetraglycidylether, (CAS Nr. 3126-63-4), Dipentaerythritoltetraglycidylether und/oder Mischungen davon in der Beschichtungszusammensetzung eingesetzt. Wenigstens eine monofunktionale Epoxidverbindung wird optional in Mischung mit wenigstens einer wenigstens difunktionalen Epoxidverbindung eingesetzt. Als monofunktionale Epoxidverbindung kann beispielsweise Ethylglycidylether (CAS Nr. 4016-11-9), n-Butylglycidylether (CAS Nr. 2426-08-6), 2-Ethylhexylglycidylether (CAS Nr. 2461-15-6), C8-C10-Glycidylether (CAS Nr. 68609-96-1), C12-C14-Glycidylether (CAS Nr. 68609-97-2). Cresylglycidylether (CAS Nr. 2210-79-9), p-tert-Butylphenylglycidylether (CAS Nr. 3101-60-8), Nonylphenylglycidylether (CAS Nr. 147094-54-0), Benzylglycidylether (CAS Nr. 2930-05-4), Phenylglycidylether (CAS Nr. 122-60-1), Bisphenol A-(2,3-dihydroxypropyl)glycidylether (CAS Nr. 76002-91-0) und/oder Gemische hiervon in vorstehend beschriebener Mischung zum Einsatz kommen. Bevorzugt wird als monofunktionale Epoxidverbindung Ethylglycidylether, n-Butylglycidylether, 2-Ethylhexylglycidylether und/oder Gemische hiervon in vorstehend beschriebener Mischung eingesetzt. Wird eine Mischung aus wenigstens einer monofunktionalen Epoxidverbindung und wenigstens einer wenigstens difunktionalen Epoxidverbindung eingesetzt, liegt das Gewichtsverhältnis von der wenigstens einen monofunktionalen Epoxidverbindung zu der wenigstens einen wenigstens difunktionalen Epoxidverbindung bevorzugt bei 1:2, weiter bevorzugt bei 1:9, besonders bevorzugt bei 1:13 und ganz besonders bevorzugt bei 1:17.

Besonders bevorzugt umfasst die Beschichtungszusammensetzung zur Herstellung der wenigstens einen Barriereschicht umfassend wenigstens eine Acrylat-Epoxidschicht wenigstens ein trifunktionales Acrylat und/oder wenigstens ein trifunktionales Methacrylat, bevorzugt wenigstens ein tetrafunktionales Acrylat und/oder wenigstens ein tetrafunktionales Methacrylat, und wenigstens eine difunktionale Epoxidverbindung, bevorzugt eine trifunktionale Epoxidverbindung. Der Gesamtanteil an wenigstens einem trifunktionalen Acrylat und/oder wenigstens einem trifunktionalen Methacrylat, bevorzugt wenigstens einem tetrafunktionalen Acrylat und/oder wenigstens einem tetrafunktionalen Methacrylat, und wenigstens einer difunktionalen Epoxidverbindung, bevorzugt einer trifunktionalen Epoxidverbindung liegt herbei bevorzugt in einem Bereich von 21 Gew.-% bis 40 Gew.-%, weiter bevorzugt in einem Bereich von 23 Gew.-% bis 39 Gew.-%, besonders bevorzugt in einem Bereich von 25 Gew.-% bis 38 Gew.-% und ganz besonders bevorzugt 28 Gew.-% bis 37 Gew.-%, jeweils bezogen auf das Gesamtgewicht der Beschichtungszusammensetzung. Das Verhältnis von wenigstens einem trifunktionalen Acrylat und/oder wenigstens einem trifunktionalen Methacrylat, bevorzugt wenigstens einem tetrafunktionalen Acrylat und/oder wenigstens einem tetrafunktionalen Methacrylat, zu wenigstens einer difunktionalen Epoxidverbindung, bevorzugt einer trifunktionalen Epoxidverbindung liegt hierbei bevorzugt bei 1:3, besonders bevorzugt bei 1:2.

Der Gesamtanteil an wenigstens einem kolloidalen anorganischen Oxid. Hydroxid, Oxidhydrat, Fluorid und/oder Oxyfluorid in der zur Herstellung der wenigstens einen Barriereschicht umfassend wenigstens eine Acrylat-Epoxidschicht einsetzbaren Beschichtungszusammensetzung liegt bevorzugt in einem Bereich von 4,0 Gew.-% bis 45,0 Gew.-%, weiter bevorzugt in einem Bereich von 4,3 Gew.-% bis 43,8 Gew.-%, weiter bevorzugt in einem Bereich von 4,7 Gew.-% bis 36,9 Gew.-%, besonders bevorzugt in einem Bereich von 5,1 Gew.-% bis 35,6 Gew.-% und ganz besonders bevorzugt in einem Bereich von 6,2 Gew.-% bis 32,3 Gew.-%, jeweils bezogen auf das Gesamtgewicht der Beschichtungszusammensetzung. Insbesondere bevorzugt umfasst die zur Herstellung der wenigstens einen Barriereschicht umfassend wenigstens eine Acrylat-Epoxidschicht einsetzbare Beschichtungszusammensetzung wenigstens ein kolloidales anorganisches Oxid, Hydroxid, Oxidhydrat, Fluorid und/oder Oxyfluorid in einem Gesamtanteil aus einem Bereich von 14,2 Gew.-% bis 21,3 Gew.-%, bezogen auf das Gesamtgewicht der Beschichtungszusammensetzung. Der Gesamtanteil bezieht sich hierbei auf die Verwendung wenigstens einer Art eines kolloidalen anorganischen Oxids, Hydroxids, Oxidhydrats, Fluorids und/oder Oxyfluorids oder auf die Verwendung einer Mischung voneinander verschiedener kolloidaler anorganischer Oxide, Hydroxide, Oxidhydrate, Fluoride und/oder Oxyfluoride. Kolloidale anorganische Oxide, Hydroxide, Oxidhydrate, Fluoride und/oder Oxyfluoride sind in vorstehendem Abschnitt "I. chemisch modifizierte Schicht" näher beschrieben. Das wenigstens eine kolloidale anorganische Oxid, Hydroxid, Oxidhydrat, Fluorid und/oder Oxyfluorid kann optional eine Oberflächenmodifizierung aufweisen. Diese Oberflächenmodifizierung kann beispielsweise wenigstens ein Acrylat, wenigstens ein Methacrylat und/oder wenigstens eine Epoxidverbindung umfassen.

Ganz besonders bevorzugt umfasst die Beschichtungszusammensetzung zur Herstellung der wenigstens einen Barriereschicht umfassend wenigstens eine Acrylat-Epoxidschicht wenigstens ein trifunktionales Acrylat und/oder wenigstens ein trifunktionales Methacrylat, bevorzugt wenigstens ein tetrafunktionales Acrylat und/oder wenigstens ein tetrafunktionales Methacrylat, wenigstens eine difunktionale Epoxidverbindung, bevorzugt eine trifunktionale Epoxidverbindung und wenigstens ein kolloidales Metalloxid, Metallhydroxid und/oder Metalloxidhydrat aus oder mit Titan, bevorzugt TiO₂, aus oder mit Silizium, bevorzugt SiO₂, aus oder mit Zirkonium, bevorzugt ZrO₂, bevorzugt ein kolloidales Metalloxid, Metallhydroxid, Metalloxidhydrat aus oder mit Silizium, ganz besonders bevorzugt SiO₂. Der Gesamtanteil an wenigstens einem trifunktionalen Acrylat und/oder wenigstens einem trifunktionalen Methacrylat, bevorzugt wenigstens einem tetrafunktionalen Acrylat und/oder wenigstens einem tetrafunktionalen Methacrylat, wenigstens einer difunktionalen Epoxidverbindung, bevorzugt einer trifunktionalen Epoxidverbindung und wenigstens einem kolloidalen Metalloxid, Metallhydroxid und/oder Metalloxidhydrat liegt herbei bevorzugt in einem Bereich von 40 Gew.-% bis 59 Gew.-%, weiter bevorzugt in einem Bereich von 42 Gew.-% bis 57Gew.-%, besonders bevorzugt in einem Bereich von 44 Gew.-% bis 54,8 Gew.-% und ganz besonders bevorzugt 45 Gew.-% bis 53,9 Gew.-%, jeweils bezogen auf das Gesamtgewicht der Beschichtungszusammensetzung. Das Verhältnis von wenigstens einem trifunktionalen Acrylat und/oder wenigstens einem trifunktionalen Methacrylat, bevorzugt wenigstens einem tetrafunktionalen Acrylat und/oder wenigstens einem tetrafunktionalen Methacrylat, zu wenigstens einer difunktionalen Epoxidverbindung, bevorzugt einer trifunktionalen Epoxidverbindung zu wenigstens einem kolloidalen Metalloxid, Metallhydroxid und/oder Metalloxidhydrat liegt hierbei bevorzugt bei 1:3:1, besonders bevorzugt bei 1:2:1.

Der Gesamtanteil an wenigstens einem Photoinitiator in der zur Herstellung der wenigstens einen Barriereschicht umfassend wenigstens eine Acrylat-Epoxidschicht einsetzbaren Beschichtungszusammensetzung liegt bevorzugt in einem Bereich von 1,5 Gew.-% bis 4,0 Gew.-%, weiter bevorzugt in einem Bereich von 1,6 Gew.-% bis 3.7 Gew.-%, weiter bevorzugt in einem Bereich von 1,9 Gew.-% bis 3,3 Gew.-%, besonders bevorzugt in einem Bereich von 2,0 Gew.-% bis 2,7 Gew.-% und ganz besonders bevorzugt in einem Bereich von 2,2 Gew.-% bis 2,4 Gew.-%, jeweils bezogen auf das Gesamtgewicht der Beschichtungszusammensetzung. Der Gesamtanteil bezieht sich hierbei auf die Verwendung wenigstens einer Art eines Photoinitiators oder auf die Verwendung einer Mischung voneinander verschiedener Photoinitiatoren.

Als wenigstens ein kann beispielsweise Benzophenon (CAS Nr. 119-61-9), 2-Methylbenzophenon (CAS Nr. 131-58-8), 4-Methylbenzophenon (CAS Nr. 134-84-9), 4.4'-Bis(dimethylamino)benzophenon (CAS Nr. 90-94-8), Benzoin (CAS Nr. 119-53-9), Benzoinmethylether (CAS Nr. 3524-62-7), Benzoinisopropylether (CAS Nr. 6652-28-4), 2,2-Dimethoxy-1,2-diphenylethan-1-on (CAS Nr. 24650-42-8), Phenylbis(2,4,6-trimethylbenzoyl)phosphinoxid (CAS Nr. 162881-26-7), 2,4,6-Trimethylbenzoylphenylphosphinsäureethylester (CAS Nr. 84434-11-7), 2-Methyl-1-[4-(methylthio)phenyl]-2-(4-morpholinyl)-1-propanon (CAS Nr. 71868-10-5), 2-Hydroxy-2-methyl-1-phenyl-1-propanon (CAS Nr. 7473-98-5), 2-(Dimethylamino)-1-(4-(4-morpholinyl)phenyl)-2-(phenylmethyl)-1-butanon (CAS Nr. 119313-12-1), Diphenyl(2,4,6-trimethylbenzoyl)phosphinoxid (CAS Nr. 75980-60-8), Triarylsulfoniumhexafluorophosphat-Salze (CAS Nr. 109037-77-6), Triarylsulfoniumhexafluoroantimonat-Salze (CAS Nr. 109037-75-4) oder Mischungen hiervon als UV-Initiator umfassen. Bevorzugt kommt als wenigstens ein Photoinitiator Benzophenon, 2,2-Dimethoxy-1,2-diphenylethan-1-on, Phenylbis(2,4,6-trimethylbenzoyl)phosphinoxid, Diphenyl(2,4,6-trimethylbenzoyl)phosphinoxid, Triarylsulfoniumhexafluorophosphat-Salze oder Mischungen hiervon, besonders bevorzugt 2,2-Dimethoxy-1,2-diplienylethan-1-on, Phenylbis(2,4,6-trimethylbenzoyl)phosphinoxid, Diphenyl(2,4,6-trimethylbenzoyl)phosphinoxid und/oder Mischungen hiervon in der Beschichtungszusammensetzung zur Herstellung der wenigstens einen Barriereschicht umfassend wenigstens eine Acrylat-Epoxidschicht zum Einsatz.

Der Gesamtanteil an wenigstens einem Additiv, welches optional in der zur Herstellung der wenigstens einen Barriereschicht umfassend wenigstens eine Acrylat-Epoxidschicht einsetzbaren Beschichtungszusammensetzung vorhanden ist, liegt bevorzugt in einem Bereich von 0,05 Gew.-% bis 1,9 Gew.-%, weiter bevorzugt in einem Bereich von 0,07 Gew.-% bis 1,6 Gew.-%, weiter bevorzugt in einem Bereich von 0,08 Gew.-% bis 1,4 Gew.-%, besonders bevorzugt in einem Bereich von 0,09 Gew.-% bis 1,2 Gew.-% und ganz besonders bevorzugt in einem Bereich von 0,1 Gew.-% bis 1,0 Gew.-%. jeweils bezogen auf das Gesamtgewicht der Beschichtungszusammensetzung. Der Gesamtanteil bezieht sich hierbei auf die Verwendung wenigstens einer Art eines Additivs oder auf die Verwendung einer Mischung voneinander verschiedener Additive.

Als Additiv kann beispielsweise ein Dispergiermittel, ein Antiabsetzmittel, ein Netzmittel, einschließlich einem Antikrateradditiv oder einem Verlaufsadditiv, ein Biozid und/oder ein UV-Absorber in der Beschichtungszusammensetzung zur Herstellung der wenigstens einen Barriereschicht umfassend wenigstens eine Acrylat-Epoxidschicht zum Einsatz kommen. Bevorzugt wird als Additiv wenigstens ein Netzmittel in der Beschichtungszusammensetzung eingesetzt.

Die zur Herstellung der wenigstens einen Barriereschicht umfassend wenigstens eine Acrylat-Epoxidschicht verwendbare Beschichtungszusammensetzung umfasst des Weiteren wenigstens ein Lösungsmittel. Das wenigstens eine Lösungsmittel wird in der Beschichtungszusammensetzung in einem Anteil ad 100 Gew.-% eingesetzt. Bevorzugt umfasst die Beschichtungszusammensetzung wenigstens ein organisches Lösungsmittel mit einem niedrigen Siedepunkt von < 100°C bei Normaldruck und wenigstens ein organisches Lösungsmittel mit einem mittleren Siedepunkt aus einem Bereich von 100°C bis 150°C bei Normaldruck. Als organisches Lösungsmittel mit einem niedrigen Siedepunkt können beispielsweise Methanol, Ethanol, 1-Propanol, 2-Propanol, tert-Butanol, Aceton, Diethylether, tert-Butylmethylether, Tetrahydrofuran, Chloroform, 1,2-Dichlorethan, Methylenchlorid, Cyclohexan, Essigsäureethylester, n-Hexan, n-Heptan und/oder Methylethylketon eingesetzt werden. Bevorzugt wird als organisches Lösungsmittel mit einem niedrigen Siedepunkt Methanol, Ethanol, 1-Propanol und/oder 2-Propanol eingesetzt.

Als organisches Lösungsmittel mit einem mittleren Siedepunkt können beispielsweise 1-Methoxy-2-propanol, 1-Butanol, Dibutylether, 1,4-Dioxan, 3-Methyl-1-butanol, 4-Hydroxy-4-methyl-2-pentanon, Methylisobutylketon und/oder Toluol eingesetzt werden. Bevorzugt wird als Lösungsmittel mit einem mittleren Siedepunkt 1-Methoxy-2-propanol und/oder Methylisobutylketon eingesetzt.

Bevorzugt liegt das Gewichtsverhältnis des wenigstens einen organischen Lösungsmittels mit einem niedrigen Siedepunkt zu wenigstens einem organischen Lösungsmittel mit einem mittleren Siedepunkt bei 1:1,3, weiter bevorzugt bei 1:1,6, besonders bevorzugt bei 1:1,7 und ganz besonders bevorzugt bei 1:1,8.

Die mittlere Schichtdicke der wenigstens einen Barriereschicht umfassend wenigstens eine Arylat-Epoxidschicht liegt nach Applikation und Trocknung bevorzugt in einem Bereich von 2,7 µm bis 5,1 µm, weiter bevorzugt in einem Bereich von 2,9 µm bis 4,9 µm, besonders bevorzugt in einem Bereich von 3,0 µm bis 4,7 µm und ganz besonders bevorzugt in einem Bereich von 3,1 µm bis 4,7 µm. Die mittlere Schichtdicke wird bevorzugt analog der mittleren Schichtdicke der wenigstens einen chemisch modifizierten Primer-Lackschicht mittels einer Messung der spektralen Reflektivität und/oder der spektralen Transmissivität bestimmt. Besonders bevorzugt wird als Messgerät zur Bestimmung der mittleren Dicke das optische Spektrometer F10-HC (Firma Filmetrics Inc.) eingesetzt.

Im Unterschied zur in EP 1 461 644 A1 beschriebenen strahlungsgehärteten Schicht auf Acrylatbasis, welche eine Schichtdicke von 2 µm bis 20 µm aufweist, entfaltet die vorstehend beschriebene Barriereschicht umfassend wenigstens eine Acrylat-Epoxidschicht ihre Barrierewirkung trotz ihrer sehr geringen Schichtdicke im Zusammenspiel mit der chemisch modifizierter Primer-Lackschicht aufgrund ihrer mechanischen Flexibilität, die sozusagen eine mechanische Entkopplung des Substrats mit der darauf aufgebrachten photochromen Schicht und den nachfolgenden Hartlack- und Entspiegelungsschicht bewirkt. Durch diese mechanische Entkopplung "schwimmen" die äußere Hartlackschicht und Entspiegelungsschicht auf der mechanisch flexiblen Barriereschicht im Zusammenspiel mit der chemisch modifizierten Primer-Lackschicht, so dass einwirkende Kräfte, die eigentlich eine Schädigung der Schicht hervorrufen würden, innerhalb der der mechanisch flexiblen Barriereschicht im Zusammenspiel mit der chemisch modifizierten Primer-Lackschicht relaxieren, ohne eine Beschädigung hervorzurufen. Nachfolgend wird wenigstens eine Barriereschicht, welche auf derselben Oberfläche des Substrats wie die photochrome Schicht und in Bezug auf die wenigstens eine photochrome Schicht weiter vom Substrat abgewandt vorliegt, anhand verschiedener Ausführungsformen näher erläutert. Umfasst die Vorderfläche des Substrats wenigstens eine photochrome Schicht, liegt die wenigstens eine Barriereschicht in Bezug auf die photochrome Schicht weiter objektseitig. Umfasst die Rückfläche des Substrats wenigstens eine photochrome Schicht, liegt die wenigstens eine Barriereschicht in Bezug auf die photochrome Schicht weiter augenseitig. Die Barriereschicht kann die am weitesten außenliegende Schicht des Brillenglases sein. Bevorzugt liegt jeweils substratabgewandt wenigstens eine weitere Schicht auf der wenigstens einen Barriereschicht vor.

### III. Beschichtung umfassend wenigstens eine photochrome Schicht und wenigstens eine Barriereschicht auf derselben Oberfläche des Substrats

Nachfolgend wird wenigstens eine Barriereschicht, welche auf derselben Oberfläche des Substrats wie die photochrome Schicht und in Bezug auf die wenigstens eine photochrome Schicht weiter vom Substrat abgewandt vorliegt, anhand verschiedener Ausführungsformen näher erläutert. Bei diesen Ausführungsformen umfasst die Schichtenfolge bevorzugt keine chemisch modifizierte Schicht, wie diese im Rahmen dieser Erfindung definiert wurde, auf. Umfasst die Vorderfläche des Substrats wenigstens eine photochrome Schicht, liegt die wenigstens eine Barriereschicht in Bezug auf die photochrome Schicht weiter objektseitig. Umfasst die Rückfläche des Substrats wenigstens eine photochrome Schicht, liegt die wenigstens eine Barriereschicht in Bezug auf die photochrome Schicht weiter augenseitig. Die Barriereschicht kann die am weitesten außenliegende Schicht des Brillenglases sein. Bevorzugt liegt jeweils substratabgewandt wenigstens eine weitere Schicht auf der wenigstens einen Barriereschicht vor.

### III.1. Beschichtung umfassend wenigstens eine photochrome Schicht und wenigstens eine

Barriereschicht umfassend wenigstens eine Hartlackschicht auf derselben Oberfläche des Substrats Bei einer Ausführungsform umfasst das Brillenglas wenigstens eine photochrome Schicht und wenigstens eine Barriereschicht umfassend wenigstens eine Hartlackschicht auf derselben Oberfläche des Substrats. Bei dieser Ausführungsform umfasst wenigstens eine Oberfläche des Substrats, bevorzugt die Vorderfläche des Substrats, wenigstens eine photochrome Schicht und wenigstens eine Barriereschicht umfassend wenigstens eine Hartlackschicht, wobei die wenigstens eine Barriereschicht in Bezug auf die wenigstens eine photochrome Schicht substratabgewandt in der Schichtenfolge vorliegen. Die wenigstens eine Barriereschicht umfasst bei dieser Ausführungsform vorzugsweise wenigstens eine der Hartlackschichten, welche bereits vorstehend im Abschnitt "I. chemisch modifizierte
Schicht" beschrieben wurden. Alternativ kann die wenigstens eine Barriereschicht auch wenigstens eine Primer-Lackschicht und wenigstens eine der Hartlackschichten, welche bereits vorstehend im Abschnitt "I. chemisch modifizierte Schicht" beschrieben wurden, umfassen. Die wenigstens eine Primer-Lackschicht kann eine der im Abschnitt "II.1. Beschichtung umfassend wenigstens eine photochrome Schicht, wenigstens eine chemisch modifizierte Primer-Lackschicht und wenigstens eine Barriereschicht umfassend wenigstens eine Hartlackschicht auf derselben Oberfläche des Substrats", nachfolgend "II.1. Barriereschicht umfassend wenigstens eine Hartlackschicht" beschriebenen Primer-Lackschichten umfassen. Im letzteren Fall ist die wenigstens eine Hartlackschicht in Bezug auf die wenigstens eine Primer-Lackschicht außenliegend, d.h. weiter substratabgewandt angeordnet.

Bei dieser Ausführungsform umfasst bevorzugt wenigstens eine Oberfläche des Substrats, bevorzugt dessen Vorderfläche,
a) bevorzugt wenigstens eine photochrome Schicht, wenigstens eine Hartlackschicht 1, wenigstens eine Primer-Lackschicht und wenigstens eine Hartlackschicht 2. Die wenigstens eine Hartlackschicht 2 dient hierbei bevorzugt der Erhöhung der Kratzbeständigkeit und der Erhöhung der Chemikalienbeständigkeit des Brillenglases. Zusätzlich kann die wenigstens eine Hartlackschicht 2 als Barriereschicht wirken, allerdings nur in denjenigen Bereichen der Hartlackschicht 2, welche intakt, d.h. ohne Beschädigungen, sind. Die wenigstens eine Hartlackschicht 2 kann im Laufe der Zeit kleinere Beschädigungen, wie beispielsweise Mikrokratzer, aufweisen, welche im Alltagsgebrauch der Brille während der Gesamttragedauer einer Brille von typischerweise zwei bis vier Jahren entstehen können. Im Bereich der kleineren Beschädigungen kann die wenigstens eine Hartlackschicht 2 nicht mehr als Barriereschicht wirken. Die wenigstens eine Hartlackschicht 1 dient hierbei bevorzugt als wenigstens eine Barriereschicht. Die wenigstens eine Hartlackschicht 1 dient weiterhin zusätzlich zur wenigstens einen Hartlackschicht 2 zur Erhöhung der Kratzbeständigkeit und zur Erhöhung der Chemikalienbeständigkeit, insbesondere in denjenigen Bereichen, in welchen die wenigstens eine Hartlackschicht 2 die kleineren Beschädigungen aufweist. Die mittlere Schichtdicke der wenigstens einen Hartlackschicht 1 und die mittlere Schichtdicke der wenigstens einen Hartlackschicht 2 können identisch oder verschieden voneinander sein. Bevorzugt ist die mittlere Schichtdicke der wenigstens einen Hartlackschicht 1 verschieden zu der mittleren Schichtdicke der wenigstens einen Hartlackschicht 2. Die mittlere Schichtdicke der wenigstens einen Hartlackschicht 1 liegt bevorzugt in einem Bereich von 1,6 µm bis 5,1 µm, weiter bevorzugt in einem Bereich von 2,0 µm bis 4,9 µm, besonders bevorzugt in einem Bereich von 2,2 µm bis 4,5 µm und ganz besonders bevorzugt in einem Bereich von 2,3 µm bis 4,0 µm. Die mittlere Schichtdicke der wenigstens einen Hartlackschicht 2 liegt bevorzugt in einem Bereich von 0,8 µm bis 4,3 µm, weiter bevorzugt in einem Bereich von 1,3 µm bis 3,8 µm, besonders bevorzugt in einem Bereich von 1,6 µm bis 3,2 µm und ganz besonders bevorzugt in einem Bereich von 2,0 µm bis 2,8 µm. Zur Herstellung der wenigstens einen Hartlackschicht 1 und zur Herstellung der wenigstens einen Hartlackschicht 2 kann die identische oder eine voneinander verschiedene Zusammensetzung eingesetzt werden. Bevorzugt wird zur Herstellung der wenigstens einen Hartlackschicht 1 und zur Herstellung der wenigstens einen Hartlackschicht 2 eine identische Zusammensetzung eingesetzt. Die mittlere Schichtdicke der wenigstens einen Primer-Lackschicht liegt bevorzugt in einem Bereich von 0,3 µm bis 1,4 µm, weiter bevorzugt in einem Bereich von 0,4 µm bis 1,3 µm, besonders bevorzugt in einem Bereich von 0,5 µm bis 1,2 µm und ganz besonders bevorzugt in einem Bereich von 0,6 µm bis 1,1 µm. Die Hartlackschicht 2 ist in dieser Schichtenfolge a) die am weitesten von der Oberfläche des Substrats entfernt liegende Schicht, bevorzugt auf der Vorderfläche des Substrats in dieser Schichtenfolge a) die objektseitig äußerste Schicht. Insbesondere bevorzugt umfasst die Vorderfläche des Substrats eine Schichtfolge a) umfassend genau eine photochrome Schicht, genau eine Hartlackschicht 1, genau eine Primer-Lackschicht und genau eine Hartlackschicht 2; oder
b) besonders bevorzugt wenigstens eine photochrome Schicht, wenigstens eine Primer-Lackschicht 1, wenigstens eine Hartlackschicht 1, wenigstens eine Primer-Lackschicht 2 und wenigstens eine Hartlackschicht 2. Die wenigstens eine Hartlackschicht 2 dient hierbei bevorzugt der Erhöhung der Kratzbeständigkeit und der Erhöhung der Chemikalienbeständigkeit des Brillenglases. Wie bereits vorstehend für die unter a) beschriebene Schichtenfolge offenbart, kann die wenigstens eine Hartlackschicht 2 zusätzlich als Barriereschicht wirken. Die wenigstens eine Hartlackschicht 1 dient hierbei bevorzugt als wenigstens eine Barriereschicht. Außerdem dient die wenigstens eine Hartlackschicht 1, wie vorstehend für die Schichtenfolge a) beschrieben, zur Erhöhung der Kratzbeständigkeit und zur Erhöhung der Chemikalienbeständigkeit. Auch hier kann zur Herstellung der wenigstens einen Hartlackschicht 1 und zur Herstellung der wenigstens einen Hartlackschicht 2 eine identische oder eine voneinander verschiedene Zusammensetzung eingesetzt werden. Bevorzugt ist die zur Herstellung der wenigstens einen Hartlackschicht 1 einsetzbare Zusammensetzung identisch der zur Herstellung der wenigstens einen Hartlackschicht 2 einsetzbaren Zusammensetzung. Die mittlere Schichtdicke der wenigstens einen Hartlackschicht 1 kann identisch zu oder verschieden von der mittleren Schichtdicke der wenigstens einen Hartlackschicht 2 sein. Bevorzugt ist die mittlere Schichtdicke der wenigstens einen Hartlackschicht 1 identisch der mittleren Schichtdicke der wenigstens einen Hartlackschicht 2. Bevorzugt liegt die mittlere Schichtdicke der wenigstens einen Hartlackschicht 1 und der wenigstens einen Hartlackschicht 2 jeweils in einem Bereich von 1,6 µm bis 4,7 µm, weiter bevorzugt in einem Bereich von 1,7 µm bis 4,4 µm, besonders bevorzugt in einem Bereich von 1,9 µm bis 4,2 µm und ganz besonders bevorzugt in einem Bereich von 2,0 µm bis 4,1 µm. Die Beschichtungszusammensetzung zur Herstellung der wenigstens einen Primer-Lackschicht 1 und die Beschichtungszusammensetzung zur Herstellung der wenigstens einen Primer-Lackschicht 2 kann identisch oder verschieden voneinander sein. Bevorzugt ist die Beschichtungszusammensetzung zur Herstellung der wenigstens einen Primer-Lackschicht 1 identisch zu der Beschichtungszusammensetzung zur Herstellung der wenigstens einen Primer-Lackschicht 2. Die mittlere Schichtdicke der Primer-Lackschicht 1 und die mittlere Schichtdicke der Primer-Lackschicht 2 kann identisch oder unterschiedlich sein. Bevorzugt ist die mittlere Schichtdicke der Primer-Lackschicht 1 identisch zu der mittleren Schichtdicke der Primer-Lackschicht 2. Die mittlere Schichtdicke der Primer-Lackschicht 1 und die mittlere Schichtdicke der Primer-Lackschicht 2 liegt jeweils bevorzugt in einem Bereich von 0,3 µm bis 1,6 µm, weiter bevorzugt in einem Bereich von 0,4 µm bis 1,3 µm, besonders bevorzugt in einem Bereich von 0,5 µm bis 1,2 µm und ganz besonders bevorzugt in einem Bereich von 0,6 µm bis 1,1 µm. Die Hartlackschicht 2 ist in dieser Schichtenfolge b) die am weitesten von der Oberfläche des Substrats entfernt liegende Schicht, bevorzugt auf der Vorderfläche des Substrat in dieser Schichtenfolge b) die objektseitig äußerste Schicht. Besonders bevorzugt umfasst die Vorderfläche des Substrats eine Schichtfolge b) umfassend genau eine photochrome Schicht, genau eine Primer-Lackschicht 1, genau eine Hartlackschicht 1, genau eine Primer-Lackschicht 2 und genau eine Hartlackschicht 2.

Als Zusammensetzung zur Herstellung der wenigstens einen Hartlackschicht 1 oder der wenigstens einen Hartlackschicht 2 kann eine der in vorstehendem Abschnitt "I. chemisch modifizierte

Schicht" beschriebene Zusammensetzungen zur Herstellung der Hartlackschicht verwendet werden. Als Beschichtungszusammensetzung für die Herstellung der wenigstens einen Primer-Lackschicht kann eine der in Abschnitt "II.1. Barriereschicht umfassend wenigstens eine Hartlackschicht" beschriebenen Zusammensetzungen eingesetzt werden.

Die Bestimmung der mittleren Schichtdicke der jeweiligen Schicht erfolgt bevorzugt nach deren Applikation und Trocknung mittels der vorstehend für die jeweilige Schicht beschriebenen Messmethode. Bei dieser Ausführungsform kann die mit wenigstens einer Barriereschicht bzw. die mit vorstehend aufgeführten bevorzugten Schichtenfolgen a) und b) belegte Oberfläche des Substrats, bevorzugt dessen Vorderfläche, angrenzend an die wenigstens eine Barrierschicht bzw. angrenzend an die wenigstens eine Hartlackschicht 2 substratabgewandt weiterhin optional wenigstens eine Entspiegelungsschicht, wenigstens eine elektrisch leitfähige oder halbleitende Schicht, wenigstens eine Antibeschlagschicht und/oder wenigstens eine Clean-Coat-Schicht umfassen. Die wenigstens eine elektrisch leitfähige oder halbleitende Schicht kann hierbei als Bestandteil der wenigstens einen Entspiegelungsschicht vorliegen. Bevorzugt umfasst die Beschichtung substratabgewandt angrenzend an die am weitesten substratabgewandte Barriereschicht bzw. angrenzend an die Hartlackschicht 2 wenigstens eine Entspiegelungsschicht, besonders bevorzugt wenigstens eine Entspiegelungsschicht und wenigstens eine Clean-Coat-Schicht, wobei in letzterem Fall die Clean-Coat-Schicht die am weitesten vom Substrat entfernte Schicht darstellt. In vorstehend genannten bevorzugten Schichtenfolgen a) und b) kann weiterhin zwischen den einzelnen explizit aufgeführten Schichten jeweils noch wenigstens eine weitere Schicht vorliegen. Bevorzugt ist in vorstehend genannten bevorzugten Schichtenfolgen a) und b) keine weitere Schicht zwischen den einzelnen explizit aufgeführten Schichten zugegen. Außerdem kann zwischen der Oberfläche des Substrats und der wenigstens einen photochromen Schicht noch wenigstens eine weitere Schicht vorhanden sein. Bevorzugt ist substratzugewandt und direkt angrenzend an die wenigstens eine photochrome Schicht wenigstens eine Primerschicht angeordnet, besonders bevorzugt die in EP 1 602 479 A1, insbesondere in EP 1 602 479 A1, Anspruch 1, offenbarte Polyurethanharzschicht. Sofern die Schichtenfolge wenigstens eine farbgebende Schicht und/oder wenigstens eine polarisierende Schicht umfasst gilt bevorzugt auch bei dieser Ausführungsform die vorstehend im Abschnitt "I. chemisch modifizierte Schicht" genannte Schichtenfolge zwischen der Oberfläche des Substrats, bevorzugt dessen Vorderfläche, und der wenigstens einen photochromen Schicht. Alternativ zur Aufbringung wenigstens einer farbgebenden Schicht auf wenigstens eine Oberfläche des Substrats, bevorzugt der Vorderfläche des Substrats, kann das Substrat auch bei dieser Ausführungsform eingefärbt sein.

Auch bei dieser Ausführungsform umfasst diejenige Oberfläche des Substrats, welche nicht mit wenigstens einer photochromen Schicht belegt ist, bevorzugt wenigstens eine Hartlackschicht, wenigstens eine Entspiegelungsschicht, wenigstens eine elektrisch leitfähige oder halbleitende Schicht, welche optional ein Teil der Entspiegelungsschicht ist, wenigstens eine Antibeschlagschicht und/oder wenigstens eine Clean-Coat-Schicht. Weiter bevorzugt umfasst diejenige Oberfläche des Substrats, welche nicht mit wenigstens einer photochromen Schicht belegt ist, wenigstens eine Hartlackschicht, besonders bevorzugt wenigstens eine Hartlackschicht und wenigstens eine Entspiegelungsschicht und ganz besonders bevorzugt wenigstens eine Hartlackschicht, wenigstens eine Entspiegelungsschicht und ganz besonders bevorzugt wenigstens eine Hartlackschicht, wenigstens eine Entspiegelungsschicht und wenigstens eine Clean-Coat-Schicht. Die wenigstens eine Entspiegelungsschicht bzw. bei Anwesenheit wenigstens einer Clean-Coat-Schicht ist die wenigstens eine Entspiegelungsschicht bzw. bei deren Anwesenheit die wenigstens eine Clean-Coat-Schicht die am weitesten substratabgewandte Schicht. Alternativ kann diejenige Oberfläche des Substrats, welche nicht mit wenigstens einer photochromen Schicht belegt ist, wenigstens ein Dünnstglas und wenigstens eine Entspiegelungsschicht umfassen, wobei die wenigstens eine Entspiegelungsschicht in Bezug auf das wenigstens eine Dünnstglas bevorzugt substratabgewandt angeordnet ist. Weiterhin alternativ kann diejenige Oberfläche des Substrats, welche nicht mit wenigstens einer photochromen Schicht belegt ist, wenigstens ein Dünnstglas, wenigstens eine Entspiegelungsschicht und wenigstens eine Clean-Coat-Schicht umfassen, wobei die wenigstens eine Entspiegelungsschicht und die wenigstens eine Clean-Coat-Schicht in Bezug auf das wenigstens eine Dünnstglas bevorzugt substratabgewandt angeordnet sind und die Clean-Coat-Schicht bevorzugt die am weitesten vom Substrat entfernt liegende Schicht darstellt. Dünnstgläser sind in Abschnitt "II.2. Barriereschicht umfassend wenigstens ein Dünnstglas" näher beschrieben. Optional kann wenigstens eine Schicht, bevorzugt eine farbgebende Schicht, zwischen der Substratoberfläche und dem Dünnstglas vorliegen. Bei dieser Ausführungsform kann die Zusammensetzung zur Herstellung der wenigstens Hartlackschicht auf der Oberfläche des Substrats, welche keine photochrome Schicht umfasst, identisch oder verschieden zu der Zusammensetzung zur Herstellung der wenigstens einen Hartlackschicht sein, welche sich auf derselben Oberfläche des Substrats wie die wenigstens eine photochrome Schicht befindet. Umfasst die wenigstens eine photochrome Schicht umfassende Oberfläche des Substrats mehr als eine Hartlackschicht, wie oben in den bevorzugten Schichtenfolgen a) und b) dieser Ausführungsform beschrieben, kann die Zusammensetzung zur Herstellung der wenigstens einen Hartlackschicht auf derjenigen Oberfläche des Substrats, welche keine photochrome Schicht umfasst, identisch oder verschieden zu allen Zusammensetzungen zur Herstellung der Hartlackschichten oder identisch oder verschieden zu wenigstes einer der Zusammensetzungen der Hartlackschichten sein. Bevorzugt sind alle Zusammensetzungen, welche zur Herstellung aller Hartlackschichten des Brillenglases eingesetzt werden identisch. Dies erleichtert den Beschichtungsprozess zum einen dahingehend, dass nicht für jede aufzubringende Hartlackschicht unterschiedliche Zusammensetzungen angefertigt oder vorrätig gehalten werden müssen. Zum anderen kann die Hartlackschicht bei Verwendung identischer Zusammensetzungen auch mittels einer Tauchbeschichtung aufgebracht werden. Unabhängig davon, auf welcher der Oberflächen des Substrats sich die Hartlackschicht befindet, ist die Zusammensetzung zur Herstellung der wenigstens einen Hartlackschicht in Abschnitt "I. chemisch modifizierte Schicht" beschrieben.

### III.2. Beschichtung umfassend wenigstens eine photochrome Schicht und wenigstens eine Barriereschicht umfassend wenigstens ein Dünnstglas auf derselben Oberfläche des Substrats

Bei einer Ausführungsform umfasst das Brillenglas wenigstens eine photochrome Schicht und wenigstens eine Barriereschicht umfassend wenigstens ein Dünnstglas. Bei dieser Ausführungsform umfasst wenigstens eine Oberfläche des Substrats, bevorzugt dessen Vorderfläche, wenigstens eine photochrome Schicht und wenigstens eine Barriereschicht umfassend wenigstens ein Dünnstglas. Die wenigstens eine Barriereschicht ist in Bezug auf die wenigstens eine Barriereschicht substratabgewandt angeordnet. Dünnstgläser sind in Abschnitt "II.2. Barriereschicht umfassend wenigstens ein Dünnstglas" näher beschrieben. Alternativ kann bei dieser Ausführungsform wenigstens eine Oberfläche des Substrats, bevorzugt dessen Vorderfläche, wenigstens eine photochrome Schicht, wenigstens eine Primer-Lackschicht und wenigstens eine Barriereschicht umfassend wenigstens ein Dünnstglas umfassen. Bei dieser Alternative ist die wenigstens eine Barriereschicht umfassend wenigstens ein Dünnstglas die am weitesten substratabgewandte Schicht. Als Beschichtungszusammensetzung für die Herstellung der wenigstens einen Primer-Lackschicht kann eine der in Abschnitt "II.1. Barriereschicht umfassend wenigstens eine Hartlackschicht" beschriebenen Zusammensetzungen mit einer der dort offenbarten mittleren Schichtdicken eingesetzt werden. Bevorzugt umfasst wenigstens eine Oberfläche des Substrats, bevorzugt dessen Vorderfläche, wenigstens eine photochrome Schicht und wenigstens ein Dünnstglas. Das wenigstens eine Dünnstglas ist hierbei in Bezug auf die wenigstens eine photochrome Schicht substratabgewandt angeordnet.

Bei dieser Ausführungsform kann die mit wenigstens einer Barriereschicht bzw. die mit wenigstens einem Dünnstglas belegte Oberfläche des Substrats, bevorzugt dessen Vorderfläche, angrenzend an die wenigstens eine Barrierschicht bzw. angrenzend an das wenigstens eine Dünnstglas substratabgewandt weiterhin optional wenigstens eine Entspiegelungsschicht, wenigstens eine elektrisch leitfähige oder halbleitende Schicht, wenigstens eine Antibeschlagschicht und/oder wenigstens eine Clean-Coat-Schicht umfassen. Die wenigstens eine elektrisch leitfähige oder halbleitende Schicht kann hierbei als Bestandteil der wenigstens einen Entspiegelungsschicht vorliegen. Bevorzugt umfasst die Beschichtung substratabgewandt angrenzend an die am weitesten substratabgewandte Barriereschicht bzw. angrenzend das Dünnstglas wenigstens eine Entspiegelungsschicht, besonders bevorzugt wenigstens eine Entspiegelungsschicht und wenigstens eine Clean-Coat-Schicht, wobei in letzterem Fall die Clean-Coat-Schicht die am weitesten vom Substrat entfernte Schicht darstellt. Weiterhin kann zwischen der wenigstens einen photochromen Schicht und der wenigstens einen Barriereschicht jeweils noch wenigstens eine weitere Schicht vorliegen. Bevorzugt ist keine weitere Schicht zwischen der wenigstens einen photochromen Schicht und der wenigstens einen Barriereschicht zugegen. Des Weiteren kann zwischen der Oberfläche des Substrats und der wenigstens einen photochromen Schicht noch wenigstens eine weitere Schicht vorhanden sein. Bevorzugt ist substratzugewandt und direkt angrenzend an die wenigstens eine photochrome Schicht wenigstens eine Primerschicht angeordnet, besonders bevorzugt die in EP 1 602 479 A1, insbesondere in EP 1 602 479 A1, Anspruch 1, offenbarte Polyurethanharzschicht. Sofern die Schichtenfolge wenigstens eine farbgebende Schicht und/oder wenigstens eine polarisierende Schicht umfasst gilt bevorzugt auch bei dieser Ausführungsform die vorstehend im Abschnitt "I. chemisch modifizierte Schicht" genannte Schichtenfolge zwischen der Oberfläche des Substrats, bevorzugt dessen Vorderfläche, und der wenigstens einen photochromen Schicht. Alternativ zur Aufbringung wenigstens einer farbgebenden Schicht auf wenigstens eine Oberfläche des Substrats, bevorzugt der Vorderfläche des Substrats, kann das Substrat auch bei dieser Ausführungsform eingefärbt sein.

Auch bei dieser Ausführungsform umfasst diejenige Oberfläche des Substrats, welche nicht mit wenigstens einer photochromen Schicht belegt ist, bevorzugt wenigstens eine Hartlackschicht, wenigstens eine Entspiegelungsschicht, wenigstens eine elektrisch leitfähige oder halbleitende Schicht, welche optional ein Teil der Entspiegelungsschicht ist, wenigstens eine Antibeschlagschicht und/oder wenigstens eine Clean-Coat-Schicht. Weiter bevorzugt umfasst diejenige Oberfläche des Substrats, welche nicht mit wenigstens einer photochromen Schicht belegt ist, wenigstens eine Hartlackschicht, besonders bevorzugt wenigstens eine Hartlackschicht und wenigstens eine Entspiegelungsschicht und ganz besonders bevorzugt wenigstens eine Hartlackschicht, wenigstens eine Entspiegelungsschicht und ganz besonders bevorzugt wenigstens eine Hartlackschicht, wenigstens eine Entspiegelungsschicht und wenigstens eine Clean-Coat-Schicht. Die wenigstens eine Entspiegelungsschicht bzw. bei Anwesenheit wenigstens einer Clean-Coat-Schicht ist die wenigstens eine Entspiegelungsschicht bzw. bei deren Anwesenheit die wenigstens eine Clean-Coat-Schicht die am weitesten substratabgewandte Schicht. Alternativ kann diejenige Oberfläche des Substrats, welche nicht mit wenigstens einer photochromen Schicht belegt ist, wenigstens ein Dünnstglas und wenigstens eine Entspiegelungsschicht umfassen, wobei die wenigstens eine Entspiegelungsschicht in Bezug auf das wenigstens eine Dünnstglas bevorzugt substratabgewandt angeordnet ist. Weiterhin alternativ kann diejenige Oberfläche des Substrats, welche nicht mit wenigstens einer photochromen Schicht belegt ist, wenigstens ein Dünnstglas, wenigstens eine Entspiegelungsschicht und wenigstens eine Clean-Coat-Schicht umfassen, wobei die wenigstens eine Entspiegelungsschicht und die wenigstens eine Clean-Coat-Schicht in Bezug auf das wenigstens eine Dünnstglas bevorzugt substratabgewandt angeordnet sind und die Clean-Coat-Schicht bevorzugt die am weitesten vom Substrat entfernt liegende Schicht darstellt. Optional kann wenigstens eine Schicht, bevorzugt eine farbgebende Schicht, zwischen dieser Substratoberfläche und dem Dünnstglas vorliegen. Zur Herstellung der wenigstens einen Hartlackschicht kann eine in Abschnitt "I. chemisch modifizierte Schicht" beschriebene Zusammensetzung Verwendung finden.

### III.3 Beschichtung umfassend wenigstens eine photochrome Schicht und wenigstens eine Barriereschicht umfassend wenigstens eine Acrylat-Epoxidschicht

Bei einer bevorzugten Ausführungsform umfasst das Brillenglas wenigstens eine photochrome Schicht und wenigstens eine Barriereschicht umfassend wenigstens eine Acrylat-Epoxidschicht. Bevorzugt umfasst hierbei wenigstens eine Oberfläche des Substrats, bevorzugt dessen Vorderfläche, wenigstens eine photochrome Schicht und wenigstens eine Acrylat-Epoxidschicht. Die wenigstens eine Acrylat-Epoxidschicht ist in Abschnitt II.3. "Beschichtung umfassend wenigstens eine photochrome Schicht, wenigstens eine chemisch modifizierte Primer-Lackschicht und wenigstens eine Barriereschicht umfassend wenigstens eine Acrylat-Epoxidschicht", nachstehend "II.3. Barrierschicht umfassend wenigstens eine Acrylat-Epoxidschicht" genannt, beschrieben. Die wenigstens eine Acrylat-Epoxidschicht ist in Bezug auf die wenigstens eine photochrome Schicht substratabgewandt angeordnet. Bei dieser bevorzugten Ausführungsform umfasst wenigstens eine Oberfläche des Substrats, bevorzugt dessen Vorderfläche,
a) wenigstens eine photochrome Schicht, wenigstens eine Acrylat-Epoxidschicht und wenigstens eine Hartlackschicht. Die wenigstens eine Acrylat-Epoxidschicht und die wenigstens eine Hartlackschicht sind hierbei in Bezug auf die wenigstens eine photochrome Schicht bevorzugt substratabgewandt angeordnet, wobei die wenigstens eine Hartlackschicht in Bezug auf die wenigstens eine photochrome Schicht am weitesten substratabgewandt angeordnet ist. Die wenigstens eine Acrylat-Epoxidschicht wirkt hierbei bevorzugt als Barriereschicht zum Schutz der in Richtung Substrat liegenden wenigstens einen photochromen Schicht. Die wenigstens eine Hartlackschicht dient bevorzugt der Erhöhung der Kratzbeständigkeit und der Erhöhung der Chemikalienbeständigkeit des hiermit beschichteten Substrats. Bevorzugt umfasst wenigstens eine Oberfläche des Substrats, bevorzugt dessen Vorderfläche, genau eine photochrome Schicht, genau eine Acrylat-Epoxidschicht und genau eine Hartlackschicht; oder
b) wenigstens eine photochrome Schicht, wenigstens eine Acrylat-Epoxidschicht, wenigstens eine Primer-Lackschicht und wenigstens eine Hartlackschicht. Die wenigstens eine Acrylat-Epoxidschicht, die wenigstens eine Primer-Lackschicht und die wenigstens eine Hartlackschicht sind in Bezug auf die wenigstens eine photochrome Schicht substratabgewandt angeordnet. Die wenigstens eine Acrylat-Epoxidschicht ist hierbei bevorzugt am nächsten zur wenigstens einen photochromen Schicht und die wenigstens eine Hartlackschicht bevorzugt am weitesten entfernt von der wenigstens einen photochromen Schicht angeordnet. Bevorzugt umfasst wenigstens eine Oberfläche des Substrats, bevorzugt dessen Vorderfläche genau eine photochrome Schicht, genau eine Acrylat-Epoxidschicht, genau eine Primer-Lackschicht und genau eine Hartlackschicht.

Als Zusammensetzung zur Herstellung der wenigstens einen Hartlackschicht kann eine der in vorstehendem Abschnitt "I. chemisch modifizierte Schicht" beschriebene Zusammensetzungen zur Herstellung der Hartlackschicht verwendet werden. Als Beschichtungszusammensetzung für die Herstellung der wenigstens einen Primer-Lackschicht kann eine der in Abschnitt "II.1. Barriereschicht umfassend wenigstens eine Hartlackschicht" beschriebenen Zusammensetzungen eingesetzt werden.

Die Bestimmung der mittleren Schichtdicke der jeweiligen Schicht erfolgt bevorzugt nach deren Applikation und Trocknung mittels der vorstehend für die jeweilige Schicht beschriebenen Messmethode. Bei dieser bevorzugten Ausführungsform kann die mit wenigstens einer Barriereschicht umfassend wenigstens eine Acrylat-Epoxidschicht bzw. die mit wenigstens einer Hartlackschicht, bevorzugt gemäß einer der vorstehend beschriebenen Schichtenfolgen a) oder b), belegte Oberfläche des Substrats, bevorzugt dessen Vorderfläche, angrenzend an die wenigstens eine Barrierschicht bzw. angrenzend an das wenigstens eine Hartlackschicht substratabgewandt weiterhin optional wenigstens eine Entspiegelungsschicht, wenigstens eine elektrisch leitfähige oder halbleitende Schicht, wenigstens eine Antibeschlagschicht und/oder wenigstens eine Clean-Coat-Schicht umfassen. Die wenigstens eine elektrisch leitfähige oder halbleitende Schicht kann hierbei als Bestandteil der wenigstens einen Entspiegelungsschicht vorliegen. Bevorzugt umfasst die Beschichtung substratabgewandt angrenzend an die am weitesten substratabgewandte Barriereschicht bzw. angrenzend die wenigstens eine Hartlackschicht wenigstens eine Entspiegelungsschicht, besonders bevorzugt wenigstens eine Entspiegelungsschicht und wenigstens eine Clean-Coat-Schicht, wobei in letzterem Fall die Clean-Coat-Schicht die am weitesten vom Substrat entfernte Schicht darstellt. Weiterhin kann zwischen der wenigstens einen photochromen Schicht und der wenigstens einen Barriereschicht bzw. zwischen der wenigstens einen photochromen Schicht und der wenigstens einen Hartlackschicht, bevorzugt gemäß einer der vorstehend genannten Schichtenfolgen a) oder b), jeweils noch wenigstens eine weitere Schicht vorliegen. Bevorzugt ist keine weitere Schicht zwischen der wenigstens einen photochromen Schicht und der wenigstens einen Barriereschicht bzw. zwischen der wenigstens einen photochromen Schicht und der wenigstens einen Hartlackschicht, bevorzugt gemäß einer der vorstehend genannten Schichtenfolgen a) oder b), zugegen. Des Weiteren kann zwischen der Oberfläche des Substrats und der wenigstens einen photochromen Schicht noch wenigstens eine weitere Schicht vorhanden sein. Bevorzugt ist substratzugewandt und direkt angrenzend an die wenigstens eine photochrome Schicht wenigstens eine Primerschicht angeordnet, besonders bevorzugt die in EP 1 602 479 A1, insbesondere in EP 1 602 479 A1, Anspruch 1, offenbarte Polyurethanharzschicht. Sofern die Schichtenfolge wenigstens eine farbgebende Schicht und/oder wenigstens eine polarisierende Schicht umfasst gilt bevorzugt auch bei dieser Ausführungsform die vorstehend im Abschnitt "I. chemisch modifizierte Schicht" genannte Schichtenfolge zwischen der Oberfläche des Substrats, bevorzugt dessen Vorderfläche, und der wenigstens einen photochromen Schicht. Alternativ zur Aufbringung wenigstens einer farbgebenden Schicht auf wenigstens eine Oberfläche des Substrats, bevorzugt der Vorderfläche des Substrats, kann das Substrat auch bei dieser Ausführungsform eingefärbt sein.

Auch bei dieser bevorzugten Ausführungsform umfasst diejenige Oberfläche des Substrats, welche nicht mit wenigstens einer photochromen Schicht belegt ist, bevorzugt wenigstens eine Hartlackschicht, wenigstens eine Entspiegelungsschicht, wenigstens eine elektrisch leitfähige oder halbleitende Schicht, welche optional ein Teil der Entspiegelungsschicht ist, wenigstens eine Antibeschlagschicht und/oder wenigstens eine Clean-Coat-Schicht. Weiter bevorzugt umfasst diejenige Oberfläche des Substrats, welche nicht mit wenigstens einer photochromen Schicht belegt ist, wenigstens eine Hartlackschicht, besonders bevorzugt wenigstens eine Hartlackschicht und wenigstens eine Entspiegelungsschicht und ganz besonders bevorzugt wenigstens eine Hartlackschicht, wenigstens eine Entspiegelungsschicht und ganz besonders bevorzugt wenigstens eine Hartlackschicht, wenigstens eine Entspiegelungsschicht und wenigstens eine Clean-Coat-Schicht. Die wenigstens eine Entspiegelungsschicht bzw. bei Anwesenheit wenigstens einer Clean-Coat-Schicht ist die wenigstens eine Entspiegelungsschicht bzw. bei deren Anwesenheit die wenigstens eine Clean-Coat-Schicht die am weitesten substratabgewandte Schicht.

Alternativ kann diejenige Oberfläche des Substrats, welche nicht mit wenigstens einer photochromen Schicht belegt ist, wenigstens ein Dünnstglas und wenigstens eine Entspiegelungsschicht umfassen, wobei die wenigstens eine Entspiegelungsschicht in Bezug auf das wenigstens eine Dünnstglas bevorzugt substratabgewandt angeordnet ist. Weiterhin alternativ kann diejenige Oberfläche des Substrats, welche nicht mit wenigstens einer photochromen Schicht belegt ist, wenigstens ein Dünnstglas, wenigstens eine Entspiegelungsschicht und wenigstens eine Clean-Coat-Schicht umfassen, wobei die wenigstens eine Entspiegelungsschicht und die wenigstens eine Clean-Coat-Schicht in Bezug auf das wenigstens eine Dünnstglas bevorzugt substratabgewandt angeordnet sind und die Clean-Coat-Schicht bevorzugt die am weitesten vom Substrat entfernt liegende Schicht darstellt. Optional kann wenigstens eine Schicht, bevorzugt eine farbgebende Schicht, zwischen dieser Substratoberfläche und dem Dünnstglas vorliegen. Zur Herstellung der wenigstens einen Hartlackschicht kann eine in Abschnitt "I. chemisch modifizierte Schicht" beschriebene Zusammensetzung Verwendung finden.

### IV. Beschichtung umfassend wenigstens eine photochrome Schicht und wenigstens eine als Barriereschicht wirkende chemisch modifizierte Schicht auf derselben Oberfläche des Substrats

Nachfolgend wird das gleichzeitige Vorliegen wenigstens einer chemisch modifizierten Schicht, welche gleichzeitig als wenigstens eine Barriereschicht wirkt, auf derselben Oberfläche wie die wenigstens eine photochrome Schicht und in Bezug auf die wenigstens eine photochrome Schicht weiter vom Substrat abgewandt in einer Schichtenfolge vorliegt, anhand verschiedener Ausführungsformen näher erläutert. Umfasst hierbei die Vorderfläche des Substrats wenigstens eine photochrome Schicht, liegt die wenigstens eine als Barriereschicht wirkende chemisch modifizierte Schicht in Bezug auf die photochrome Schicht weiter objektseitig in der Schichtenfolge. Umfasst die Rückfläche des Substrats wenigstens eine photochrome Schicht, liegt die wenigstens eine als Barriereschicht wirkende chemisch modifizierte Schicht in Bezug auf die photochrome Schicht weiter augenseitig in der Schichtenfolge. Sowohl die Vorderfläche des Substrats als auch die Rückfläche des Substrats können wenigstens eine photochrome Schicht und wenigstens eine als Barriereschicht wirkende chemisch modifizierte Schicht umfassen. Bevorzugt umfasst nur die Vorderfläche des Substrats wenigstens eine photochrome Schicht und wenigstens eine als Barriereschicht wirkende chemisch modifizierte Schicht.

### IV.1. Beschichtung umfassend wenigstens eine photochrome Schicht und wenigstens eine chemisch modifizierte Schicht gemäß Abschnitt "I. chemisch modifizierte Schicht", welche gleichzeitig als Barriereschicht wirkt

Bei dieser Ausführungsform umfasst das Brillenglas wenigstens eine photochrome Schicht und wenigstens eine chemisch modifizierte Primer-Lackschicht gemäß Abschnitt "I. chemisch modifizierte Schicht", welche gleichzeitig als Barriereschicht wirkt. In Bezug auf die Schichtenfolge der Vorderfläche und der Rückfläche des zu beschichtenden Substrats und die chemische Zusammensetzung der chemisch modifizierten Primer-Lackschicht wird auf die ausführliche Beschreibung in Abschnitt "I. chemisch modifizierte Schicht" verwiesen. Damit die wenigstens eine chemisch modifizierte Primer-Lackschicht gemäß Abschnitt "I. chemisch modifizierte Schicht", gleichzeitig als Barriereschicht wirken kann, wird bei dieser Ausführungsform bevorzugt die mittlere Schichtdicke der chemisch modifizierten Primer-Lackschicht erhöht. Bei dieser Ausführungsform liegt die mittlere Schichtdicke der wenigstens einen chemisch modifizierten Primer-Lackschicht gemäß Abschnitt "I. chemisch modifizierte Schicht" bevorzugt in einem Bereich von 1,0 µm bis 4,0 µm, weiter bevorzugt in einem Bereich von 1,1 µm bis 3 µm, weiter bevorzugt in einem Bereich von 1,2 µm bis 2,7 µm, besonders bevorzugt in einem Bereich von 1,3 µm bis 2,2 µm und ganz besonders bevorzugt in einem Bereich von 1,4 µm bis 1,7 µm. Die mittlere Schichtdicke der chemisch modifizierten Primer-Lackschicht gemäß Abschnitt "I. chemisch modifizierte Schicht" wird wie ebendort offenbart bestimmt. Des Weiteren kann, wie bereits in Abschnitt "I. chemisch modifizierte Schicht" beschrieben, das Brillenglas wenigstens eine Hartlackschicht umfassen. Umfasst das zu beschichtende Substrat, bevorzugt dessen Vorderfläche, wenigstens eine photochrome Schicht, wenigstens eine chemisch modifizierte Primer-Lackschicht gemäß Abschnitt "I. chemisch modifizierte Schicht", bevorzugt mit der vorstehend aufgeführten mittleren Schichtdicke, und wenigstens eine Hartlackschicht, kann auch die wenigstens eine Hartlackschicht zusätzlich zu ihrer eigentlichen Funktion, als Barriereschicht wirken. Die wenigstens eine photochrome Schicht ist in vorstehend genannter Schichtenfolge dem Substrat am nächsten liegend und die wenigstens eine Hartlackschicht am weitesten vom Substrat entfernt angeordnet, wie dies auch bereits in Abschnitt "I. chemisch modifizierte Schicht" beschrieben wurde. Die wenigstens eine Hartlackschicht dient der Erhöhung der Chemikalienbeständigkeit und der Erhöhung der Kratzbeständigkeit des Brillenglases und wirkt insbesondere an den unbeschädigten Stellen zusätzlich als Barrierschicht. Diese Barrierewirkung tritt insbesondere dann ein, wenn die mittlere Schichtdicke der wenigstens einen Hartlackschicht bevorzugt in einem Bereich von 2,0 µm bis 5,1 µm, weiter bevorzugt in einem Bereich von 2,1 µm bis 4,7 µm, weiter bevorzugt in einem Bereich von 2,2 µm bis 4,3 µm, besonders bevorzugt in einem Bereich von 2,3 µm bis 3,7 µm und ganz besonders bevorzugt in einem Bereich von 2,4 µm bis 3,3 µm liegt. Die mittlere Schichtdicke der wenigstens einen Hartlackschicht wird wie in Abschnitt "I. chemisch modifizierte Schicht" offenbart bestimmt. Die wenigstens eine Hartlackschicht weist bevorzugt eine der in Abschnitt "I. chemisch modifizierte Schicht" offenbarten chemischen Zusammensetzungen auf.

### IV.2. Beschichtung umfassend wenigstens eine photochrome Schicht, wenigstens eine chemisch modifizierte Schicht gemäß Abschnitt "I. chemisch modifizierte Schicht", welche gleichzeitig als Barriereschicht wirkt, und wenigstens eine Hartlackschicht

Bei dieser Ausführungsform umfasst das Brillenglas wenigstens eine photochrome Schicht, wenigstens eine chemisch modifizierte Primer-Lackschicht gemäß Abschnitt "I. chemisch modifizierte Schicht", welche gleichzeitige als Barriereschicht wirkt, und wenigstens eine Hartlackschicht. In Bezug auf die chemische Zusammensetzung der wenigstens einen chemisch modifizierten Primer-Lackschicht gemäß Abschnitt "I. chemisch modifizierte Schicht" und die chemische Zusammensetzung der wenigstens einen Hartlackschicht gelten die jeweiligen Beschreibungen in Abschnitt "I. chemisch modifizierte
Schicht" auch für diese Ausfuhrungsform. In Bezug auf die mittlere Schichtdicke der wenigstens einen chemisch modifizierten Primer-Lackschicht und die mittlere Schichtdicke der wenigstens einen Hartlackschicht sowie deren jeweilige Bestimmung gelten die Ausführungen aus Abschnitt "IV.1. Beschichtung umfassend wenigstens eine photochrome Schicht und wenigstens eine chemisch modifizierte Schicht gemäß Abschnitt "I. chemisch modifizierte Schicht", welche gleichzeitig als Barriereschicht wirkt", nachstehend "IV.1. chemisch modifiziert und gleichzeitig Barriere" genannt, entsprechend.
Bei dieser Ausführungsform umfasst bevorzugt wenigstens eine Oberfläche des Substrats, bevorzugt dessen Vorderfläche, bevorzugt wenigstens eine photochrome Schicht, wenigstens eine Hartlackschicht 1, wenigstens eine chemisch modifizierte Primer-Lackschicht und wenigstens eine Hartlackschicht 2. Die wenigstens eine Hartlackschicht 2 dient hierbei bevorzugt der Erhöhung der Kratzbeständigkeit und der Erhöhung der Chemikalienbeständigkeit des Brillenglases. Zusätzlich kann die wenigstens eine Hartlackschicht 2 als Barriereschicht wirken, allerdings nur in denjenigen Bereichen der Hartlackschicht 2, welche intakt, d.h. ohne Beschädigungen, sind. Die wenigstens eine Hartlackschicht 2 kann im Laufe der Zeit kleinere Beschädigungen, wie beispielsweise Mikrokratzer, aufweisen, welche im Alltagsgebrauch der Brille im Laufe der Gesamttragedauer einer Brille von typischerweise zwei bis vier Jahren entstehen können. Im Bereich der kleineren Beschädigungen kann die wenigstens eine Hartlackschicht 2 nicht mehr als Barriereschicht wirken. Die wenigstens eine Hartlackschicht 1 dient hierbei bevorzugt als wenigstens eine Barriereschicht. Die wenigstens eine Hartlackschicht 1 dient weiterhin zusätzlich zur wenigstens einen Hartlackschicht 2 zur Erhöhung der Kratzbeständigkeit und zur Erhöhung der Chemikalienbeständigkeit, insbesondere in denjenigen Bereichen, in welchen die wenigstens eine Hartlackschicht 2 die kleineren Beschädigungen aufweist. Die mittlere Schichtdicke der wenigstens einen Hartlackschicht 1 und die mittlere Schichtdicke der wenigstens einen Hartlackschicht 2 können identisch oder verschieden voneinander sein. Bevorzugt ist die mittlere Schichtdicke der wenigstens einen Hartlackschicht 1 gleich der mittleren Schichtdicke der wenigstens einen Hartlackschicht 2. Sowohl die wenigstens eine Hartlackschicht 1 als auch die wenigstens eine Hartlackschicht 2 weist bevorzugt die in "IV.1. chemisch modifiziert und gleichzeitig Barriere" genannte mittlere Schichtdicke auf. Zur Herstellung der wenigstens einen Hartlackschicht 1 und zur Herstellung der wenigstens einen Hartlackschicht 2 kann die identische oder eine voneinander verschiedene Zusammensetzung eingesetzt werden. Bevorzugt wird zur Herstellung der wenigstens einen Hartlackschicht 1 und zur Herstellung der wenigstens einen Hartlackschicht 2 eine identische Zusammensetzung eingesetzt. Die Hartlackschicht 2 ist in diese Schichtenfolge die am weitesten von der Oberfläche des Substrats entfernt liegende Schicht, bevorzugt auf der Vorderfläche des Substrat in dieser Schichtenfolge die objektseitig äußerste Schicht. Insbesondere bevorzugt umfasst die Vorderfläche des Substrats eine Schichtfolge umfassend genau eine photochrome Schicht, genau eine Hartlackschicht 1, genau eine chemisch modifizierte Primer-Lackschicht und genau eine Hartlackschicht 2. Umfasst das Brillenglas weitere Schichten auf der Vorderfläche und/oder auf der Rückfläche wird auf die entsprechenden Ausführungen in Abschnitt "I. chemisch modifizierte Schicht" bzw. in Abschnitt "II. Beschichtung umfassend wenigstens eine photochrome Schicht, wenigstens eine chemisch modifizierte Schicht und wenigstens eine Barriereschicht auf derselben Oberfläche des Substrats" verwiesen.

Sofern im Rahmen dieser Erfindung wenigstens eine Entspiegelungsschicht, wenigstens eine elektrisch leitfähige oder halbleitende Schicht, wenigstens eine Clean-Coat-Schicht und/oder wenigstens eine Antibeschlagschicht verwendet wird, wird bevorzugt eine der entsprechenden nachstehend näher beschriebenen Schichten eingesetzt.

Das wenigstens eine photochrome Schicht umfassende Brillenglas kann wenigstens eine Entspiegelungsschicht umfassen. Die Entspiegelungsschicht umfasst bevorzugt alternierende diskrete Metalloxid-, Metallhydroxid- und/oder Metalloxidhydratschichten aus oder mit Eisen, Zinn, Nickel, Molybdän, Cer, Kupfer, Aluminium, Silizium, Zirkonium, Titan, Yttrium, Tantal, Neodym, Lanthan, Niob und/oder Praseodym. Bevorzugt umfasst die wenigstens eine Entspiegelungsschicht wenigstens eine Metalloxid-, Metallhydroxid- und/oder Metalloxidhydratschicht aus oder mit Silizium, wobei diese wenigstens eine Siliziumoxid-, Siliziumhydroxid- und/oder Siliziumoxidhydratschicht auf der Vorderfläche bevorzugt die objektseitig bzw. auf der Rückfläche bevorzugt die augenseitig außenliegende Schicht der wenigstens einen Entspieglungsschicht ausbildet. Unter außenliegender Schicht wird in diesem Zusammenhang diejenige Schicht der Entspiegelungsschicht verstanden, welche sich in der Schichtenfolge am weitesten augenseitig bzw. am weitesten objektseitig befindet. Die wenigstens eine Entspiegelungsschicht weist bevorzugt eine Gesamtschichtdicke aus einem Bereich von 97 nm bis 420 nm, bevorzugt aus einem Bereich von 102 nm bis 360 nm, weiter bevorzugt aus einem Bereich von 111 nm bis 310 nm, besonders bevorzugt aus einem Bereich von 122 nm bis 270 nm und ganz besonders bevorzugt aus einem Bereich von 131 nm bis 223 nm auf.
Die wenigstens eine Entspiegelungsschicht kann beispielsweise folgende Schichtenfolge von substratzugewandt zu substratabgewandt aufweisen:
a) Metalloxid, Metallhydroxid und/oder Metalloxidhydratschicht aus oder mit Titan,
b) Metalloxid, Metallhydroxid und/oder Metalloxidhydratschicht aus oder mit Silizium,
c) Metalloxid, Metallhydroxid und/oder Metalloxidhydratschicht aus oder mit Titan,
d) Metalloxid, Metallhydroxid und/oder Metalloxidhydratschicht aus oder mit Silizium,
e) Metalloxid, Metallhydroxid und/oder Metalloxidhydratschicht aus oder mit Titan,
f) Metalloxid, Metallhydroxid und/oder Metalloxidhydratschicht aus oder mit Silizium.
Die wenigstens eine Entspieglungsschicht kann weiterhin die in EP 2 437 084 A1, in den Figuren 3 und 5. jeweils die zwischen der superhydrohoben Schicht und der Hartlackschicht aufgezeigte Schichtenfolge und Schichtdicke aufweisen. Bevorzugt ist im Rahmen dieser Erfindung die dort jeweils an die Hartlackschicht angrenzende Schicht augenseitig und die jeweils an die superhydrophobe Schicht angrenzende Schicht objektseitig auf der Vorderfläche bzw. die dort jeweils an die Hartlackschicht angrenzende Schicht objektseitig und die jeweils an die superhydrophobe Schicht angrenzende Schicht augenseitig in der Schichtenfolge auf der Rückfläche angeordnet. Die Herstellung der wenigstens einen Entspiegelungsschicht erfolgt vorzugsweise mittels PVD-Verfahren.

Die wenigstens eine elektrisch leitfähige oder halbleitende Schicht umfasst bevorzugt eine Schicht aus oder mit Indium-Zinn-Oxid (((In₂O₃)_{0.9} (SnO₂)_{0.1}; ITO), Fluor-Zinn-Oxid (SnO₂:F; FTO), Aluminium-Zink-Oxid (ZnO:Al; AZO) und/oder Antimon-Zinn-Oxid (SnO₂:Sb; ATO). Bevorzugt umfasst die elektrisch leitfähige oder halbleitende Schicht eine Schicht aus oder mit ITO bzw. aus oder mit FTO.

Die wenigstens eine Clean-Coat-Schicht umfasst bevorzugt ein Material mit oleophoben und hydrophoben Eigenschaften, wie beispielsweise in EP 1 392 613 A1 offenbart, auf dem Wasser einen Kontaktwinkel von mehr als 90°, bevorzugt von mehr als 100° und besonders bevorzugt mehr als 110° einnimmt. Die wenigstens eine Clean-Coat-Schicht umfasst besonders bevorzugt eine fluororganische Schicht mit kovalenter Anbindung an das Substrat gemäß DE 198 48 591 A1, Anspruch 1, oder eine Schicht auf Basis von Perfluorpolyethern.

Die wenigstens eine Antibeschlagschicht umfasst bevorzugt ein Silanderivat gemäß EP 2 664 659 A1, besonders bevorzugt gemäß Anspruch 4 der EP 2 664 659 A1. Alternativ kann die wenigstens eine Antibeschlagschicht auch gemäß dem in DE 10 2015 209 794 A1 beschriebenen Verfahren, insbesondere gemäß des in Anspruch 1 der DE 10 2015 209 794 A1 beschriebenen Verfahrens, hergestellt werden.

Wird im Rahmen dieser Erfindung eine Schicht mittels Tauchbeschichtung aufgebracht, versteht es sich für den Fachmann von selbst, dass die Vorderfläche und die Rückfläche die identische Schicht umfassen.

Die Erfindung betrifft weiterhin ein Verfahren zur Herstellung eines Brillenglases umfassend wenigstens ein Substrat und wenigstens eine photochrome Schicht, wobei das Verfahren die folgenden Schritte umfasst:
a. Bereitstellen wenigstens eines zu beschichtenden Substrats,
b. Beschichten wenigstens einer Oberfläche des zu beschichtenden Substrats mit wenigstens einer photochromen Schicht,
c. Belegen des in Schritt b) erhaltenen Brillenglases mit wenigstens einer chemisch modifizierten Schicht und/oder wenigstens einer Barrierschicht, welche verhindert, dass bei wenigstens einer Beschädigung der wenigstens eine photochrome Schicht umfassenden Oberfläche des Brillenglases mit einer Kraft von ≤ 65 mN, weiter bevorzugt mit einer Kraft aus einem Bereich von 0 mN bis 63 mN, weiter bevorzugt mit einer Kraft aus einem Bereich von 9 mN bis 61 mN, besonders bevorzugt mit einer Kraft aus einem Bereich von 13 mN bis 59 mN und ganz besonders bevorzugt mit einer Kraft aus einem Bereich von 17 mN bis 56 mN, nach Kontamination der wenigstens eine photochrome Schicht umfassenden Oberfläche des Brillenglases mit wenigstens einer organischen Säure über einen Zeitraum aus einem Bereich von 12 Stunden bis 84 Stunden, weiter bevorzugt aus einem Bereich von 24 Stunden bis 72 Stunden, besonders bevorzugt aus einem Bereich von 48 Stunden bis 71 Stunden und ganz besonders bevorzugt aus einem Bereich von 60 Stunden bis 70 Stunden, eine Quellung der Beschichtung und/oder des Substrats auftritt.

Die Erfindung betrifft auch die Verwendung wenigstens einer chemisch modifizierten Schicht und/oder wenigstens einer Barriereschicht zur Beschichtung eines Substrats eines Brillenglases umfassend wenigstens ein Substrat und wenigstens eine photochrome Schicht, wobei die wenigstens eine chemisch modifizierte Schicht und/oder die wenigstens eine Barriereschicht verhindert, dass bei wenigstens einer Beschädigung der wenigstens eine photochrome Schicht umfassenden Oberfläche des Brillenglases mit einer Kraft von ≤ 65 mN, weiter bevorzugt mit einer Kraft aus einem Bereich von 0 mN bis 63 mN, weiter bevorzugt mit einer Kraft aus einem Bereich von 9 mN bis 61 mN, besonders bevorzugt mit einer Kraft aus einem Bereich von 13 mN bis 59 mN und ganz besonders bevorzugt mit einer Kraft aus einem Bereich von 17 mN bis 56 mN, nach Kontamination der wenigstens eine photochrome Schicht umfassenden Oberfläche des Brillenglases mit wenigstens einer organischen Säure über einen Zeitraum aus einem Bereich von 12 Stunden bis 84 Stunden, weiter bevorzugt aus einem Bereich von 24 Stunden bis 72 Stunden, besonders bevorzugt aus einem Bereich von 48 Stunden bis 71 Stunden und ganz besonders bevorzugt aus einem Bereich von 60 Stunden bis 70 Stunden, keine Quellung der Beschichtung und/oder des Substrats auftritt.

Was unter "keine Quellung" zu verstehen ist, wurde bereits oben stehend erläutert.

Die Erfindung wird im Folgenden anhand einiger Beispiele, welche nicht beschränkend sein sollen, näher erläutert:

### V. Herstellung der erfindungsgemäßen Brillengläser

Vergleichsbeispiel 1 (Beschichtungszusammensetzung zur Herstellung der Primer-Lackschicht)
Zur Herstellung der Beschichtungszusammensetzung wurden 20 Gewichtsteile Witcobond W240 (wässrige aliphatische Polyesterurethan-Dispersion, Firma Lanxess), 35 Gewichtsteile 2-Propanol, 44,8 Gewichtsteile 1-Methoxy-2-Propanol sowie 0,2 Gewichtsteilen SF-1188A (Copolymer aus Polydimethylsiloxan und Polyoxyalkylenether, INCI: PEG/PPG-20/15 Dimethicone, Firma Momentive) nacheinander unter Rühren bei Raumtemperatur zusammengegeben.

### Beispiel 1 (Beschichtungszusammensetzung zur Herstellung der chemisch modifizierten Primer-Lackschicht)

Zur Herstellung der Beschichtungszusammensetzung wurden 19 Gewichtsteile Witcobond W240 (wässrige aliphatische Polyesterurethan-Dispersion, Firma Lanxess), 35 Gewichtsteile 2-Propanol, 44,6 Gewichtsteile 1-Methoxy-2-Propanol, 0,2 Gewichtsteilen SF-1188A (Copolymer aus Polydimethylsiloxan und Polyoxyalkylenether, INCI: PEG/PPG-20/15 Dimethicone, Firma Momentive) sowie 1,2 Gewichtsteile 2-Methylimidazol nacheinander unter Rühren bei Raumtemperatur zusammengegeben.

### Vergleichsbeispiel 2

Die Beschichtungszusammensetzung aus Vergleichsbeispiel 1 wurde mittels Schleuderbeschichtung auf die Vorderfläche eines auf Polythiourethan basierenden Substrats (MR 8, Finna Mitsui Chemicals Inc.), welches auf der Vorderfläche bereits mit einer photochromen Schicht (PhotoFusion, Firma ZEISS) belegt war, aufgebracht, so dass die resultierende Primer-Lackschicht eine mittlere Schichtdicke von ca. 700 nm aufwies. Nach einer thermischen Vortrockung der Primer-Lackschicht bei 70°C für 10 min wurde anschließend eine Hartlackschicht gemäß EP 2 578 649 B1. Beispiel 2, mittels Schleuderbeschichtung auf der Vorderfläche appliziert, so daß die resultierende Hartlackschicht eine mittlere Schichtdicke von ca. 2500 nm aufwies. Die aufgetragenen Schichten wurden anschließend für 3h bei 110°C ausgehärtet.

### Beispiel 2

Die Beschichtungszusammensetzung aus Beispiel 1 wurde mittels Schleuderbeschichtung auf die Vorderfläche eines auf Polythiourethan basierenden Substrats (MR 8, Firma Mitsui Chemicals Inc.), welches auf der Vorderfläche bereits mit einer photochromen Schicht (PhotoFusion, Firma ZEISS) belegt war, aufgebracht, so dass die resultierende chemisch modifizierte Primer-Lackschicht eine mittlere Schichtdicke von ca. 700 nm aufwies. Nach einer thermischen Vortrockung der chemisch modifizierten Primer-Lackschicht bei 70°C für 10 min wurde anschließend eine Hartlackschicht gemäß EP 2 578 649 B1, Beispiel 2, mittels Schleuderbeschichtung auf der Vorderfläche appliziert, so daß die resultierende Hartlackschicht eine mittlere Schichtdicke von ca. 2500nm aufwies. Die aufgetragenen Schichten wurden anschließend für 3h bei 110°C ausgehärtet.

### Vergleichsbeispiel 3

Die Beschichtungszusammensetzung aus Vergleichsbeispiel 1 wurde mittels Tauchbeschichtung beidseitig auf ein auf Polythiourethan basierendes Substrat (MR 8, Firma Mitsui Chemicals Inc.), welches auf der Vorderfläche mit einer photochromen Schicht (PhotoFusion, Firma ZEISS) belegt war, aufgebracht, so dass die jeweils resultierende Primer-Lackschicht jeweils eine mittlere Schichtdicke von ca. 700 nm aufwies. Nach einer thermischen Vortrockung der Primer-Lackschichten bei 70°C für 10 min wurde eine Hartlackschicht gemäß EP 2 578 649 B1, Beispiel 2, mittels Tauchbeschichtung beidseitig appliziert, so dass die jeweils resultierende Hartlackschicht jeweils eine mittlere Schichtdicke von ca. 2500 nm aufwies. Die aufgetragenen Schichten wurden anschließend für 3h bei 110°C ausgehärtet. Danach wurde das so beschichtete Brillenglas beidseitig mit einer Entspiegelungsschicht und einer Clean-Coat-Schicht gemäß US 9778484 B2, Anspruch 5, beschichtet.

### Beispiel 3

Die Beschichtungszusammensetzung aus EP 2 578 649 B1, Beispiel 2, wurde mittels Schleuderbeschichtung die Vorderfläche eines auf Polythiourethan basierenden Substrats (MR 8, Firma Mitsui Chemicals Inc.), welches auf der Vorderfläche bereits mit einer photochromen Schicht (PhotoFusion, Firma ZEISS) belegt war, aufgebracht, so dass die resultierende Hartlackschicht eine mittlere Schichtdicke von ca. 3500 nm aufwies. Die aufgetragene Hartlackschicht wurde anschließend für 3h bei 110°C ausgehärtet.
Danach wurde die Beschichtungszusammensetzung aus Vergleichsbeispiel 1 mittels Tauchbeschichtung beidseitig auf das erhaltene Brillenglas beschichtet, so dass die jeweils resultierende Primer-Lackschicht jeweils eine mittlere Schichtdicke von ca. 700 nm aufwies. Nach einer thermischen Vortrockung der beiden Primer-Lackschichten bei 70°C für 10min wurde eine Hartlackschicht gemäß EP 2 578 649 B1, Beispiel 2, mittels Tauchbeschichtung beidseitig appliziert, so dass die jeweils resultierende Hartlackschicht jeweils eine mittlere Schichtdicke von ca. 2500 nm aufwies. Die aufgetragenen Schichten wurden anschließend für 3h bei 110°C ausgehärtet. Danach wurde das erhaltene Brillenglas beidseitig mit einer Entspiegelungsschicht und einer Clean-Coat-Schicht gemäß US 9778484 B2, Anspruch 5, beschichtet.

### Beispiel 4

Die Beschichtungszusammensetzung aus Vergleichsbeispiel 1 wurde mittels Tauchbeschichtung beidseitig auf ein auf Polythiourethan basierendes Substrat (MR 8, Firma Mitsui Chemicals Inc.), welches auf der Vorderfläche mit einer photochromen Schicht (PhotoFusion, Firma ZEISS) belegt war, aufgebracht, so dass die jeweils resultierende Primer-Lackschicht eine mittlere Schichtdicke von ca. 700 nm aufwies. Nach einer thermischen Vortrockung der Primer-Lackschicht bei 70°C für 10min wurde eine Hartlackschicht gemäß EP 2 578 649 B1, Beispiel 2 mittels Tauchbeschichtung beidseitig appliziert, so dass die jeweils resultierende Hartlackschicht jeweils eine mittlere Schichtdicke von ca. 2500 nm aufwies. Die aufgetragenen Schichten wurden anschließend für 3h bei 110°C ausgehärtet.
Danach wurde die Beschichtungszusammensetzung aus Vergleichbeispiel 1 mittels Tauchbeschichtung beidseitig auf das erhaltene Brillenglas beschichtet, so dass die jeweils resultierende Primer-Lackschicht jeweils eine mittlere Schichtdicke von ca. 700 nm aufwies. Nach einer thermischen Vortrockung der Primer-Lackschicht bei 70°C für 10 min wurde eine Hartlackschicht gemäß EP 2 578 649 B1, Beispiel 2, mittels Tauchbeschichtung beidseitig appliziert, so dass die jeweils resultierende Hartlackschicht jeweils eine mittlere Schichtdicke von ca. 2500 nm aufwies. Die aufgetragenen Schichten wurden anschließend für 3h bei 110°C ausgehärtet. Danach wurde das Glas beidseitig mit einer Entspiegelungsschicht und einer Clean-Coat-Schicht gemäß US 9778484 B2, Anspruch 5, beschichtet.

### Beispiel 5

Die Beschichtungszusammensetzung aus US 2008/0311404 A1, Beispiel 1, wurde mittels Schleuderbeschichtung auf die Vorderfläche eines auf Polythiourethan basierenden Substrats (MR 8, Firma Mitsui Chemicals Inc.), welches auf der Vorderfläche bereits mit einer photochromen Schicht (PhotoFusion, Firma ZEISS) belegt war, aufgebracht, so dass die resultierende Schicht eine mittlere Schichtdicke von ca. 3800 nm aufwies. Die aufgetragene Schicht wurde anschließend mit UV-Bestrahlung einer D-Lampe der Fa. Fusion Systems mit einer maximalen Intensität von 12Wcm-2 für 30 sec. (entsprechend einer Gesamtdosis von 1.0 Jcm-1 bezogen auf den UVA-Bestrahlungsbereich) ausgehärtet.
Danach wurde die Beschichtungszusammensetzung aus Vergleichsbeispiel 1 mittels Tauchbeschichtung beidseitig auf das so beschichtete Brillenglas beschichtet, so dass die jeweils resultierende Primer-Lackschicht eine mittlere Schichtdicke von ca. 700nm aufwies. Nach einer thermischen Vortrockung der Primer-Lackschicht bei 70°C für 10 min wurde eine Hartlackschicht gemäß EP 2 578 649 B1, Beispiel 2, mittels Tauchbeschichtung beidseitig appliziert, so dass die resultierende Hartlackschicht jeweils eine mittlere Schichtdicke von jeweils ca. 2500 nm aufwies. Die aufgetragenen Schichten wurden anschließend für 3h bei 1 10°C ausgehärtet. Danach wurde das Glas beidseitig mit einer Entspiegelungsschicht und einer Clean-Coat-Schicht gemäß US 9778484 B2, Anspruch 5, beschichtet.

### Beispiel 6

Die Beschichtungszusammensetzung aus Vergleichsbeispiel 1 wurde mittels Tauchbeschichtung beidseitig auf ein auf Polythiourethan basierendes Substrat (MR 8, Firma Mitsui Chemicals Inc.), welches auf der Vorderfläche mit einer photochromen Schicht (PhotoFusion, Firma ZEISS) belegt war, aufgebracht, so dass die jeweils resultierende Primer-Lackschicht jeweils eine mittlere Schichtdicke von ca. 700 nm aufwies. Nach einer thermischen Vortrockung der Primer-Lackschicht bei 70°C für 10 min wurde eine Hartlackschicht gemäß EP 2 578 649 B1, Beispiel 2, mittels Tauchbeschichtung beidseitig appliziert, so dass die jeweils resultierende Hartlackschicht jeweils eine mittlere Schichtdicke von ca. 2500 nm aufwies. Die aufgetragenen Schichten wurden anschließend für 3h bei 110°C ausgehärtet. Danach wurden auf die auf der Vorderfläche vorhandene Hartlackschicht 300µL des Klebemittels gemäß Beispiel 4 der WO 2015/121341 A1 aufgebracht. Ein mittels einer Keramikform umgeformtes Dünnstglas (Dünnstglas vor Umformung: D 263® T eco, Firma Schott AG) wurde auf diese Vorderfläche aufgedrückt, so dass sich das Klebemittel gleichmäßig zwischen der Rückfläche des Dünnstglases und der auf der Vorderfläche befindlichen Hartlackschicht verteilte. Die Klebeschicht im so erhaltenen Brillenglas wurde bei 70°C für 3,5 Stunden ausgehärtet. Danach wurde das so erhaltene Brillenglas beidseitig mit einer Entspiegelungsschicht und einer Clean-Coat-Schicht gemäß US 9778484 B2, Anspruch 5, beschichtet.

### Vergleichspeispiel 4

Brillenglas Rodenstock Perfalit Colormatic Solitare Protect Plus 2 (Firma Rodenstock GmbH).

### Vergleichspeispiel 5

Brillenglas Hoya 1.6 Sensity Hi-Vision LongLife (Firma Hoya).

### VI. Charakterisierung der erfindungsgemäßen Brillengläser und der Brillengläser der Vergleichsbeispiele

### VI.1. Charakterisierung der Brillengläser nach Reinigung mit einem Baumwolltuch

Das Brillenglas aus Vergleichsbeispiel 2 sowie aus das Brillenglas aus Beispiel 2 wurde jeweils mit einem Baumwolltuch ausgerieben, um die beim üblichen Brillenglasreinigen verursachten Mikrokratzer zu simulieren. Danach wurden die Brillengläser zur Hälfte in eine 85%-ige wässrige Milchsäurelösung für 120h bei Raumtemperatur eingelegt, so dass die beschichtete Oberfläche komplett mit der Milchsäurelösung belegt war. Nach der Milchsäurebehandlung wurden die Brillengläser mit Wasser gereinigt, getrocknet und anschließend zunächst visuell über eine Schattenprojektion mit einem Gerät der Type BTG QC-X75-CE LENS INSPECTION UNIT der Fa. Bulbtronics Inc. Beurteilt. Die entsprechenden Beurteilungsergebnisse sind in nachstehender Tabelle 2 zusammengefasst.

Zudem wurden die Brillengläser auf der Vorderfläche mittels Weißlichtinterferometrie mit dem Gerät NewView 7100 (Firma Zygo Corporation) auf Quell-Effekte untersucht. Die entsprechenden Ergebnisse sind ebenfalls in Tabelle 2 zusammengefasst.

**Tabelle 2**

| Brillenglas aus | Schattenprojektion | Analyse mittels Weißlichtinterferometrie |
|---|---|---|
| Vergleichsbeispiel 2 | Helle, punktartige Defekte; Visuell sichtbare Eintauchkante | 500 nm Quellung in z-Richtung an Eintauchkante auf der Vorderfläche des Brillenglases |
| Beispiel 2 | Keine hellen, punktartigen Defekte; Keine visuell sichtbare Eintauchkante | Keine detektierbare Quellung in z-Richtung auf der Vorderfläche des Brillenglases |

### VI.2. Charakterisierung der Brillengläser nach Anritzen der Oberfläche mit einem Ritzwerkzeug

Die Beschädigung des Brillenglases aus den Beispielen und Vergleichsbeispielen wurde auf der wenigstens eine photochrome Schicht umfassenden Oberfläche des Substrats mit einem Diamantritzwerkzeug mit einer konischer Spitze mit einem Radius von 2 µm ± 0,2 µm und einem Konus von 90° ± 1,5° hervorgerufen, welches längs einer ersten Richtung Material abtragend, d.h. Beschichtung und/oder Substrat abtragend geführt wurde. Auf diese Weise wurden mehrere Beschädigungen des Brillenglases mit steigender Kraft aus einem Bereich von bevorzugt 4 mN bis 100 mN in Form einer Matrix auf der Oberfläche des Brillenglases hervorgerufen. Zur Beschädigung des Brillenglases wurde das Ultra-Nanohärtemessgerät UNHT³ der Fa. Anton-Paar GmbH eingesetzt. Jede einzelne linienförmige Beschädigung hatte dabei eine Länge von 500µm, die gesamte Matrix erstreckt sich über eine Fläche von 2,5mm x 2,5mm auf der Brillenglasoberfläche.
Das so behandelte Brillenglas wurde dann für 70h in Ölsäure eingelegt und im Anschluss daran mit Wasser und einem Baumwolltuch gereinigt. Die resultierende Topographie der Matrix wurde mittels Weißlichtinterferometrie mit dem Gerät NewView 7100 (Firma Zygo Corporation) analysiert und die minimale Kraft dokumentiert, bei der eine Quellung in z-Richtung auftritt. Die Ergebnisse sind in Tabelle 3 zusammengefasst.

**Tabelle 3**

| Brillenglas aus | Angewandte Kraft [mN] bis zum Auftreten von Quellung in z-Richtung |
|---|---|
| Vergleichsbeispiel 3 | ≥ 8 |
| Beispiel 3 | ≥ 30 |
| Beispiel 4 | ≥ 30 |
| Beispiel 5 | ≥ 30 |
| Beispiel 6 | ≥ 100 |
| Vergleichsbeispiel 4 | ≥ 8 |
| Vergleichsbeispiel 5 | ≥ 10 |

Die Brillengläser der Beispiele 3 bis 6 zeigten nach vorstehend beschriebener Beschädigung im Vergleich zu den Brillengläsern der Vergleichsbeispiele 3, 4 und 5 erst bei deutlich höherer Kraftaufwendung eine Quellung.

## Patentansprüche

1. Brillenglas umfassend wenigstens ein Substrat und wenigstens eine photochrome Schicht, **dadurch gekennzeichnet, dass** das Brillenglas bei wenigstens einer Beschädigung der wenigstens eine photochrome Schicht umfassenden Oberfläche des Brillenglases mit einer Kraft von ≤ 65 mN nach Kontamination der wenigstens eine photochrome Schicht umfassenden Oberfläche des Brillenglases mit wenigstens einer organischen Säure über einen Zeitraum aus einem Bereich von 12 Stunden bis 84 Stunden keine Quellung der Beschichtung und/oder des Substrats aufweist.

2. Brillenglas nach Anspruch 1, **dadurch gekennzeichnet, dass** die wenigstens eine Beschädigung durch ein Ritzwerkzeug hervorgerufen wird.

3. Brillenglas nach einem der vorstehenden Ansprüche, **dadurch gekennzeichnet, dass** die organische Säure eine flüssige organische aliphatische gesättigte oder ungesättigte, optional substituierte, Monocarbonsäure ist.

4. Brillenglas nach einem der vorstehenden Ansprüche, **dadurch gekennzeichnet, dass** bei keiner Quellung mit Hilfe eines auf der Weißlichtinterferometrie basierenden optischen Profilometers keine Strukturen von ≥ 500 nm in z-Richtung auf der wenigstens eine photochrome Schicht umfassenden Oberfläche des Brillenglases zu erkennen sind.

5. Brillenglas nach einem der vorstehenden Ansprüche, **dadurch gekennzeichnet, dass** wenigstens eine Oberfläche des Substrats die wenigstens eine photochrome Schicht, wenigstens eine chemisch modifizierte Schicht und/oder wenigstens eine Barriereschicht umfasst.

6. Brillenglas nach einem der vorstehenden Ansprüche, **dadurch gekennzeichnet, dass** die wenigstens eine chemisch modifizierte Schicht wenigstens eine Base ausgewählt aus der Gruppe bestehend aus wenigstens einer heterocyclischen Stickstoffverbindung, wenigstens einem primären Amin, wenigstens einem sekundären Amin, wenigstens einem tertiären Amin und wenigstens einem Metallhydroxid umfasst.

7. Brillenglas nach einem der vorstehenden Ansprüche, **dadurch gekennzeichnet, dass** die wenigstens eine chemisch modifizierte Schicht wenigstens eine Base in einem Anteil aus einem Bereich von 0,01 Gew.-% bis 11,8 Gew.-%, bezogen auf das Gesamtgewicht der Beschichtungszusammensetzung, umfasst.

8. Brillenglas nach einem der vorstehenden Ansprüche, **dadurch gekennzeichnet, dass** zur Herstellung der wenigstens einen chemisch modifizierten Primer-Lackschicht eine Beschichtungszusammensetzung umfassend
i) wenigstens eine wässrige aliphatische, cycloaliphatische, aromatische oder heteroaromatische Polyurethandispersion, wenigstens eine wässrige aliphatische, cycloaliphatische, aromatische oder heteroaromatische Polyharnstoffdispersion, wenigstens eine wässrige aliphatische, cycloaliphatische, aromatische oder heteroaromatische Polyurethan-Polyharnstoffdispersion und/oder wenigstens eine wässrige aliphatische, cycloaliphatische, aromatische oder heteroaromatische Polyesterdispersion,
ii) wenigstens ein Lösungsmittel,
iii) wenigstens eine Base sowie
iv) optional wenigstens ein Additiv
eingesetzt wird.

9. Brillenglas nach einem der vorstehenden Ansprüche, **dadurch gekennzeichnet, dass** wenigstens eine Oberfläche des Substrats wenigstens eine photochrome Schicht, wenigstens eine chemisch modifizierte Primer-Lackschicht und wenigstens eine Hartlackschicht auf derselben Oberfläche umfasst.

10. Brillenglas nach einem der vorstehenden Ansprüche, **dadurch gekennzeichnet, dass** die wenigstens eine Barriereschicht wenigstens eine Hartlackschicht, wenigstens ein Dünnstglas und/oder wenigstens eine Acrylat-Epoxidschicht umfasst.

11. Brillenglas nach einem der vorstehenden Ansprüche, **dadurch gekennzeichnet, dass** wenigstens eine Oberfläche des Substrats
a. wenigstens eine photochrome Schicht, wenigstens eine Hartlackschicht 1, wenigstens eine chemisch modifizierte Primer-Lackschicht und wenigstens eine Hartlackschicht 2; oder
b. wenigstens eine photochrome Schicht, wenigstens eine chemisch modifizierte Primer-Lackschicht, wenigstens eine Hartlackschicht 1, wenigstens eine Primer-Lackschicht und wenigstens eine Hartlackschicht 2; oder
c. wenigstens eine photochrome Schicht, wenigstens eine chemisch modifizierte Primer-Lackschicht 1, wenigstens eine Hartlackschicht 1, wenigstens eine chemisch modifizierte Primer-Lackschicht 2 und wenigstens eine Hartlackschicht 2; oder
d. wenigstens eine photochrome Schicht, wenigstens eine chemisch modifizierte Primer-Lackschicht 1, wenigstens eine Hartlackschicht 1, wenigstens eine chemisch modifizierte Primer-Lackschicht 2 und wenigstens eine Hartlackschicht 2
umfasst.

12. Brillenglas nach einem der vorstehenden Ansprüche, **dadurch gekennzeichnet, dass** Herstellung der wenigstens einen Barriereschicht umfassend wenigstens eine Acrylat-Epoxidschicht eine Beschichtungszusammensetzung umfassend
a) wenigstens ein Acrylat und/oder wenigstens ein Methacrylat,
b) wenigstens eine Epoxidverbindung,
c) wenigstens ein kolloidales anorganisches Oxid, Hydroxid, Oxidhydrat, Fluorid und/oder Oxyfluorid, welches optional oberflächenmodifiziert ist,
d) wenigstens ein Lösungsmittel,
e) wenigstens ein Photoinitiator und
f) optional wenigstens ein Additiv
eingesetzt wird, wobei der Gesamtanteil an wenigstens einem Acrylat und/oder wenigstens einem Methacrylat in der Beschichtungszusammensetzung in einem Bereich von 4,0 Gew.-% bis 25 Gew.-%, bezogen auf das Gesamtgewicht der Beschichtungszusammensetzung liegt.

13. Brillenglas nach einem der vorstehenden Ansprüche, **dadurch gekennzeichnet, dass** das Brillenglas wenigstens eine Entspiegelungsschicht, wenigstens eine elektrisch leitfähige oder halbleitende Schicht, wenigstens eine Antibeschlagschicht und/oder wenigstens Clean-Coat-Schicht umfasst.

14. Verfahren zur Herstellung eines Brillenglases umfassend wenigstens ein Substrat und wenigstens eine photochrome Schicht, **dadurch gekennzeichnet, dass** das Verfahren die folgenden Schritte umfasst:
a. Bereitstellen wenigstens eines zu beschichtenden Substrats,
b. Beschichten wenigstens einer Oberfläche des zu beschichtenden Substrats mit wenigstens einer photochromen Schicht,
c. Belegen des in Schritt b) erhaltenen Brillenglases mit wenigstens einer chemisch modifizierten Schicht und/oder wenigstens einer Barrierschicht, welche verhindert, dass bei wenigstens einer Beschädigung der wenigstens eine photochrome Schicht umfassenden Oberfläche des Brillenglases mit einer Kraft von ≤ 65 mN nach Kontamination der wenigstens eine photochrome Schicht umfassenden Oberfläche des Brillenglases mit wenigstens einer organischen Säure über einen Zeitraum aus einem Bereich von 12 Stunden bis 84 Stunden eine Quellung der Beschichtung und/oder des Substrats auftritt.

15. Verwendung wenigstens einer chemisch modifizierten Schicht und/oder wenigstens einer Barriereschicht zur Beschichtung eines Substrats eines Brillenglases umfassend wenigstens ein Substrat und wenigstens eine photochrome Schicht, **dadurch gekennzeichnet, dass** die wenigstens eine chemisch modifizierte Schicht und/oder die wenigstens eine Barriereschicht verhindert, dass bei wenigstens einer Beschädigung der wenigstens eine photochrome Schicht umfassenden Oberfläche des Brillenglases mit einer Kraft von ≤ 65 mN nach Kontamination der wenigstens eine photochrome Schicht umfassenden Oberfläche des Brillenglases mit wenigstens einer organischen Säure über einen Zeitraum aus einem Bereich von 12 Stunden bis 84 Stunden keine Quellung der Beschichtung und/oder des Substrats auftritt.
